# EUROPEAN PATENT APPLICATION

(11) **EP 4 742 030 A1**
(43) Date of publication of application: **13.05.2026**
(21) Application number: 25213939.9
(22) Date of filing: 06.11.2025
(51) Int. Cl.: G06F 8/41

(54) **CONCURRENT PERFORMANCE OF SOFTWARE PROGRAMS**

(30) Priority: 12.11.2024 US 202418945440
(71) Applicant: Nvidia Corporation, Santa Clara, CA 95051 (US)
(72) Inventor: SINHA, Soham, Santa Clara, 95051 (US); CHOUDHURY, Rahul, Santa Clara, 95051 (US); AZIZIAN, Mahdi, Santa Clara, 95051 (US)
(74) Representative: Mathys & Squire

(57) **Abstract**

Apparatuses, systems, and techniques to perform substantiation of task pipelines for sequential tasks performed by simultaneous, sequential kernels. In at least one emodiment, processors comprising one or more circuits to cause a compiler to indicate one or more portions of one or more software programs to be performed by one or more processors concurrently.

## Description

### TECHNICAL FIELD

At least one embodiment pertains to generation of two or more GPU kernels to perform sequential program tasks in sequence without external controller interference. At least one embodiment pertains to construction of a 'pipeline' construct that allows input data to be computed by two or more sequential kernels without export from the pipeline. At least one embodiment pertains to cause a compiler to indicate one or more portions of one or more software programs to be performed by one or more processors concurrently.

### BACKGROUND

Computation of asynchronous (e.g., not able to be performed simultaneously) kernels within a GPU requires substantiation of a kernel, processing, export of output data, instantiation of a second kernel, and import of input data. When performing such a task many times in repetition, delay of kernels due to startup and shutdown procedures causes latency. Asynchronous kernel performance methods can be improved.

### SUMMARY

The invention is defined by the claims. In order to illustrate the invention, aspects and embodiments which may or may not fall within the scope of the claims are described herein.

Apparatuses, systems, and techniques to perform substantiation of task pipelines for sequential tasks performed by simultaneous, sequential kernels. In at least one emodiment, processors comprising one or more circuits to cause a compiler to indicate one or more portions of one or more software programs to be performed by one or more processors concurrently.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

FIG. 1 illustrates an example architecture for a GPU kernel pipeline, in accordance with at least one embodiment;
FIG. 2 illustrates an example substantiation of a task pipeline, in accordance with at least one embodiment;
FIG. 3 illustrates an example conversion of source code into a task pipeline, in accordance with at least one embodiment;
FIG. 4 illustrates an example pair of pipeline kernels providing data between each other through lock free buffer memory, in accordance with at least one embodiment;
FIG. 5 illustrates an example pair of pipeline kernels providing data between each other through memory buffers with a synchronous completion notification, in accordance with at least one embodiment;
FIG. 6 illustrates an example process for substantiation and operation of a kernel pipeline, in accordance with at least one embodiment;
FIG. 7 illustrates an example perform pipeline operation to perform substantiation of a kernel pipeline, in accordance with at least one embodiment;
FIG. 8 illustrates an example data center system, in accordance with at least one embodiment;
FIG. 9 illustrates an system-on-a-chip (SOC), in accordance with at least one embodiment;
FIG. 10A illustrates a parallel processor, in accordance with at least one embodiment;
FIG. 10B illustrates a processing cluster, in accordance with at least one embodiment;
FIG. 10C illustrates a graphics multiprocessor, in accordance with at least one embodiment;
FIG. 11 illustrates an accelerator processor, in accordance with at least one embodiment;
FIG. 12A illustrates a central processing unit, in accordance with at least one embodiment;
FIG. 12B illustrates a core of the central processing unit in FIG. 12A, in accordance with at least one embodiment;
FIG. 13 illustrates another accelerator processor, in accordance with at least one embodiment;
FIG. 14 illustrates a neuromorphic processor, in accordance with at least one embodiment;
FIG. 15 illustrates a supercomputer, in accordance with at least one embodiment;
FIG. 16 illustrates another accelerator processor, in accordance with at least one embodiment;
FIG. 17 illustrates another processor, in accordance with at least one embodiment;
FIG. 18 illustrates another accelerator processor, in accordance with at least one embodiment;
FIG. 19 illustrates a tensor processing unit, in accordance with at least one embodiment;
FIG. 20 illustrates a RISC-V-compatible processor, in accordance with at least one embodiment;
FIGS. 21A and 21B illustrate a language processing unit, in accordance with at least one embodiment;
FIG. 22 illustrates a software stack of a programming platform, in accordance with at least one embodiment;
FIG. 23 illustrates software that is supported by a programming platform, in accordance with at least one embodiment;
FIG. 24 illustrates compiling code to execute on programming platforms of FIG. 18, in accordance with at least one embodiment;
FIG. 25 illustrates an example of an autonomous vehicle and its system architecture, in accordance with at least one embodiment;
FIG. 26A illustrates inference and/or training logic, in accordance with at least one embodiment;
FIG. 26B illustrates inference and/or training logic, in accordance with at least one embodiment; and
FIG. 26C illustrates training and deployment of a neural network, in accordance with at least one embodiment.

### DETAILED DESCRIPTION

In at least one embodiment, systems and methods implemented in accordance with this disclosure are utilized to cause a compiler to indicate one or more portions of one or more software programs to be performed by one or more processors concurrently.

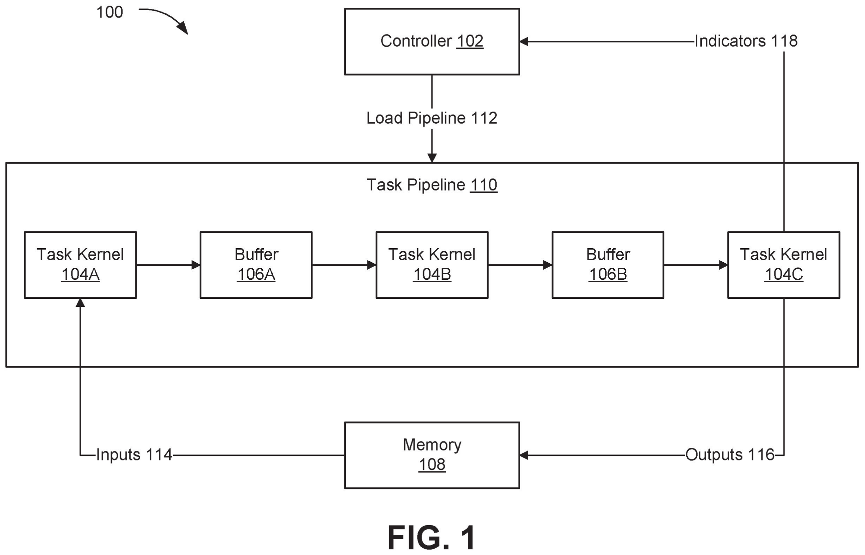

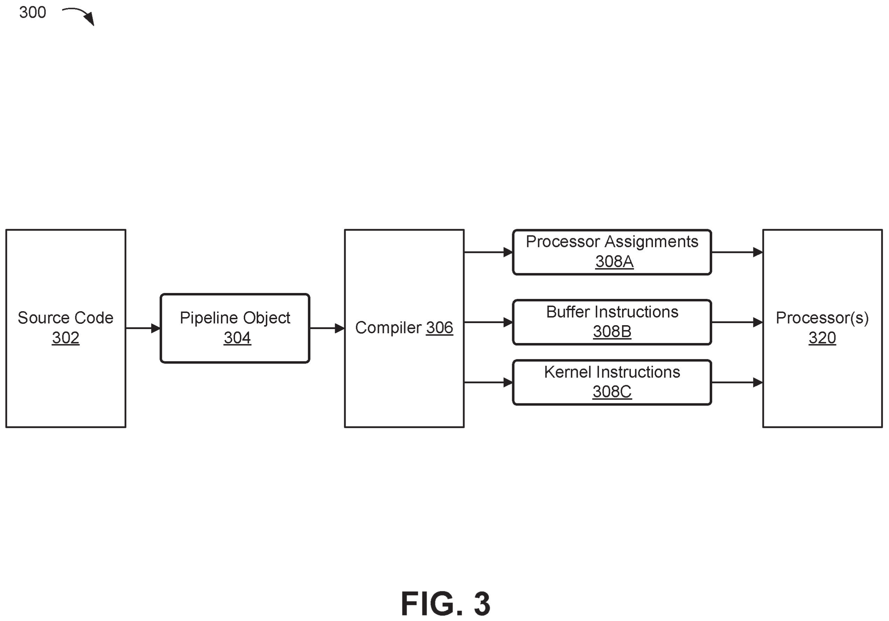

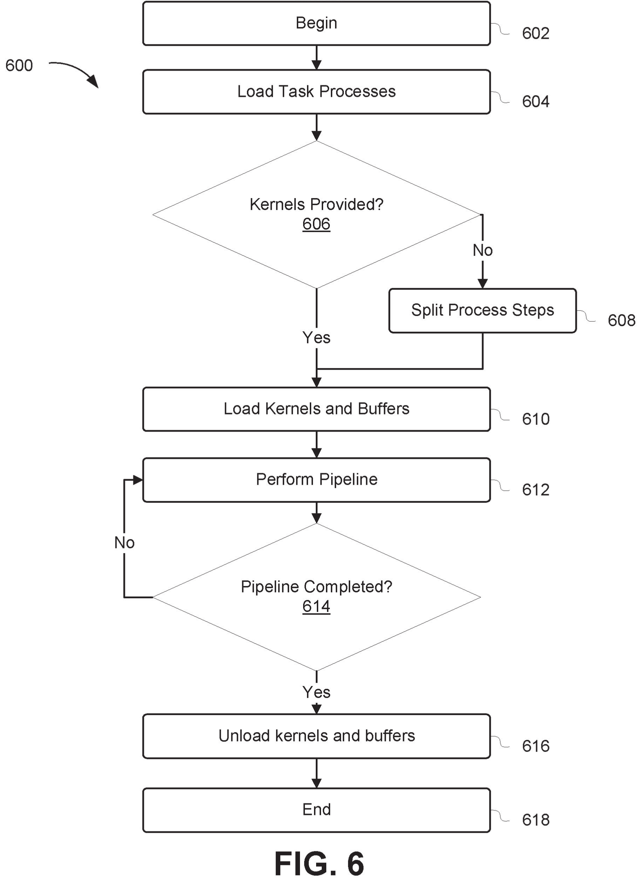

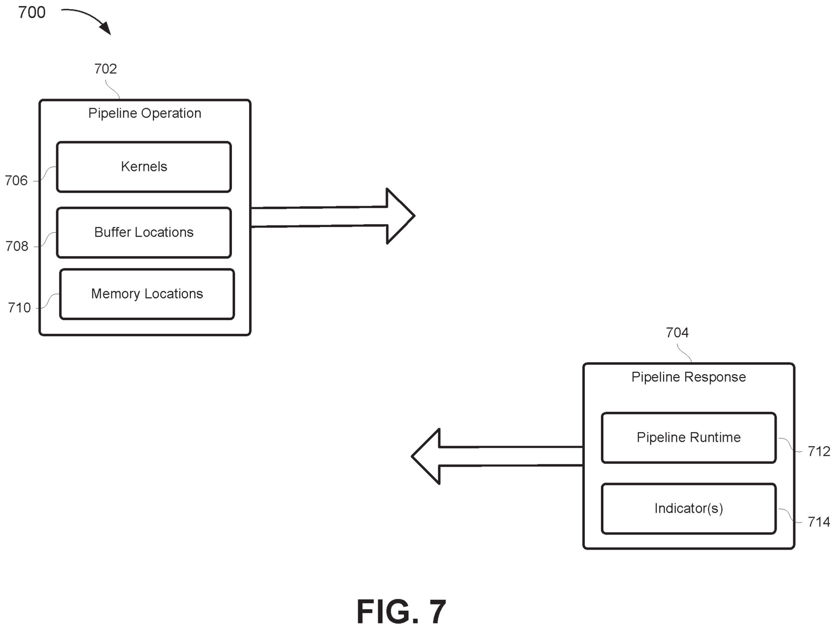

In at least one embodiment, when multiple asynchronous, sequential tasks are to be performed by kernels on a processor repeatedly (for example, a repeated cycle of image enhancement processes performing one after another on many frames of a video, with a specified order for said processes), a pipeline may be created to allow these kernels to operate fully under control of a processor, negating need for an external controller during performance. In at least one embodiment, source code (e.g., source code 302, FIG. 3) is provided, containing one or more pipeline object indicators (e.g., pipeline object 304) indicating parameters required for creation of a task pipeline (e.g., task pipeline 110, FIG. 1), including individual declared tasks (e.g., portions of source code and/or input software programs) required for a total pipeline process and/or indicators of such tasks, kernel requirements for said tasks (e.g., processor requirements, memory requirements, and/or other parameters required), input memory size for each task, memory output size for each task, and/or any other necessary parameters. In at least one embodiment, a compiler (e.g., compiler 306, FIG. 6) then parses input parameters, generating instructions for each kernel, each memory buffer between each kernel, and any other runtime requirements for operation of a pipeline as part of an associated executable generated from source code. In at least one embodiment, said pipeline can then be performed by a processor (e.g., processors 220, 320, and/or 702, FIGS. 3 and/or 7), performing designated tasks perpetually (e.g., wherein said tasks are performed concurrently) until a shut down command is issued by a controller, halting processing and shutting down all kernels. In at least one embodiment, said kernels do not need to self instruct to repeat indefinitely. In at least one embodiment, a compiler modifies task parameters to ensure infinite repetition of assigned tasks by their respective kernels. In at least one embodiment, aside from substantiation and shutdown, a controller (e.g., controller 102, FIG. 1) does not interfere with performance of kernels and/or buffers within a performing pipeline except to perform shutdown. In at least one embodiment, inputs are provided via API (e.g., inputs 114 and/or outputs 116, FIG. 1) and outputs are provided via API. In at least one embodiment, indicators (e.g., indicators 118, FIG. 1) are used to provide a controller with indications of operational metrics for a performing pipeline. In at least one embodiment, memory buffers within local memory (e.g., GPU VRAM and/or other designations of local memory) are used to provide outputs of an earlier kernel in a pipeline to a next kernel in a pipeline. In at least one embodiment, when a pipeline is brought offline, resources are released from exclusive use, but until such a time, a pipeline maintains exclusive control of its resources, performing perpetually. In at least one embodiment, components of a pipeline, and/or an entire pipeline, may become dormant temporarily if new inputs are not provided. In at least one embodiment, in such a case, said components come back online to check for new input regularly until said pipeline is entirely shut down.

In at least one embodiment, such a pipeline, as described in previous description, proposes an idea of a fully programmable processor-native custom pipeline, wherein differing parts of a processor could execute different tasks in a pipeline, but as a whole, said pipeline acts low-latency and high-throughput. In at least one embodiment, no other previous processor programming model or library has aimed to achieve a pipeline of said nature. In at least one embodiment, such pipelines take advantage of data parallelism within a single task, and task parallelism across an entire pipeline by running differing tasks in non-overlapping sub-processor assignments, working on assigned exclusive inputs and/or outputs. In at least one embodiment, as such a pipeline effectively runs on a processor uninterrupted by operating system level tasks, interrupts and controller-related interruptions, said pipelines represent a large scale, highly parallel and real time application. In at least one embodiment, such a pipeline of this scale, customization, and timing accuracy has never been previously possible. In at least one embodiment, such a pipeline offers specialized solutions for real-time data streaming data processing applications demanding exceptionally low latency and high throughput, including hard real-time constraints. In at least one embodiment, said pipelines enhance processor optimization and/or utilization by strategically distributing pipeline workload across a processor, excluding controller commands from said pipeline itself, separating it from potentially related bottlenecks.

In preceding and following descriptions, various techniques are described. For purposes of explanation, specific configurations and details are set forth in order to provide a thorough understanding of possible ways of implementing techniques. However, it will also be apparent that techniques described below may be practiced in different configurations without specific details. Furthermore, well-known features may be omitted or simplified to avoid obscuring techniques being described.

In at least one embodiment, as used in any implementation described herein, unless otherwise clear from context or stated explicitly to contrary, terms such as "module" and nominalized verbs each refers to any combination of software logic, firmware logic, hardware logic, and/or circuitry configured to provide functionality described herein. In at least one embodiment, software may be embodied as a software package, code and/or instruction set or instructions, and "hardware", as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. In at least one embodiment, modules may, collectively or individually, be embodied as circuitry that forms part of a larger system, for example, an integrated circuit (IC), system on-chip (SoC), and so forth.

In at least one embodiment, a system, such as system 100, system 200, system 300, system 400, system 500, and/or system 600, includes a collection of one or more hardware and/or software computing resources with instructions that, when executed, performs one or more communication processes such as those described herein. In at least one embodiment, system 100, system 200, system 300, system 400, system 500, and/or system 600 comprises one or more software programs executable on computer hardware, one or more applications executable on computer hardware, and/or variations thereof. In at least one embodiment, one or more processes of system 100, system 200, system 300, system 400, system 500, and/or system 600 are performed by any suitable processing system or unit (e.g., graphics processing unit (GPU), general-purpose GPU (GPGPU), parallel processing unit (PPU), central processing unit (CPU)), a data processing unit (DPU), such as described below, and in any suitable manner, including sequential, parallel, and/or variations thereof. In at least one embodiment, system 100, system 200, system 300, system 400, system 500, and/or system 600 use a machine learning training framework such as PYTORCH, TENSORFLOW, BOOST, CAFFE, MICROSOFT COGNITIVE TOOLKIT/CNTK, MXNET, CHAINER, KERAS, DEEPLEARNING4J, and/or other training framework to implement and perform operations described herein to cause a compiler to indicate one or more portions of one or more software programs to be performed by one or more processors concurrently. In at least one embodiment, as an example, training a neural network model comprises use of a server (e.g., NVIDIA DGX servers) which further includes at least a GPU (e.g., AMD MI200, VEGAL10, VEGO20, AND ARCTURUS), an optimizer (e.g., ADAM OPTIMIZER), or discriminator architecture (e.g., discriminator architecture from face-vid2vid for training with GAN loss).

FIG. 1 illustrates an example 100 system architecture for a GPU kernel pipeline, in accordance with at least one embodiment. In at least one embodiment, example 100 comprises one or more controller 102, memory 108, task pipeline 110, load pipeline 112, inputs 114, outputs 116, and/or indicators 118. In at least one embodiment, task pipeline 110 comprises one or more task kernel 104A-C (e.g., task kernels 104), and/or one or more buffer 106A and/or B (e.g., buffers 106). In at least one embodiment, example 100 performs part or all of a kernel pipeline process (e.g., process 600, FIG. 6).

In at least one embodiment, a processor uses controller 102 to indicate information, such as information indicating one or more processors (e.g., CPUs, GPUs, GPGPUs, and/or any other designation of processing hardware) performing one or more control software programs (e.g., GPU drivers and/or other designations of control software) and/or said control software itself controlling one or more processors to initiate and/or control one or more task pipeline 110. In at least one embodiment, controller 102 performs substantiation of task kernels 104, buffers 106, and/or any other required constructs and/or designations for performance of task pipeline 110. In at least one embodiment, controller 102 is a separate processor from a processor performing task pipeline 110. In at least one embodiment, controller 102 is software performed separate from task pipeline 110. In at least one embodiment, controller 102 receives indicators 118 as input. In at least one embodiment, controller 102 may unsubstantiate task pipeline 110, performing shutdown procedures as a response to indicators 118 and/or any other input. In at least one embodiment, once substantiated, controller 102 does not directly control nor directly provide input to task pipeline 110 unless performing shutdown operations.

In at least one embodiment, a processor uses system memory to indicate information, such as information indicating one or more memory allocations external to a performing processors internal memory (e.g., GPU VRAM and/or other internal memory designations). In at least one embodiment, system memory provides input data to a first task kernels 104 via inputs 114. In at least one embodiment, memory 108 receives output data from a last task kernels 104. In at least one embodiment, memory 108 performs one or more application programming interfaces (e.g., APIs) to provide and/or receive data from one or more task pipeline 110.

In at least one embodiment, a processor uses task pipeline 110 to indicate information, such as information indicating one or more series of asynchronous performing kernels performing perpetually until directly shut down by controller 102, each separated by a memory buffer to allow direct provision of data without external input. In at least one embodiment, task pipeline performs a series of two or more tasks on input data. In at least one embodiment, task pipeline is substantiated as processor kernels by a controller 102. In at least one embodiment, task pipeline 110 is provided inputs by, and provides outputs to, memory 108. In at least one embodiment, task pipeline 110 may provide indicators 118 to controller 102 as output. In at least one embodiment, task pipeline 110 may, in absence of new inputs, shut down for regular intervals, maintaining solidarity of kernel control but not using power. In at least one embodiment, in such a state, task pipeline 110 may regularly return to operation to check for new input.

In at least one embodiment, a processor uses task kernel 104A-C (e.g., task kernels 104) to indicate information, such as information indicating one or more processors (e.g., streaming multiprocessors (SMs), threads, and/or any other descriptor of processing hardware) performing a kernel to complete a computation task. In at least one embodiment, task kernels 104 are substantiated as part of task pipeline 110 to perform a computation process. In at least one embodiment, each successive task kernels 104, in order, perform tasks on data provided by a prior task kernels 104. In at least one embodiment, task kernels receive input via buffers 106. In at least one embodiment, a first task kernels 104 receives inputs from memory 108. In at least one embodiment, a last task kernels 104 provides final computation outputs to memory 108. In at least one embodiment, task kernels 104 may become dormant if new data is not provided. In at least one embodiment, in such a case, task kernels 104 reactivate regularly to check for new input data. In at least one embodiment, task kernels 104 remain substantiated until explicitly shut down by a controller 102.

In at least one embodiment, a processor uses buffer 106A and/or B (e.g., buffers 106) to indicate information, such as information indicating one or more sections of internal processor memory (e.g., GPU VRAM and/or any other designation of internal processor memory) used as buffers between two task kernels 104. In at least one embodiment, buffers 106 are substantiated alongside task kernels 104 within task pipeline 110 by controller 102. In at least one embodiment, buffers 106 are fully asynchronous (e.g., four-slot lock free buffers, wherein some data may be lost if written faster than read) or synchronous (e.g., a ring buffer wherein data cannot be written while being read, nor read while being written). In at least one embodiment, buffers 106 are of variable size based on indications provided by controller 102.

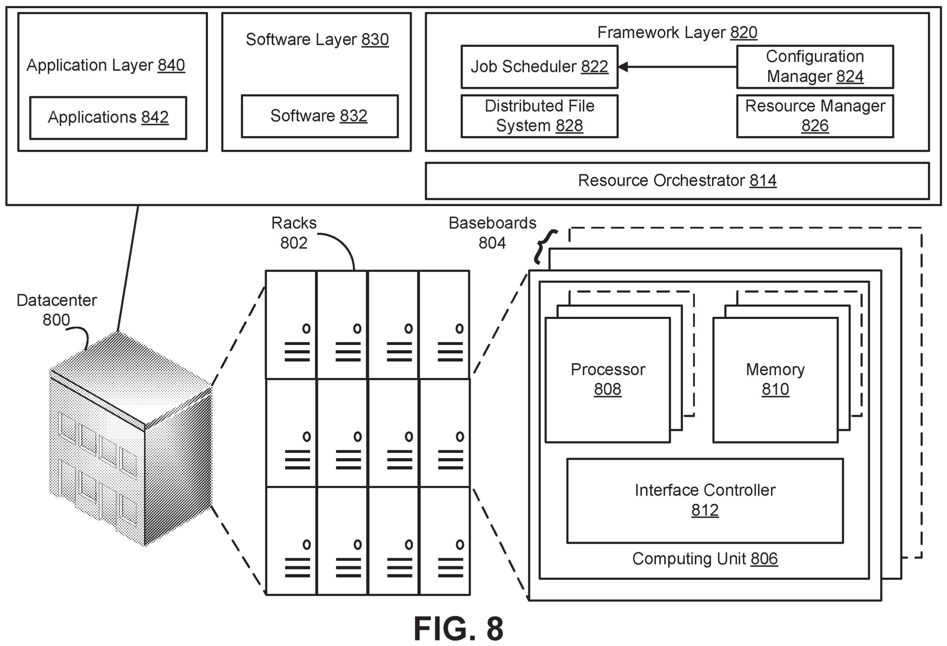

In at least one embodiment, a processor uses load pipeline 112 to indicate information, such as one or more indications to initiate a task pipeline 110. In at least one embodiment, load pipeline 112 includes one or more indications to initiate pipeline 112, one or more indications of tasks to be performed by task kernels 104 and parameters of said tasks (e.g., SM requirements, input memory requirements, output memory requirements, and/or any other requirements for substantiation of a task kernels 104), one or more indications of buffer characteristics between said tasks (e.g., memory capacity, synchroneity, buffer type, and/or any other parameter required for substantiation of a buffers 106), and/or any other information required for creation of task pipeline 112. In at least one embodiment, load pipeline is performed via an application programming interface (e.g., API), such as via a pipeline operation 702 (FIG. 8).

In at least one embodiment, a processor uses inputs 114 and/or outputs 116 to indicate information, such as information indicating one or more data points to be input to or output from task pipeline 110 respectively. In at least one embodiment, inputs 114 and/or outputs 116 may be performed via one or more APIs (e.g., GPUDirect RMA and/or any other Api capable of transferring data into internal processor memory). In at least one embodiment, inputs 114 and/or outputs 116 originate from or are loaded to memory 108 respectively.

In at least one embodiment, a processor uses indicators 118 to indicate information, such as information indicating one or more operational parameters, outputs, and/or any other information required by controller 102 to be provided by task pipeline 110. In at least one embodiment, indicators 118 are provided to controller 102 to indicate operational state and/or other information related to task pipeline 110 to controller 102. In at least one embodiment, indicators 118 may include one or more indications to shut down task pipeline 110. In at least one embodiment, indicators may include data from memory 108.

In at least one embodiment, system 100 includes one or more processors to cause a compiler to indicate one or more portions of one or more software programs to be performed by one or more processors concurrently, and/or otherwise perform operations described herein. In at least one embodiment, system 100 is, is included in, and/or otherwise includes systems illustrated in FIGS. 1-7 to cause a compiler to indicate one or more portions of one or more software programs to be performed by one or more processors concurrently, and/or otherwise perform operations described herein. In at least one embodiment, system 100 performs one or more processes illustrated in FIGS. 1-7, such as to cause a compiler to indicate one or more portions of one or more software programs to be performed by one or more processors concurrently. and/or otherwise perform operations described herein. In at least one embodiment, system 100 performs one or more processes illustrated in FIGS. 8-26, such as to cause a compiler to indicate one or more portions of one or more software programs to be performed by one or more processors concurrently, and/or otherwise perform operations described herein.

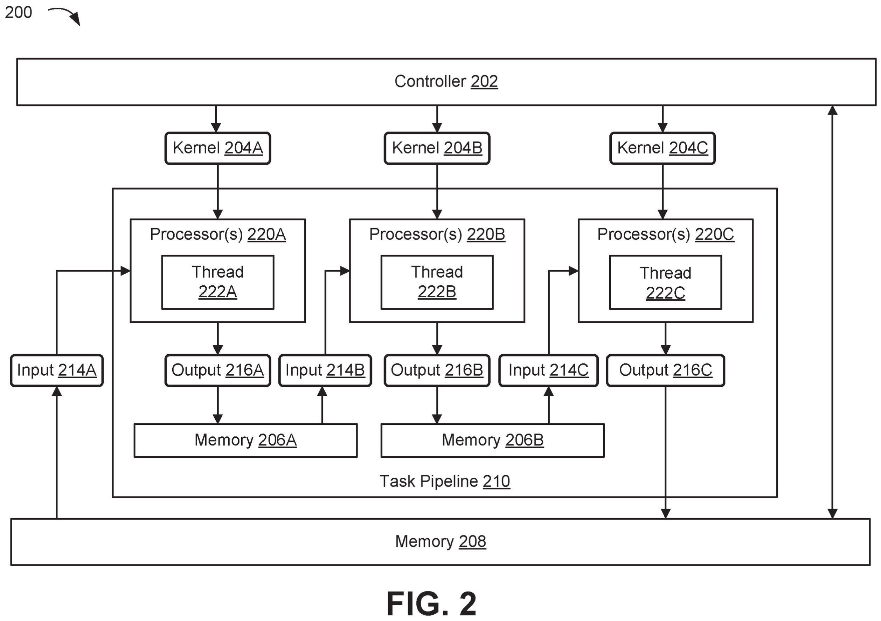

FIG. 2 illustrates an example 200 substantiation of a task pipeline, in accordance with at least one embodiment. In at least one embodiment, example 200 comprises one or more controller 202, kernel 204A-B (e.g., kernels 204), memory 208, task pipeline 210, and/or inputs 214A. In at least one embodiment, task pipeline 210 comprises one or more processor(s) 220A-C (e.g., processors 220), inputs 214B and/or C (Inputs 214), output 216A-C (outputs 216), and/or memory 206A and/or B (memory 206). In at least one embodiment, processors 220 comprise one or more thread 222A-C (e.g., threads 222). In at least one embodiment, controller 202, memory 208, task pipeline 210, and/or input 214A are described in conjunction with controller 102, memory 108, task pipeline 110, and/or inputs 114 of FIG. 1, requiring no additional description to be fully described. In at least one embodiment, example 200 performs all or part of a kernel pipeline process (e.g., process 600, FIG. 6).

In at least one embodiment, a processor uses kernels 204 to indicate information, such as information indicating one or more kernels created to define one or more tasks (e.g., tasks 104, FIG. 1) to be performed by processors 220 as part of task pipeline 210. In at least one embodiment, kernels 204 are to be performed by threads 222 within processors 220, provided by controller 202 during substantiation of task pipeline 210.

In at least one embodiment, a processor uses inputs 214 and/or outputs 216 to indicate information, such as information indicating one or more data points being written to and/or read from memory 206. In at least one embodiment, inputs 214 are data provided to processors 220 via memory 206 for performance of thread 222 operations. In at least one embodiment, outputs 216 are written to memory 206 and/or memory 208 via processors 220 after completion of thread 222 processing. In at least one embodiment, inputs 214 and/or outputs 216 are one or more data points in software.

In at least one embodiment, a processor uses memory 206 to indicate information, such as information indicating one or more memory buffers to allow translation of data between processors 220. In at least one embodiment, memory 206 is separate from memory 208. In at least one embodiment, memory 206 is one or more systems of transferring data via shared memory (e.g., GPU VRAM and/or other designations for internal system memory) to allow one task to write to that memory, and a second task to read from that memory as needed. In at least one embodiment, memory 206 is data storage hardware partitioned for exclusive use by two sequential processors 220.

In at least one embodiment, a processor uses processors 220 to indicate information, such as information indicating one or more processors (e.g., SMs and/or other designation of processor) to perform a designated thread 222 to perform an associated kernel 204. In at least one embodiment, processors 220 are provided computation input via inputs 214. In at least one embodiment, processors 220 provide computation output via outputs 216. In at least one embodiment, processors 220 remain instantiated until total dissolution of task pipeline 210. In at least one embodiment, processors 220 perform one designated task of task pipeline 210.

In at least one embodiment, a processor uses thread 222 to indicate information, such as information indicating one or more software threads used by processors 220 to perform an associated kernel 204. In at least one embodiment, thread 222 uses processing resources to perform one designated task (e.g., tasks 104) as part of task pipeline 210.

In at least one embodiment, system 200 includes one or more processors to cause a compiler to indicate one or more portions of one or more software programs to be performed by one or more processors concurrently, and/or otherwise perform operations described herein. In at least one embodiment, system 200 is, is included in, and/or otherwise includes systems illustrated in FIGS. 1-7 to cause a compiler to indicate one or more portions of one or more software programs to be performed by one or more processors concurrently, and/or otherwise perform operations described herein. In at least one embodiment, system 200 performs one or more processes illustrated in FIGS. 1-7, such as to cause a compiler to indicate one or more portions of one or more software programs to be performed by one or more processors concurrently. and/or otherwise perform operations described herein. In at least one embodiment, system 200 performs one or more processes illustrated in FIGS. 8-26, such as to cause a compiler to indicate one or more portions of one or more software programs to be performed by one or more processors concurrently, and/or otherwise perform operations described herein.

FIG. 3 illustrates an example 300 conversion of source code into a task pipeline, in accordance with at least one embodiment. In at least one embodiment, example 300 comprises one or more source code 302, pipeline object 304, compiler 306, pipeline parameters 308 (e.g., processor assignments 308A, buffer instructions 308B, and/or kernel instructions 308C), and/or processor(s) 320. In at least one embodiment, processor(s) 320 is described in conjunction with processors 220 (FIG. 2), requiring no further description to be fully defined.

In at least one embodiment, a processor uses source code 302 to indicate information, such as information indicating one or more data points representing code (e.g., CUDA code and/or other low-level code) input into one or more compiler 306 to generate machine code. In at least one embodiment, source code 302 includes one or more references, callouts, and/or other indications of one or more pipeline object 304. In at least one embodiment, source code 302 may include other data points irrelevant to creation of a task pipeline. In at least one embodiment, source code 302 is data stored in memory.

In at least one embodiment, a processor uses pipeline object 304 to indicate information, such as information indicating one or more code constructs representing data to be converted and/or computed to generate a task pipeline (e.g., task pipeline 110, FIG. 1). In at least one embodiment, pipeline object includes one or more parameter descriptions of a task pipeline (e.g., each task of a pipeline, CUDA task performed by each task, number of SMs for each task, input memory size for each task, output memory size for each task, and/or any other required parameters for creation of a task pipeline). In at least one embodiment, pipeline object 304 is input to compiler 306 as part of source code 302 to be converted into a task pipeline within an executable produced by compiler 306 and/or performed by processor(s) 320.

In at least one embodiment, a processor uses compiler 306 to indicate information, such as information indicating one or more processes to compile source code (e.g., source code 302) to machine readable executable code. In at least one embodiment, compiler 306 includes one or more functionalities to convert pipeline object 304 into an executable capable of instantiating a task pipeline (e.g., task pipeline 110, Fig. 1). In at least one embodiment, compiler 306 takes an input pipeline object 304 and creates pipeline parameters 308 to be provided to one or more operational processors (e.g., processor(s) 320) for performance of an indicated task pipeline.

In at least one embodiment, a processor uses pipeline parameters 308 to indicate information, such as information indicating one or more processor assignments for operational kernels, buffer instructions for one or more operational memory buffers, kernel instructions for one or more operational kernels, and/or any other parameters required for substantiation and performance of a task pipeline (e.g., task pipeline 110, FIG. 1). In at least one embodiment, pipeline parameters 308 are instructions generated by compiler 306 within one or more machine readable executables to substantiate a task pipeline and perform tasks as part of said pipeline.

In at least one embodiment, system 300 includes one or more processors to cause a compiler to indicate one or more portions of one or more software programs to be performed by one or more processors concurrently, and/or otherwise perform operations described herein. In at least one embodiment, system 300 is, is included in, and/or otherwise includes systems illustrated in FIGS. 1-7 to cause a compiler to indicate one or more portions of one or more software programs to be performed by one or more processors concurrently, and/or otherwise perform operations described herein. In at least one embodiment, system 300 performs one or more processes illustrated in FIGS. 1-7, such as to cause a compiler to indicate one or more portions of one or more software programs to be performed by one or more processors concurrently. and/or otherwise perform operations described herein. In at least one embodiment, system 300 performs one or more processes illustrated in FIGS. 8-26, such as to cause a compiler to indicate one or more portions of one or more software programs to be performed by one or more processors concurrently, and/or otherwise perform operations described herein.

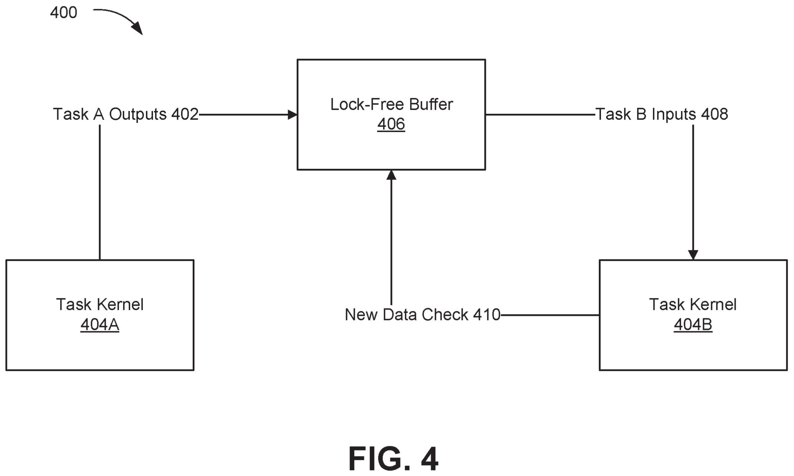

FIG. 4 illustrates an example 400 pair of pipeline kernels providing data between each other through lock free buffer memory, in accordance with at least one embodiment. In at least one embodiment, example 400 comprises one or more task kernels 404 A and/or B, lock-free buffer 406, task A outputs 402, task B inputs 408, and/or new data check 410. In at least one embodiment, task kernels A and/or B are defined in correlation with task kernels 104, requiring no further description to be fully defined. In at least one embodiment, example 400 performs part or all of a kernel pipeline process (e.g., process 600, FIG. 6).

In at least one embodiment, a processor uses lock-free buffer 406 (e.g., buffer 406) to indicate information, such as information indicating one or more memory buffers using a protocol wherein a producer task for that buffer (e.g., task kernel 404A) and a consumer task for that buffer (task kernel 404B) do not read and/or write to a same memory location at once. In at least one embodiment, lock-free buffer 406 is one or more sections of internal processor memory to allow task kernel 404A to write to said memory, providing input data to task kernel 404B when read. In at least one embodiment, lock-free buffer 406 is checked at regular intervals by new data check 410 to allow task kernel 404B to determine if new inputs are available. In at least one embodiment, lock-free buffer 406 may be used as a buffer system when data loss from output of task kernel 404A is acceptable. In at least one embodiment, for example, if outputs of task kernel 404A only matter when a most recent output is used by task kernel 404B, some data loss may be acceptable.

In at least one embodiment, a processor uses task A outputs 402 and/or task B inputs 408 (e.g., data 408) to indicate information, such as information indicating one or more data points output by task kernel 404A into lock-free buffer 406 to allow task kernel 404B to access and use said data as input. In at least one embodiment, data 408 may include one or more signatures (e.g., comprising one or more data points indicating a unique designation for said data) to allow task kernel 404B to determine if said data is new. In at least one embodiment, data 408 is read by task kernel 404B to act as input data. In at least one embodiment, data 408 is overwritten by new data as task kernel 404A generates further output data.

In at least one embodiment, a processor uses new data check 410 to indicate information, such as information indicating one or more data read operations performed by task kernel 404B to read one or more segments of data within lock-free buffer 406 to determine if data stored within lock0free buffer 406 is new. In at least one embodiment, new data check 410 may check one or more indications of unique descriptors for data within lock-free buffer 406, read all data within lock-free buffer 406, or use some other combination to determine if data within lock-free buffer 406 is new.

In at least one embodiment, system 400 includes one or more processors to cause a compiler to indicate one or more portions of one or more software programs to be performed by one or more processors concurrently, and/or otherwise perform operations described herein. In at least one embodiment, system 400 is, is included in, and/or otherwise includes systems illustrated in FIGS. 1-7 to cause a compiler to indicate one or more portions of one or more software programs to be performed by one or more processors concurrently, and/or otherwise perform operations described herein. In at least one embodiment, system 400 performs one or more processes illustrated in FIGS. 1-7, such as to cause a compiler to indicate one or more portions of one or more software programs to be performed by one or more processors concurrently. and/or otherwise perform operations described herein. In at least one embodiment, system 400 performs one or more processes illustrated in FIGS. 8-26, such as to cause a compiler to indicate one or more portions of one or more software programs to be performed by one or more processors concurrently, and/or otherwise perform operations described herein.

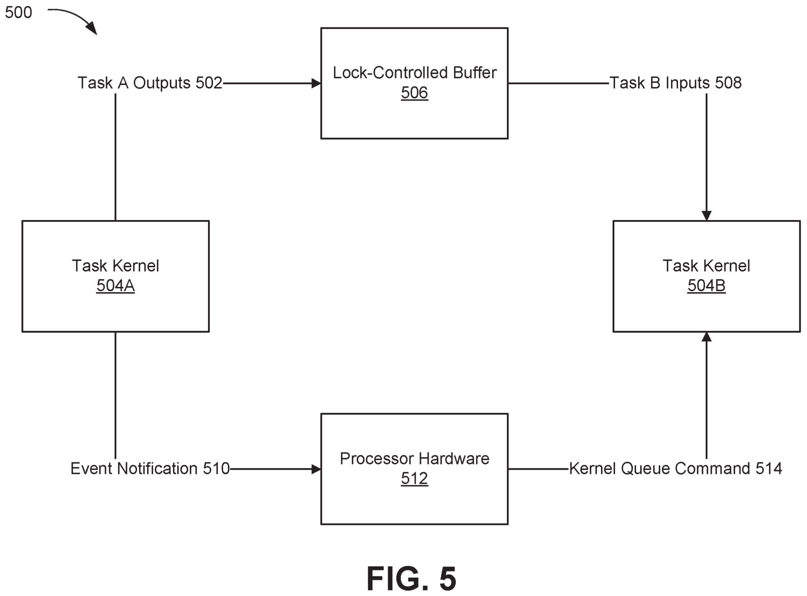

FIG. 5 illustrates an example 500 pair of pipeline kernels providing data between each other through memory buffers with a synchronous completion notification, in accordance with at least one embodiment. In at least one embodiment, example 500 comprises one or more task kernel 504A and/or B, lock-free buffer 506, processor hardware 512, task A outputs 502, task B inputs 508, event notification 510, and/or kernel queue command 514. In at least one embodiment, task kernel 504A and/or B, lock-free buffer 506, task A outputs 502, and/or task B inputs 508 are described in conjunction with, respectively, task kernels 104 (FIG. 1), lock-free buffer 406 (FIG. 4), task A outputs 402 (FIG. 4), and/or task B inputs 408, requiring no further description to be fully defined. In at least one embodiment, example 500 performs all or part of a kernel pipeline process (e.g., process 600, FIG. 6).

In at least one embodiment, a processor uses processor hardware 512 to indicate information, such as information indicating one or more hardware communication components to translate an output event notification 510 to a kernel queue command 514. In at least one embodiment, processor hardware 512 is any communication method between two substantiated kernels (e.g., task kernel 504 A and/or B) to allow task kernel 504A to inform task kernel 504B when new data is available and/or to allow task kernel 504B to inform task kernel 504A that data saved to lock-free buffer 506 has been fully read. In at least one embodiment, such communication prevents overwrite of unread data, preventing data loss.

In at least one embodiment, a processor uses event notification 510 and/or kernel queue command (e.g., proceed commands 514) to indicate information, such as information representing one or more commands for a consumer kernel in a task pipeline (e.g., task kernel 504B) to know when a producer kernel (e.g., task kernel 504A) has fully provided outputs to lock-free buffer for input to task kernel 504B. In at least one embodiment, proceed commands 514 allows a producer kernel to avoid writing over prior data before a consumer kernel has read said data, thus preventing potential data loss. In at least one embodiment, proceed commands are translated through processor hardware 512 between two kernels.

In at least one embodiment, system 500 includes one or more processors to cause a compiler to indicate one or more portions of one or more software programs to be performed by one or more processors concurrently, and/or otherwise perform operations described herein. In at least one embodiment, system 500 is, is included in, and/or otherwise includes systems illustrated in FIGS. 1-7 to cause a compiler to indicate one or more portions of one or more software programs to be performed by one or more processors concurrently, and/or otherwise perform operations described herein. In at least one embodiment, system 500 performs one or more processes illustrated in FIGS. 1-7, such as to cause a compiler to indicate one or more portions of one or more software programs to be performed by one or more processors concurrently. and/or otherwise perform operations described herein. In at least one embodiment, system 500 performs one or more processes illustrated in FIGS. 8-26, such as to cause a compiler to indicate one or more portions of one or more software programs to be performed by one or more processors concurrently, and/or otherwise perform operations described herein.

FIG. 6 illustrates an example 600 process for substantiation and operation of a kernel pipeline, in accordance with at least one embodiment. In at least one embodiment, one or more processors begin 602 a process 600, when invoked, to perform substantiation and performance of a task kernel pipeline. In at least one embodiment, received inputs are using one or more data formats, such that process 600 may then iterate to a next feature (e.g., to indicate a first feature to begin 602). In at least one embodiment, one or more processors uses a process 600 to cause a compiler to indicate one or more portions of one or more software programs to be performed by one or more processors concurrently. In at least one embodiment, process 600 is to begin at step 602.

In at least one embodiment, process 600, at step 604, comprises loading of task processes for each task of a task pipeline to be substantiated. In at least one embodiment, for example, if a pipeline is to perform resolution enhancement on one or more images, a first task may be to decompile image code to numerical strings, a second task may be to perform deblurring calculation, and a third task may be to recompile to image code. In at least one embodiment, an integer count of required tasks is generated, as well as definitions for computation required for each task.

In at least one embodiment, process 600, at step 606, comprises determining if kernels are provided 606. In at least one embodiment, if each task has kernel parameters (e.g., pipeline parameters 308, FIG. 3) provided, a process 600 proceeds to step 610. In at least one embodiment, if each task does not have kernel parameters provided, process 600 proceeds to step 608.

In at least one embodiment, process 600, at step 608, comprises splitting an input process to be performed by a pipeline into two or more sequential tasks to be performed individually by kernels within said pipeline. In at least one embodiment, such a task may involve calculation of kernel parameters, such as processor requirements, memory input requirements, memory output requirements, and/or other parameters related to operation of said kernels.

In at least one embodiment, process 600, at step 610, comprises performing loading of kernels and buffers, providing parameters for said buffers and kernels to allow a series of sequential kernels and buffers to be substantiated, creating a task pipeline. In at least one embodiment, said pipeline is then brought online, performing designated tasks perpetually until brought offline as a whole.

In at least one embodiment, process 600, at step 612, comprises performance of pipeline tasks, receiving inputs, performing computation, and providing outputs perpetually until brought offline as a whole. In at least one embodiment, performance of a pipeline may involve temporarily being brought offline by itself to conserve power when pieces within said pipeline and/or said entire pipeline has no new inputs to perform computation of.

In at least one embodiment, process 600, at step 614, comprises determining if a substantiated task pipeline has been indicated to be brought offline and/or unsubstantiated. In at least one embodiment, if an indication ahs been made, process 600 may proceed to step 616. In at least one embodiment, if such an indication has not been made, process 600 may proceed back to step 612.

In at least one embodiment, process 600, at step 616, comprises unloading kernels and buffers, removing indications of exclusive control and unsubstantiating a related task pipeline. In at least one embodiment, said unloading comprises flushing designated memory and/or unrestricting designated processing resources.

In at least one embodiment, process 600, at step 618, may end or otherwise terminate. In at least one embodiment, if process 600 completes substantiation and performance of a task pipeline, indicates to complete substantiation and performance of a task pipeline, and/or otherwise returns an error, process 600 may then terminate.

In at least one embodiment, processors use a process 600 comprising one or more steps to cause a compiler to indicate one or more portions of one or more software programs to be performed by one or more processors concurrently and/or otherwise perform operations described herein. In at least one embodiment, as an example, a machine-readable medium having stored thereon a set of instructions, which if performed by one or more processors, cause said one or more processors to cause a compiler to indicate one or more portions of one or more software programs to be performed by one or more processors concurrently and/or otherwise perform operations described herein. In at least one embodiment, process 600 includes, is included in, and/or otherwise includes systems illustrated in FIGS. 1-7 to cause a compiler to indicate one or more portions of one or more software programs to be performed by one or more processors concurrently and/or otherwise perform operations described herein. In at least one embodiment, process 600 is performed by one or more systems illustrated in FIGS. 1-7, such as to cause a compiler to indicate one or more portions of one or more software programs to be performed by one or more processors concurrently and/or otherwise perform operations described herein. In at least one embodiment, process 600 is performed by one or more systems illustrated in FIGS. 8 - 26, such as to cause a compiler to indicate one or more portions of one or more software programs to be performed by one or more processors concurrently and/or otherwise perform operations described herein.

Fig. 7 Illustrates an example 700 perform pipeline operation ("operation 700") to perform substantiation and/or performance of a task pipeline (e.g., task pipeline 110, FIG. 1), according to at least one embodiment. In at least one embodiment, an operation 700 is one or more computational operations that, if performed, perform an application programming interface (API) to cause a compiler to indicate one or more portions of one or more software programs to be performed by one or more processors concurrently as described above in conjunction with FIGS. 1-7.

In at least one embodiment, a perform pipeline operation 702 ("invocation 702") is a function call to be performed by one or more software programs, such as kernels to be performed by one or more parallel processing units (PPUs), such as graphics processing units (GPUs). In at least one embodiment, invocation 702 is an invocation of an instruction to cause one or more processors to perform analysis and/or generation of pipeline runtime 712, indicator(s) 714, of a pipeline response 704 ("response 704"). In at least one embodiment, invocation 702 is an invocation of an API to cause one or more processors to generate one or more analysis/assignment 712, 714 of response 704.

In at least one embodiment, invocation 702 receives, when invoked, one or more parameters 706, 708, 710 to indicate information about kernel tasks, buffer locations, and/or memory locations to provide parameters for a task pipeline to be created. In at least one embodiment, invocation 702 receives, when invoked, one or more parameters 706, 708, 710 to indicate information about potential pipeline generation.

In at least one embodiment, invocation 702 receives, as input, parameters 706, 708, 710 comprising kernels706, buffer locations 708, and/or memory locations 710. In at least one embodiment, said parameters are described in conjunction with corresponding components in prior figures (e.g., kernel instructions 308C (FIG. 3), locations of memory 206 (FIG. 2), and/or locations of memory 108 (FIG. 1) respectively). In at least one embodiment, further description is not required to fully define said figure components.

In at least one embodiment, response 704 generates, as output, parameters 712, 714 comprising one or more pipeline runtime 712. In at least one embodiment, pipeline runtime 712 is one or more operating task pipelines (e.g., task pipeline 110, FIG. 1) and/or indications of operation or failure to operate one or more task pipelines. In at least one embodiment, pipeline runtime 712 is data to be output in response to a function call, if said function call is to perform invocation 702. In at least one embodiment, pipeline runtime 712 is generated considering kernels706, buffer locations 708, memory locations 710, and/or other parameters required for substantiation of a task pipeline.

In at least one embodiment, response 704 generates, as output, parameters 712, 714 comprising one or more indicator(s) 714. In at least one embodiment, indicator(s) 714 is one or more indications of successful pipeline substantiation, indicators of pipeline runtime metrics, pipeline outputs, indicators of failure to substantiate a pipeline, and/or other indicators required for indication of pipeline state as a result of attempted pipeline substantiation. In at least one embodiment, indicator(s) 714 is generated considering kernels706, buffer locations 708, memory locations 710, and/or other parameters required for substantiation of a task pipeline. In at least one embodiment, indicator(s) 714 is data to be output by an API, if said API is to cause invocation 702 to be performed. In at least one embodiment, indicator(s) 714 indicates that operation 700 was or was not performed successfully, or otherwise failed. In at least one embodiment, response 704 generates additional parameters, other than pipeline runtime 712 and/or indicator(s) 714, as output.

In at least one embodiment, processors use an operation 700 comprising one or more steps to cause a compiler to indicate one or more portions of one or more software programs to be performed by one or more processors concurrently the two or more processors, and/or otherwise perform operations described herein. In at least one embodiment, as an example, a machine readable medium having stored therein a set of instructions, which if performed by one or more processors, cause said one or more processors to cause a compiler to indicate one or more portions of one or more software programs to be performed by one or more processors concurrently the two or more processors, and/or otherwise perform operations described herein. In at least one embodiment, operation 700 includes, is included in, and/or otherwise includes systems illustrated in FIGS. 1-7 to cause a compiler to indicate one or more portions of one or more software programs to be performed by one or more processors concurrently the two or more processors, and/or perform other operations described herein. In at least one embodiment, operation 700 is performed by one or more systems illustrated in FIGS. 8-26, such as to cause a compiler to indicate one or more portions of one or more software programs to be performed by one or more processors concurrently the two or more processors, and/or otherwise perform operations described herein.

In the following description, numerous specific details are set forth to provide a more thorough understanding of at least one embodiment. However, it will be apparent to one skilled in the art that the inventive concepts may be practiced without one or more of these specific details.

### DATA CENTER

FIG. 8 illustrates an example data center 800, in which at least one embodiment may be used. Data center 800 may include one or more rooms having racks 802 and auxiliary equipment used to house one or more racks 802 and one or more baseboards 804. Rack 802 can include one or more baseboards 804. Rack 802 can include a housing that receives and supports individual baseboards 804. Operational aspects of rack 802 may be regulated at a rack level, corresponding to a group of baseboards 804, or at a baseboard level, corresponding to individual baseboards 804, among other options. Rack 802 or baseboards 804 can have particularly selected maximum operating parameters, such as, but not limited to, power consumption, operating frequencies, and others. Data center 800 can be supported by various cooling systems, such as, but not limited to, cooling towers, cooling loops, pumps, and other support systems. Cooling systems may include sensors and controllers to monitor and managing cooling properties for racks 802. Baseboards 804 within racks 802 can get operational power from one or more power distribution units (PDUs; not shown). PDUs may be arranged within racks 802, for example between racks 802 including baseboards 804, or within racks 802 that also house baseboards 804.

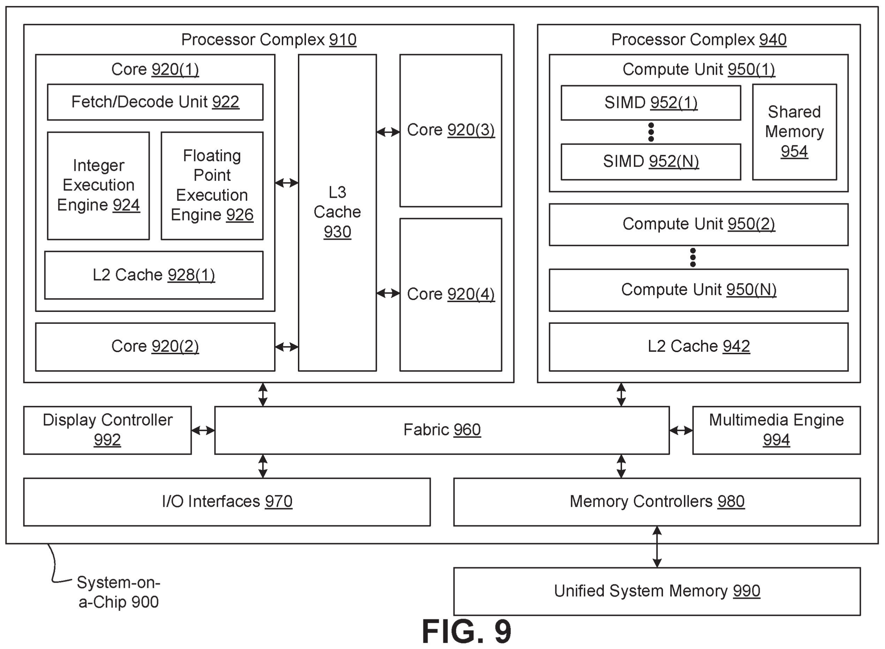

Racks 802 and baseboards 804 can include sub-systems, modules, add-in cards, and other semiconductor components. Baseboards 804 can include one or more computing units 806 that can include one or more processors 808, one or more memory 810, and an interface controller 812. Computing units 806 may include any number of processors, such as, but not limited to, central processing units ("CPUs"), graphics processing units ("GPUs"), or other processors (including accelerators, field programmable gate arrays (FPGAs), graphics processors, etc.), including any processors described herein, such as, but not limited to, the processors in FIGs. 9-21. Computing units 806 can include one or more memory storage devices 810 (e.g., dynamic read-only memory, solid state storage or disk drives), as well as network input/output ("NW I/O") devices, network switches, virtual machines ("VMs"), power modules, and cooling modules, etc. One or more computing units 806 may be a server having one or more of above-mentioned computing resources.

Computing units 806 can include separate groupings of computing units housed within one or more racks (not shown), or many racks housed in data centers at various geographical locations (also not shown). Separate groupings of computing units may include grouped compute, network, memory or storage resources that may be configured or allocated to support one or more workloads. Several computing units (e.g., including CPUs and/or other processors) may be grouped within one or more racks to provide compute resources to support one or more workloads. A resource orchestrator 814 may configure or otherwise control one or more computing units 806 or groups of computing units. Resource orchestrator 814 may include a software design infrastructure ("SDI") management entity for data center 800. Resource orchestrator 814 may include hardware, software or some combination thereof.

Data center 800 can include any one of or any combination of a framework layer 820, a software layer 830 and an application layer 840. As shown in FIG. 8, framework layer 820 includes a job scheduler 822, a configuration manager 824, a resource manager 826 and a distributed file system 828. Framework layer 820 may include a framework to support software 832 of software layer 830 and/or one or more application(s) 842 of application layer 840. Software 832 or application(s) 842 may respectively include web-based service software or applications, such as, but not limited to, those provided by Amazon Web Services, Google Cloud and Microsoft Azure. Framework layer 820 may be a type of free and open-source software web application framework such as, but not limited to, Apache Spark^{™} (hereinafter "Spark") that may utilize distributed file system 828 for large-scale data processing (e.g., "big data"). Job scheduler 822 may include a Spark driver to facilitate scheduling of workloads supported by various layers of data center 800. Configuration manager 824 may be capable of configuring different layers such as, but not limited to, software layer 830 and framework layer 820 including Spark and distributed file system 828 for supporting large-scale data processing. Resource manager 826 may be capable of managing clustered or grouped computing units 806 mapped to or allocated for support of distributed file system 828 and job scheduler 822. Resource manager 826 may coordinate with resource orchestrator 814 to manage these mapped or allocated computing resources.

Software 832 can be included in software layer 830 and may include software used by at least portions of a computing unit 806, one or more computing units 806, groups of computing units 806, and/or distributed file system 828 of framework layer 820. One or more types of software may include, but are not limited to, Internet web page search software, e-mail virus scan software, database software, and streaming video content software.

Application(s) 842 can be included in application layer 840 and may include one or more types of applications used by at least portions of a computing unit 806, one or more computing units 806, groups of computing units 806, and/or distributed file system 828 of framework layer 820. One or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

Any of configuration manager 824, resource manager 826, and resource orchestrator 814 may implement any number and type of self-modifying actions based on any amount and type of data acquired in any technically feasible fashion. Self-modifying actions may relieve a data center operator of data center 800 from making possibly bad configuration decisions and possibly avoiding underutilized and/or poor performing portions of a data center.

Data center 800 may include tools, services, software or other resources to train one or more machine learning models or predict or infer information using one or more machine learning models in accordance with one or more embodiments described herein. For example, a machine learning model may be trained by calculating weight parameters in accordance with a neural network architecture using software and computing resources described above with respect to data center 800. Trained machine learning models corresponding to one or more neural networks may be used to infer or predict information using resources described above with respect to data center 800 by using weight parameters calculated through one or more training techniques described herein.

Data center 800 may use CPUs, application-specific integrated circuits (ASICs), GPUs, FPGAs, or other hardware (e.g., embodiments in FIGs. 9-21) to perform some or all of processes and techniques described elsewhere herein, such as, but not limited to, training and/or inferencing using above-described resources. Moreover, one or more software and/or hardware resources described above may be configured as a service to allow users to train or performing inferencing of information, such as, but not limited to, image recognition, speech recognition, or other artificial intelligence services.

In at least one embodiment, processor 808 can include one of the processors below and/or comprises one or more circuits to cause a compiler to indicate one or more portions of one or more software programs to be performed by one or more processors concurrently or otherwise perform any of the operations described above or elsewhere herein. In at least one embodiment, processor 808 is configured by software 832 to cause a compiler to indicate one or more portions of one or more software programs to be performed by one or more processors concurrently or otherwise perform any of the operations described above or elsewhere herein. Data center 800 may use logic, CPUs, application-specific integrated circuits (ASICs), GPUs, FPGAs, or other hardware (e.g., embodiments in FIGs. 9-21) to perform any of the operations described above or elsewhere herein.

### PROCESSORS

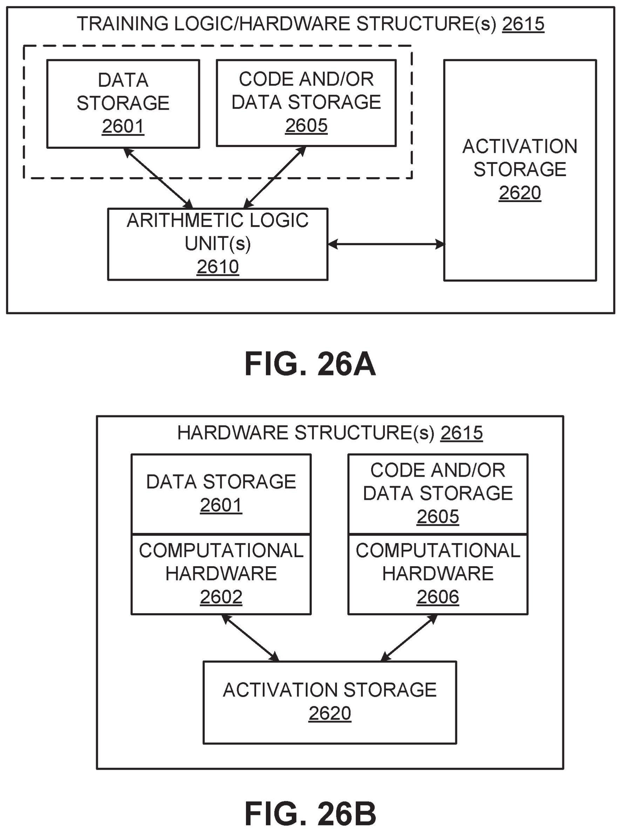

The following figures set forth, without limitation, example processors and processing systems that can be used to cause a compiler to indicate one or more portions of one or more software programs to be performed by one or more processors concurrently or otherwise perform some or all of processes, operations and/or and techniques described elsewhere herein. Example processors and processing systems can be configured by software to cause a compiler to indicate one or more portions of one or more software programs to be performed by one or more processors concurrently or otherwise perform any of the operations described above or elsewhere herein. Processors and processing systems can include logic, central processing units (CPUs), application-specific integrated circuits (ASICs), graphics processing units (GPUs), field programmable arrays (FPGAs), XPUs (i.e., any compute architecture that best fits the need of an application) or other hardware (e.g., embodiments in FIGs. 9-21) to perform any of the operations described above, below, or elsewhere herein. Processors and/or processing systems described herein can include one or more circuits that can be used to cause a compiler to indicate one or more portions of one or more software programs to be performed by one or more processors concurrently or otherwise perform any of the operations described above or elsewhere herein. As used herein, one or more circuits can be configured by software to cause a compiler to indicate one or more portions of one or more software programs to be performed by one or more processors concurrently or otherwise perform any of the operations described above or elsewhere herein. FIGs. 26A and 26B illustrate logic 2615 which, as described elsewhere herein, can be used in one or more devices to perform operations such as, but not limited to, those discussed herein in accordance with at least one embodiment. Logic can refer, for example, to any combination of software logic, hardware logic, and/or firmware logic to provide functionality and/or operations described herein, wherein logic may be, collectively or individually, embodied as circuitry that forms part of a larger system, for example, an integrated circuit (IC), an application-specific integrated circuit (ASIC), a field programmable array (FPGA), system-on-chip (SoC), or one or processors (e.g., CPU, GPU).

FIG. 9 illustrates a processor which is a system-on-a-chip (SOC) 900 (which may be referred to as system-on-chip, a superchip, or another name), in accordance with at least one embodiment. SOC 900 can include processor complex 910 and processor complex 940. SOC 900 can include any number of processor complexes 910 and/or processor complexes 940 that may include any number of processors that are described herein, such as, but not limited to, those in FIGs. 9-21, in any combination. For example, processor 910 may include a central processing unit (CPU), and processor 940 may include a graphics processor. Alternatively, processor 910 may include a graphics processor, and processor 940 may include a graphics processor. SOC 900 may include any number of display controllers 992, any number of multimedia engines 994, any number of I/O Interfaces 970, any number of memory controllers 980, and any number of fabrics 960 in any combination. For explanatory purposes, multiple instances of like objects are denoted herein with reference numbers identifying the object and parenthetical numbers identifying the instance where needed. SOC900 can include a processor from Broadcom in Palo Alto, CA.

Processor complex 910 can include a CPU, processor complex 940 can include a GPU, and SOC 900 can be a processing unit that integrates 910 and 940 onto a single chip. Some tasks may be assigned to processor complex 910 and other tasks may be assigned to processor complex 940. Processor complex 910 can be configured to execute main control software associated with SOC 900, such as, but not limited to, an operating system. Processor complex 910 can be the master processor of SOC 900, controlling and coordinating operations of other processors. Processor complex 910 can issue commands that control the operation of processor complex 940 to perform some or all of the operations described herein. Processor complex 910 can be configured to execute host executable code derived from CUDA or other source code (e.g., HIP source code), and processor complex 940 can be configured to execute device executable code derived from CUDA or other source code in order to perform any of the operations described herein.

Processor complex 910 can include cores 920(1)-920(4) and a cache (e.g., L3 cache) 930 to store information to perform operations described herein. Processor complex 910 may include any number of cores 920 and any number and type of caches in any combination. Cores 920 can be configured to execute instructions of a particular instruction set architecture ("ISA") to perform some or all of the operations described herein. Each core 920 can include a CPU core. Core 920(1)-920(4) can be referred to as a computing units or compute units. SOC 900 can includes any number of processor complexes 910, fabric 960, I/O interfaces 970, and memory controllers 980.

Each core 920 can include a fetch/decode unit 922, an integer execution engine 924, a floating point execution engine 926, and an L2 cache 928. Fetch/decode unit 922 can fetch instructions to perform some or all of the operations described herein (such as, but not limited to, an API that is compiled into instructions) and decode such instructions, generate micro-operations, and dispatch separate micro-instructions to integer execution engine 924 and/or floating point execution engine 926. Fetch/decode unit 922 can concurrently dispatch one micro-instruction to integer execution engine 924 and another micro-instruction to floating point execution engine 926. Integer execution engine 924 can execute integer and memory operations. Floating point engine 926 can execute floating point and vector operations. Fetch-decode unit 922 can dispatch micro-instructions to one or more execution engines that replaces both integer execution engine 924 and floating point execution engine 926.

Each core 920(i), where i is an integer representing a particular instance of core 920, may access L2 cache 928(i) included in core 920(i). Each core 920 included in core complex 910(j), where j is an integer representing a particular instance of core complex 910, can be connected to other cores 920 included in core complex 910(j) via L3 cache 930(j) included in core complex 910(j). Cores 920 included in core complex 910(j), where j is an integer representing a particular instance of core complex 910, can access all of L3 cache 930(j) included in core complex 910(j). L3 cache 930 may include any number of slices.

Processor complex 940 can be a graphics complex that can be configured to perform compute operations (e.g., compute operations involved in operations described herein) in a highly-parallel fashion. Processor complex 940 can be configured to execute graphics pipeline operations such as, but not limited to, draw commands, pixel operations, geometric computations, and other operations associated with rendering an image to a display. Processor complex 940 can be configured to execute operations unrelated to graphics, such as, but not limited to, neural network training and/or simulations. Processor complex 940 can be configured to execute both operations related to graphics and operations unrelated to graphics.

Processor complex 940 can include any number of compute units 950(1)-950(N), where N is any integer greater than 1, and an L2 cache 942. Compute units 950 can share L2 cache 942, which may store information to be used to perform some or all of the operations described herein. L2 cache 942 can be partitioned. Processor complex 940 can include any number of compute units 950 and any number (including zero) and type of caches. Processor complex 940 can include any amount of dedicated graphics hardware.

Each compute unit 950 can include any number of SIMD units 952(1)-952(N), where N is any integer greater than 1, and a shared memory 954. Each SIMD unit 952 can implement a SIMD architecture and can be configured to some or all of the operations described herein, in parallel. Each compute unit 950 may execute any number of thread blocks, but each thread block can execute on a single compute unit 950, although in some embodiments a thread block can execute on multiple compute units. A thread block can include any number of threads of execution. A workgroup can be a thread block. Each SIMD unit 952 can execute a group of threads. A group of threads (e.g., 16 threads), which can also be referred to as a warp, or subgroup, or wavefront (e.g., as used by AMD and Intel), where each thread in the warp, wave, subgroup, or wavefront can belong to a single thread block and is configured to process a different set of data based on a single set of instructions. Predication can be used to disable one or more threads in a warp, subgroup, or wavefront. A lane can be a thread. A work item can be a thread, such as, but not limited to, e.g., with OpenCL. Different warps, subgroups, or wavefronts in a thread block may synchronize together and communicate via shared memory 954. Each compute unit 950 can include one or more thread block clusters, where a thread block cluster can enable programmatic control of locality at a granularity larger than a single thread block of a single streaming multiprocessor (SM). Thread block clusters (also referred to as "clusters") can enable multiple thread blocks running concurrently across streaming multiprocessors to synchronize and collaboratively fetch, exchange, or otherwise use data. In at least one embodiment, streaming multiprocessors ("SMs") can be referred to streaming microprocessors, stream processors ("SPs"), stream processing units ("SPUs"), compute units ("CUs"), execution units ("EUs"), and/or slices, where a slice in this context can refer to a portion of processing resources in a processing unit (e.g., 16 cores, a ray tracing unit, a thread director or scheduler).

Fabric 960 can be a system interconnect that facilitates data and control transmissions across processor complex 910, processor complex 940, I/O interfaces 970, memory controllers 980, display controller 992, and multimedia engine 994, e.g., to perform some or all of the operations described herein. SOC 900 may include any amount and type of system interconnect in addition to or instead of fabric 960 that facilitates data and control transmissions across any number and type of directly or indirectly linked components that may be internal or external to SOC 900. I/O interfaces 970 can be representative of any number and type of I/O interfaces (e.g., PCI , PCI-Extended ("PCI-X"), PCIe, gigabit Ethernet ("GBE"), USB, etc.). Various types of peripheral devices can be coupled to I/O interfaces 970. Peripheral devices that can be coupled to I/O interfaces 970 may include keyboards, mice, printers, scanners, joysticks or other types of game controllers, media recording devices, external storage devices, network interface cards, and so forth.

Display controller 992 may display images on one or more display device(s), such as, but not limited to, a liquid crystal display ("LCD") device. Multimedia engine 994 can include any amount and type of circuitry that is related to multimedia, such as, but not limited to, a video decoder, a video encoder, an image signal processor, etc. Memory controllers 980 may facilitate data transfers between SOC 900 and a unified system memory 990. Processor complex 910 and processor complex 940 may share unified system memory 990. Unified system memory 990 can include various types of memory devices, including dynamic random access memory (DRAM) or graphics random access memory, such as, but not limited to, synchronous graphics random access memory (SGRAM), including graphics double data rate (GDDR) memory. Unified system memory 990 may include 3D stacked memory, including but not limited to high bandwidth memory (HBM), HBM2e, or HDM3.

SOC 900 may implement a memory subsystem that includes any amount and type of memory controllers 980 and memory devices (e.g., shared memory 954) that may be dedicated to one component or shared among multiple components in order to perform any of the operations described herein. SOC 900 can implement a cache subsystem that includes one or more cache memories (e.g., L2 caches 928, L3 cache 930, and L2 cache 942) that may each be private to or shared between any number of components (e.g., cores 920, core complex 910, SIMD units 952, compute units 950, and processor complex 940).

In at least one embodiment, SOC 900 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

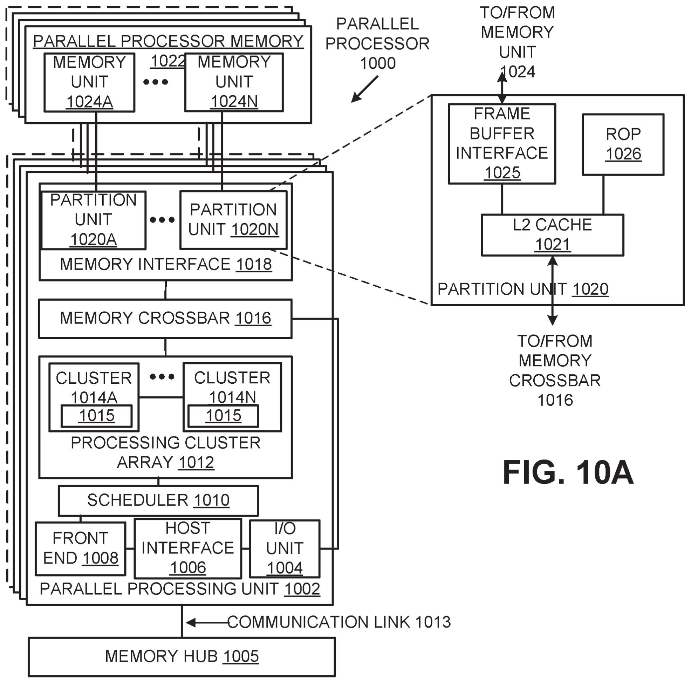

FIG. 10A illustrates a parallel processor 1000, in accordance with at least one embodiment. Parallel processor 1000 may be implemented using one or more circuits and may be referred to as a programmable processor (e.g., a CPU and/or GPU), logic, an application specific integrated circuit (ASIC), a field programmable gate array (FPGA) or other hardware (e.g., embodiments in FIGs. 9-21) to perform any of the operations described above or elsewhere herein.

Parallel processor 1000 can include a parallel processing unit 1002 to perform any of the operations described above or elsewhere herein. Parallel processing unit 1002 can include an I/O unit 1004 that enables communication with other devices, including other instances of parallel processing unit 1002. I/O unit 1004 may be directly connected to other devices. I/O unit 1004 may connect with other devices via use of a hub or switch interface, such as, but not limited to, a memory hub 1005. Connections between memory hub 1005 and I/O unit 1004 can form a communication link 1013. I/O unit 1004 may connect with a host interface 1006 and a memory crossbar 1016, where host interface 1006 receives commands directed to performing processing operations and memory crossbar 1016 receives commands directed to performing memory operations.

When host interface 1006 receives a command buffer via I/O unit 1004, host interface 1006 can direct work operations to perform those commands to a front end 1008. Front end 1008 can couple with a scheduler 1010 (which may be referred to as a sequencer), which is configured to distribute commands or other work items to a processing cluster array 1012. Scheduler 1010 can ensure that processing cluster array 1012 is properly configured and in a valid state before tasks may be distributed to a cluster of processing cluster array 1012. Scheduler 1010 may be implemented via firmware logic executing on a microcontroller. Microcontroller-implemented scheduler 1010 can be configurable to perform complex scheduling and work distribution operations at coarse and fine granularity, enabling rapid preemption and context switching of threads executing on processing array 1012. Host software can prove workloads for scheduling on processing cluster array 1012 via one of multiple graphics processing paths. Workloads can then be automatically distributed across processing array cluster 1012 by scheduler 1010 logic within a microcontroller including scheduler 1010.

Processing cluster array 1012 can perform any of the operations described above or elsewhere herein and can include up to "N" processing clusters (e.g., cluster 1015A, cluster 1015B, through cluster 1015N), where "N" represents a positive integer (which may be a different integer "N" than used in other figures). Each cluster 1015A-1015N of processing cluster array 1012 can execute a large number of concurrent threads. Scheduler 1010 can allocate work to clusters 1014A-1014N of processing cluster array 1012 using various scheduling and/or work distribution algorithms, which may vary depending on workload arising for each type of program or computation. Scheduling can be handled dynamically by scheduler 1010, or can be assisted in part by compiler logic during compilation of program logic configured for execution by processing cluster array 1012. Different clusters 1014A-1014N of processing cluster array 1012 can be allocated for processing different types of programs or for performing different types of computations.

Processing cluster array 1012 can be configured to perform various types of parallel processing operations, such as, but not limited to, any of the operations described above or elsewhere herein. Processing cluster array 1012 can be configured to perform general-purpose parallel compute operations. For example, processing cluster array 1012 can include logic to execute processing tasks including filtering of video and/or audio data, performing modeling operations, including physics operations, and performing data transformations.

Processing cluster array 1012 can be configured to perform parallel graphics processing operations. Processing cluster array 1012 can include additional logic to support execution of such graphics processing operations, including but not limited to, texture sampling logic to perform texture operations, as well as tessellation logic and other vertex processing logic. Processing cluster array 1012 can be configured to execute graphics processing related shader programs such as, but not limited to, vertex shaders, tessellation shaders, geometry shaders, and pixel shaders. Parallel processing unit 1002 can transfer data from system memory via I/O unit 1004 for processing. During processing, transferred data can be stored to on-chip memory (e.g., parallel processor memory 1022) during processing, then written back to system memory.

When parallel processing unit 1002 is used to perform graphics processing, scheduler 1010 can be configured to divide a processing workload into approximately equal sized tasks, to better enable distribution of graphics processing operations to multiple clusters 1014A-1014N of processing cluster array 1012. Portions of processing cluster array 1012 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of clusters 1014A-1014N may be stored in buffers to allow intermediate data to be transmitted between clusters 1014A-1014N for further processing.

Processing cluster array 1012 can receive processing tasks to be executed via scheduler 1010, which receives commands defining processing tasks from front end 1008. Processing tasks can include indices of data to be processed, e.g., surface (patch) data, primitive data, vertex data, and/or pixel data, as well as state parameters and commands defining how data is to be processed (e.g., what program is to be executed). Scheduler 1010 may be configured to fetch indices corresponding to tasks or may receive indices from front end 1008. Front end 1008 can be configured to ensure processing cluster array 1012 is configured to a valid state before a workload specified by incoming command buffers (e.g., batch-buffers, push buffers, etc.) is initiated.

Each of one or more instances of parallel processing unit 1002 can couple with a parallel processor memory 1022 to perform any of the operations described above or elsewhere herein. Parallel processor memory 1022 can be accessed via memory crossbar 1016, which can receive memory requests from processing cluster array 1012 as well as I/O unit 1004. Memory crossbar 1016 can access parallel processor memory 1022 via a memory interface 1018. Memory interface 1018 can include multiple partition units (e.g., partition unit 1020A, partition unit 1020B, through partition unit 1020N) that can each couple to a portion (e.g., memory unit) of parallel processor memory 1022. A number of partition units 1020A-1020N can be configured to be equal to a number of memory units, such that a first partition unit 1020A has a corresponding first memory unit 1024A, a second partition unit 1020B has a corresponding memory unit 1024B, and an N-th partition unit 1020N has a corresponding N-th memory unit 1024N. A number of partition units 1020A-1020N may not be equal to a number of memory units.

Memory units 1024A-1024N can include various types of memory devices, including dynamic random access memory (DRAM) or graphics random access memory, such as, but not limited to, synchronous graphics random access memory (SGRAM), including graphics double data rate (GDDR) memory. Memory units 1024A-1024N may also include 3D stacked memory, including but not limited to high bandwidth memory (HBM), HBM2e, or HDM3. Render targets, such as, but not limited to, frame buffers or texture maps may be stored across memory units 1024A-1024N, allowing partition units 1020A-1020N to write portions of each render target in parallel to efficiently use available bandwidth of parallel processor memory 1022. A local instance of parallel processor memory 1022 may be excluded in favor of a unified memory design that utilizes system memory in conjunction with local cache memory.

Any one of clusters 1014A-1014N of processing cluster array 1012 can process data that will be written to any of memory units 1024A-1024N within parallel processor memory 1022. Memory crossbar 1016 can be configured to transfer an output of each cluster 1014A-1014N to any partition unit 1020A-1020N or to another cluster 1014A-1014N, which can perform additional processing operations on an output. Each cluster 1014A-1014N can communicate with memory interface 1018 through memory crossbar 1016 to read from or write to various external memory devices. Memory crossbar 1016 can have a connection to memory interface 1018 to communicate with I/O unit 1004, as well as a connection to a local instance of parallel processor memory 1022, enabling processing units within different processing clusters 1014A-1014N to communicate with system memory or other memory that is not local to parallel processing unit 1002. Memory crossbar 1016 can use virtual channels to separate traffic streams between clusters 1014A-1014N and partition units 1020A-1020N.

Multiple instances of parallel processing unit 1002 can be provided on a single add-in card, or multiple add-in cards can be interconnected. Different instances of parallel processing unit 1002 can be configured to interoperate even if different instances have different numbers of processing cores, different amounts of local parallel processor memory, and/or other configuration differences. For example, some instances of parallel processing unit 1002 can include higher precision floating point units relative to other instances. Systems incorporating one or more instances of parallel processing unit 1002 or parallel processor 1000 can be implemented in a variety of configurations and form factors, including but not limited to desktop, laptop, or handheld personal computers, servers, workstations, game consoles, and/or embedded systems.

FIG. 10A further includes a block diagram of a partition unit 1020, in accordance with at least one embodiment. Partition unit 1020 is an instance of one of partition units 1020A-1020N of FIG. 10A. Partition unit 1020 can include an L2 cache 1021, a frame buffer interface 1025, and a ROP 1026 (raster operations unit). L2 cache 1021 can be a read/write cache that is configured to perform load and store operations received from memory crossbar 1016 and ROP 1026. Read misses and urgent write-back requests can be output by L2 cache 1021 to frame buffer interface 1025 for processing. Updates can also be sent to a frame buffer via frame buffer interface 1025 for processing. Frame buffer interface 1025 may interface with one of memory units in parallel processor memory, such as, but not limited to, memory units 1024A-1024N of FIG. 10A (e.g., within parallel processor memory 1022).

ROP 1026 can be a processing unit that performs raster operations such as, but not limited to, stencil, z test, blending, etc. ROP 1026 can then output processed graphics data that is stored in graphics memory. ROP 1026 can include compression logic to compress depth or color data that is written to memory and decompress depth or color data that is read from memory. Compression logic can be lossless compression logic that makes use of one or more of multiple compression algorithms. A type of compression that is performed by ROP 1026 can vary based on statistical characteristics of data to be compressed. For example, delta color compression is performed on depth and color data on a per-tile basis.

ROP 1026 can be included within each processing cluster (e.g., cluster 1014A-1014N of FIG. 10A) instead of within partition unit 1020. Read and write requests for pixel data may be transmitted over memory crossbar 1016 instead of pixel fragment data. Processed graphics data may be displayed on a display routed for further processing by processor(s), or routed for further processing by one of processing entities within parallel processor 1000 of FIG. 10A.

In at least one embodiment, parallel processor 1000 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

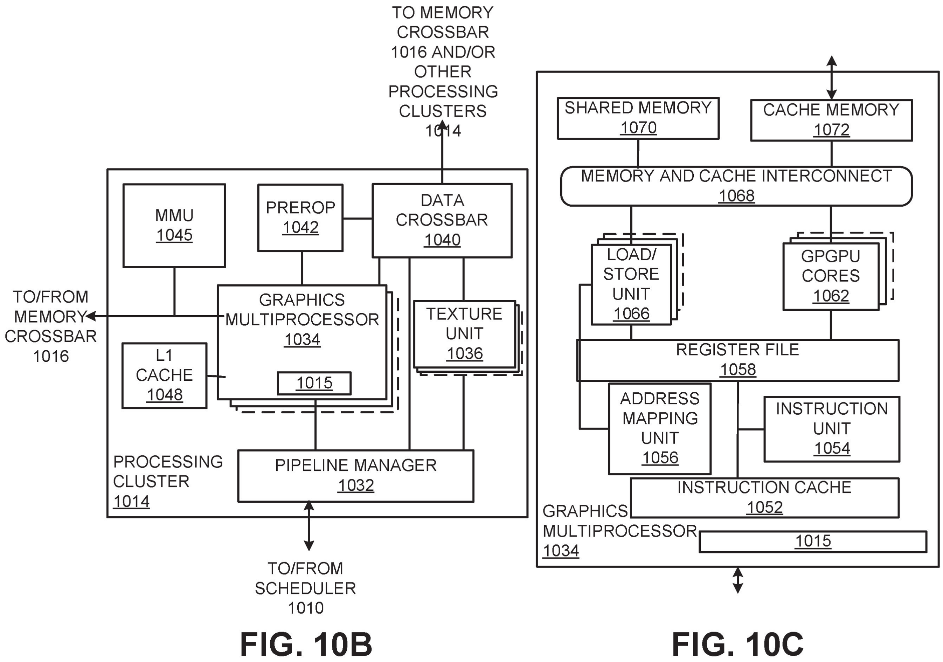

FIG. 10B includes a block diagram of a processing cluster 1014 within a parallel processing unit, in accordance with at least one embodiment. A processing cluster can be an instance of one of processing clusters 1014A-1014N of FIG. 10A that can be used to perform any of the operations described above or elsewhere herein. Processing cluster 1014 can be configured to execute many threads in parallel, where "thread" refers to an instance of a particular program executing on a particular set of input data. Single-instruction, multiple-data (SIMD) instruction issue techniques can be used to support parallel execution of a large number of threads without providing multiple independent instruction units. Single-instruction, multiple-thread (SIMT) techniques may be used to support parallel execution of a large number of generally synchronized threads, using a common instruction unit configured to issue instructions to a set of processing engines within each one of processing clusters.

Operation of processing cluster 1014 can be controlled via a pipeline manager 1032 that distributes processing tasks to SIMT parallel processors. Pipeline manager 1032 can receive instructions from scheduler 1010 of FIG. 10A and manages execution of those instructions via a graphics multiprocessor 1034 and/or a texture unit 1036. Graphics multiprocessor 1034 may be an example instance of a SIMT parallel processor. However, various types of SIMT parallel processors of differing architectures may be included within processing cluster 1014. One or more instances of graphics multiprocessor 1034 can be included within a processing cluster 1014. Graphics multiprocessor 1034 can process data and a data crossbar 1040 can be used to distribute processed data to one of multiple possible destinations, including other shader units. Pipeline manager 1032 can facilitate distribution of processed data by specifying destinations for processed data to be distributed via data crossbar 1040.

Each graphics multiprocessor 1034 within processing cluster 1014 can include an identical set of functional execution logic (e.g., arithmetic logic units, load-store units, etc.) to perform computations for any of the operations described above or elsewhere herein. Functional execution logic can be configured in a pipelined manner in which new instructions can be issued before previous instructions may be complete. Functional execution logic can support a variety of operations including integer and floating point arithmetic, comparison operations, Boolean operations, bit-shifting, and computation of various algebraic functions. Same functional-unit hardware can be leveraged to perform different operations and any combination of functional units may be present.

Instructions transmitted to processing cluster 1014 may constitute a thread, which can also be referred to as a warp, subgroup, wave, or a wavefront. A set of threads executing across a set of parallel processing engines can be referred to as a thread group. A thread group can execute a common program on different input data. Each thread within a thread group can be assigned to a different processing engine within a graphics multiprocessor 1034. A thread group may include fewer threads than a number of processing engines within graphics multiprocessor 1034. When a thread group includes fewer threads than a number of processing engines, one or more of processing engines may be idle during cycles in which that thread group is being processed. A thread group may also include more threads than a number of processing engines within graphics multiprocessor 1034. When a thread group includes more threads than number of processing engines within graphics multiprocessor 1034, processing can be performed over consecutive clock cycles. Multiple thread groups can be executed concurrently on a graphics multiprocessor 1034.

Graphics multiprocessor 1034 includes an internal cache memory to perform load and store operations, such as, but not limited to, any of the operations described above or elsewhere herein. Graphics multiprocessor 1034 can forego an internal cache and use a cache memory (e.g., L1 cache 1048) within processing cluster 1014. Each graphics multiprocessor 1034 may also have access to L2 caches within partition units (e.g., partition units 1020A-1020N of FIG. 10A) that can be shared among all processing clusters 1014 and may be used to transfer data between threads. Graphics multiprocessor 1034 may also access off-chip global memory, which can include one or more of local parallel processor memory and/or system memory. Any memory external to parallel processing unit 1002 may be used as global memory. Processing cluster 1014 can include multiple instances of graphics multiprocessor 1034 and can share common instructions and data, which may be stored in L1 cache 1048.

Each processing cluster 1014 may include an MMU 1045 (memory management unit) that can be configured to map virtual addresses into physical addresses. One or more instances of MMU 1045 may reside within memory interface 1018 of FIG. 10A. MMU 1045 can include a set of page table entries (PTEs) used to map a virtual address to a physical address of a tile and optionally a cache line index. MMU 1045 may include address translation lookaside buffers (TLB) or caches that may reside within graphics multiprocessor 1034 or L1 1048 cache or processing cluster 1014. A physical address can be processed to distribute surface data access locally to allow for efficient request interleaving among partition units. A cache line index may be used to determine whether a request for a cache line is a hit or miss.

A processing cluster 1014 may be configured such that each graphics multiprocessor 1034 is coupled to a texture unit 1036 for performing texture mapping operations, e.g., determining texture sample positions, reading texture data, and filtering texture data. Texture data can be read from an internal texture L1 cache (not shown) or from an L1 cache within graphics multiprocessor 1034 and can be fetched from an L2 cache, local parallel processor memory, or system memory, as needed. Each graphics multiprocessor 1034 can output processed tasks to data crossbar 1040 to provide processed task to another processing cluster 1014 for further processing or to store processed task in an L2 cache, local parallel processor memory, or system memory via memory crossbar 1016. A preROP 1042 (pre-raster operations unit) can be configured to receive data from graphics multiprocessor 1034, and direct data to ROP units, which may be located with partition units as described herein (e.g., partition units 1020A-1020N of FIG. 10A). PreROP 1042 unit can perform optimizations for color blending, organizing pixel color data, and performing address translations.

In at least one embodiment, processing cluster 1014 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

FIG. 10C shows a graphics multiprocessor 1034, in accordance with at least one embodiment, e.g., to perform any of the operations described above or elsewhere herein. Graphics multiprocessor 1034 can couple with pipeline manager 1032 of processing cluster 1014. Graphics multiprocessor 1034 can include an execution pipeline including but not limited to an instruction cache 1052 (that, e.g., can store instructions, such as, not limited to compiled API instructions), an instruction unit 1054, an address mapping unit 1056, a register file 1058, one or more general purpose graphics processing unit (GPGPU) cores 1062, and one or more load/store units 1066, where one or more load/store units 1066 can perform load/store operations to load/store instructions corresponding to performing an operation. GPGPU cores 1062 and load/store units 1066 can be coupled with cache memory 1072 and shared memory 1070 via a memory and cache interconnect 1068. GPGPU cores 1062 can be part of an SoC such as, but not limited to, part of integrated circuit 900 in FIG. 9.

Instruction cache 1052 can receive a stream of instructions (e.g., to perform any of the operations described above or elsewhere herein) to execute from pipeline manager 1032. Instructions can be cached in instruction cache 1052 and dispatched for execution by an instruction unit 1054. Instruction unit 1054 can dispatch instructions as thread groups (e.g., warps, subgroups, wavefronts, or waves), with each thread of thread group assigned to a different execution unit within GPGPU cores 1062. An instruction can access any of a local, shared, or global address space by specifying an address within a unified address space. Address mapping unit 1056 can be used to translate addresses in a unified address space into a distinct memory address that can be accessed by load/store units 1066.

Register file 1058 can provide a set of registers for functional units of graphics multiprocessor 1034. Register file 1058 may provide temporary storage for operands connected to data paths of functional units (e.g., GPGPU cores 1062, load/store units 1066) of graphics multiprocessor 1034. Register file 1058 may be divided between each of functional units such that each functional unit is allocated a dedicated portion of register file 1058. Register file 1058 can be divided between different warps (which may be referred to as wavefronts, subgroups, and/or waves or threads) being executed by graphics multiprocessor 1034.

GPGPU cores 1062 can each include floating point units (FPUs) and/or integer arithmetic logic units (ALUs) that can be used to execute instructions of graphics multiprocessor 1034. GPGPU cores 1062 can be similar in architecture or can differ in architecture. A first portion of GPGPU cores 1062 can include a single precision FPU and an integer ALU while a second portion of GPGPU cores include a double precision FPU. FPUs can implement IEEE 754-2008 standard floating point arithmetic or enable variable precision floating point arithmetic. Graphics multiprocessor 1034 can additionally include one or more fixed function or special function units to perform specific functions such as, but not limited to, copy rectangle or pixel blending operations. One or more of GPGPU cores 1062 can also include fixed or special function logic.

GPGPU cores 1062 can include SIMD logic capable of performing a single instruction on multiple sets of data. GPGPU cores 1062 can physically execute SIMD4, SIMD8, and SIMD16 instructions and logically execute SIMD1, SIMD2, and SIMD32 instructions. SIMD instructions for GPGPU cores can be generated at compile time by a shader compiler or automatically generated when executing programs written and compiled for single program multiple data (SPMD) or SIMT architectures. Multiple threads of a program can be configured for an SIMT execution model that can be executed via a single SIMD instruction. For example, eight SIMT threads that perform same or similar operations can be executed in parallel via a single SIMD8 logic unit.

Memory and cache interconnect 1068 can include an interconnect network that connects each functional unit of graphics multiprocessor 1034 to register file 1058 and to shared memory 1070. Memory and cache interconnect 1068 may be a crossbar interconnect that allows load/store unit 1066 to implement load and store operations between shared memory 1070 and register file 1058. register file 1058 can operate at a same frequency as GPGPU cores 1062, thus data transfer between GPGPU cores 1062 and register file 1058 can have very low latency. Shared memory 1070 can be used to enable communication between threads that execute on functional units within graphics multiprocessor 1034. Cache memory 1072 can be used as a data cache for example, to cache texture data communicated between functional units and texture unit 1036. Shared memory 1070 can also be used as a program managed cache. Threads executing on GPGPU cores 1062 can programmatically store data within shared memory in addition to automatically cached data that is stored within cache memory 1072.

A parallel processor or GPGPU as described herein may be communicatively coupled to host/processor cores to accelerate graphics operations, machine-learning operations, pattern analysis operations, and various general purpose GPU (GPGPU) functions. A GPU may be communicatively coupled to host processor/cores over a bus or other interconnect (e.g., a highspeed interconnect such as, but not limited to, PCIe or NVLink). An SoC may include a parallel processor or GPGPU as described herein, where said parallel processor or said GPGPU is performed on said SoC. A GPU may be integrated on a package or chip as cores and communicatively coupled to cores over an internal processor bus/interconnect internal to a package or chip. Regardless a manner in which a GPU is connected, processor cores may allocate work to such GPU in a form of sequences of commands/instructions contained in a work descriptor. GPU then may use dedicated circuitry/logic for efficiently processing these commands/instructions to perform any of the operations described above or elsewhere herein.

In at least one embodiment, graphics multiprocessor 1034 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

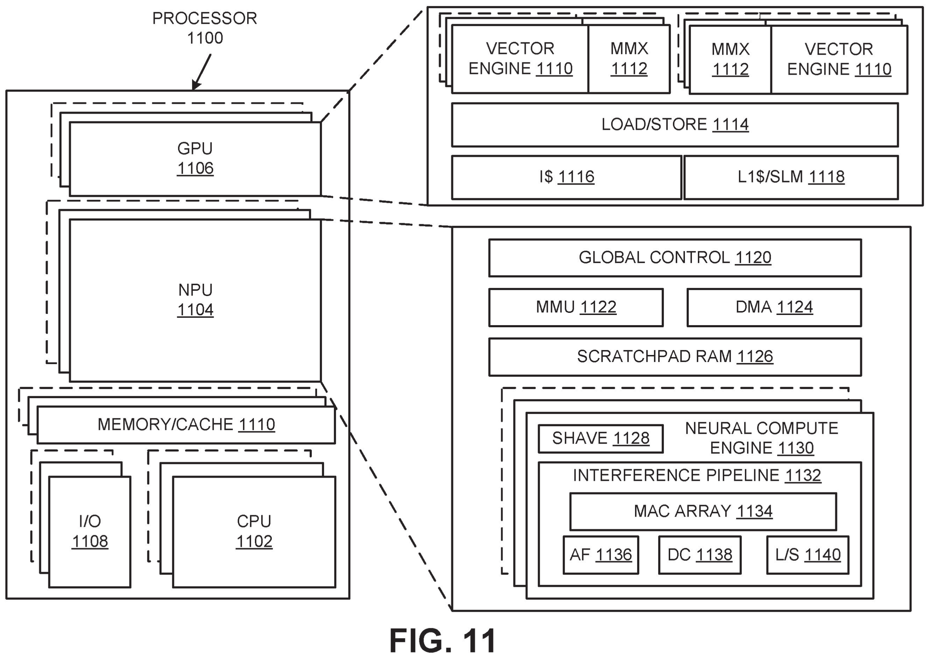

FIG. 11 shows a processor 1100, in accordance with at least one embodiment. Processor 1100 can include a processor with hybrid architecture (e.g., Lunar Lake or Meteor Lake) from Intel Corporation in Santa Clara, CA or another processor that shares at least some of the components described herein. Processor 1100 can include one or more Central Processing Unit(s) (CPU 1102), one or more Graphics Processing Unit(s) (GPU 1106), and/or one or more Neural Processing Unit(s) (NPU 1108) that can be, e.g., a dedicated AI accelerator that offloads artificial intelligence (AI) workloads from the CPU and GPU. Processor 1100 can use instructions that, if executed cause processor 1100 and/or any of its components to perform some or all of processes and techniques described elsewhere herein. Processor 1100 may include any number of memory and cache units 1110 to facilitate processing amongst the different components. Memory and cache 1110 on processor 1100 may include one or more levels of cache (e.g., L1, L2, L3, and/or last-level cache) and high-bandwidth memory (e.g., HBM2e or HBM3) in any combination. With respect to processor 1100 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of the processor (e.g., in cache and/or memory). A result of API(s) can then be stored in storage within or outside of the processor, including registers, DRAM, flash, SRAM, cache, or other memory. One or more of APIs described herein can include a call.

Processor 1100 can include compute engines as CPUs 1102 and can include any number of cores, such as, but not limited to, up to 16 cores/22 threads. Cores in CPU 1102 can include P-cores (Performance), E- cores (Efficient) & LP-E cores (Low-power Efficient). Performance-cores can be used for low latency single-threaded, compute-intensive workloads, while Efficient-cores can be used for multi-threaded, less compute-intensive workloads. Low-power Efficient cores can be used for scalable multithreaded performance and offloading background tasks. P-cores can be used for single & limited threading performance, whereas E- and LP-E cores can be used for multi-threaded throughput and power efficiency.

GPU 1106 can include any number of graphics engines, such as, but not limited to, Intel^{®} Arc^{™} graphics engines (Xe LPG) with 8 Xe cores (up to 128 Execution Units or EUs). As shown in FIG. 11, GPU 1106 can include vector engines 1110 and matrix engines 1112, that, for example, can run FP, INT, and matrix operation tasks all at the same time or separately or in batches. GPU 1106 can include a load/store unit 1114, as well as other memory, such as, but not limited to, an instruction cache (I$) 1116 and L1 cache/subsystem local memory (SLM) 1118 that can, e.g., store instructions to perform any of the operations described above or elsewhere herein.

NPU 1104 can include one or more Intel^{®} AI Boost built-in neural processing unit(s) (NPUs). NPU 1104 can be enumerated to the host processor as an integrated PCIe device. NPU 1104 can include one or more (e.g., two) Neural Compute Engine (NCE) tiles 1130. Each tile can be configured with any combination of, but not limited to, (e.g., 2000) Multiply Accumulate (MAC) Engines 1134, a Post Processing Engine (not shown), a AI DSP Processor (not shown), and memory (2 MB of dedicated SRAM) per tile as shown in FIG. 11. For general compute needs, Neural Compute Engines 1130 can include Streaming Hybrid Architecture Vector Engines (SHAVE) 1128 for high performance parallel computing, which can include DMA (Direct Memory Access) engines 1124 to shuttle the data between system memory DRAM (Dynamic Random Access Memory) 1126 and a software managed cache. Built-in device MMU (Memory Management Unit) 1122 plus IOMMU (Input-Output Memory Management Unit) (not shown) can support multiple simultaneous hardware contexts and provide security isolation between execution contexts as per MCDM (Microsoft Compute Driver Model) architecture. Processor 1100 can also include a media unit (not shown) that is included on or separately from the XCDs or other components of the processor to enable video playback and video processing of compressed or non-compressed data, such using HEVC, AV1, VP9 and AVC HW accelerated decode support and HEVC, VP9 and AVC HW accelerated encode support.

A Intel^{®} Thread Director, which includes firmware that is built into the processor, can prioritize and manage distribution of workloads, sending tasks to optimized cores. For example, Thread Director can tie P-cores, E-cores and/or LP-E cores (described above) together with task-scheduling capabilities and ability to send less-demanding tasks to the E-cores or LP-E cores. Intel^{®} Deep Learning Boost (Intel^{®} DL Boost) (not shown) can provide built in AI acceleration for training and inference workloads, and may include VNNI (for CPU) and DP4a (for GPU) instruction set support. This instruction set may be optimized with OpenVINO^{™} Toolkit and oneAPI to accelerate INT8 inferencing. A software stack, e.g., as described elsewhere herein, can be used to enable AI inference using OpenVINO^{™} toolkit. Processor 1100 can be configured to execute an application program, such as, but not limited to, a CUDA program.

In at least one embodiment, processor 1100 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

Processor 1100 can alternatively include a processor based on AI Engine Direct architecture from Qualcomm Corporation in Santa Clara, CA or another processor that shares at least some of the components described herein. that may include any number of NPUs, GPUs, CPUs and other related components, such as, but not limited to, NPU 1104 as a Hexagon NPU, GPU 1106 as a Adreno GPU, CPU 1102 as a Kryo or Qualcomm Oryon CPU, as well as a Qualcomm Sensing Hub (not shown) and a memory subsystem 1110, in any combination. Hexagon NPU 1104 can include a power rail a micro-tile inferencing unit, a hardware acceleration unit, a tensor unit, a scalar unit, and a vector unit (all not shown), which can have dedicated memory or share memory (e.g., cache or memory, such HBM3) for, e.g., storing instructions to perform any of the operations described above or elsewhere herein. Adreno GPU 1106 can provide graphics and parallel processing for AI in formats, such as, but not limited to, 32-bit floating point (FP32), 16-bit floating point (FP16), and 8-bit integer (INT8). Kryo or Qualcomm Oryon CPUs 1102 can perform AI workloads, and can handle contextualization for pervasive generative AI applications. CPU 1102 can also include an instruction fetch unit, a rename and retire unit, a memory management unit, a vector execution unit, an integer execution unit, and a load and store unit for processing and instruction management. With respect to processor 1100 and any of its components described above or elsewhere herein, one or more of APIs described herein can, for example, get compiled into instructions, which may be fetched by the instruction fetch unit, decoded by a processor decoder or equivalents, scheduled (e.g., in order or out of order) for execution by a scheduler or equivalents, executed by execution logic or equivalents, reordered, and then retired by the rename and retire unit. API(s) (and/or compiled instructions including API(s)) can be stored in any storage outside or inside of the processor (e.g., in cache and/or memory). Any number of CPU cores 1102 may be included in any number of CPU cluster(s) that can be coupled to memory and/or cache, such as, but not limited to a shared L2 cache. Memory can be separate or shared, e.g., CPU clusters of CPU cores 1102 can couple to memory subsystem 1110 that can include fabric, system level cache and any number of memory management units that can, for example, read and write memory (e.g., DRAM). Qualcomm Sensing Hub (not shown) includes micro NPUs, a power rail, and traditional sensors (a gyrometer, accelerometer, even a barometer) with voice and data streams. Memory subsystem 1110 can include memory and cache on processor 1100, which may include one or more levels of cache (e.g., L1, L2, L3, and/or last-level cache) and high-bandwidth memory (e.g., HBM2e or HBM3) in any combination, e.g., for storing information and/or instructions to perform any of the operations described above or elsewhere herein. All or some of the memory and/or cache in memory subsystem 1110 can be shared or used individually by any one or combinations of components (e.g., GPU 1106, NPU 1104, and CPU 1102) on processor 1100.

Qualcomm AI Engine 1100 may be programmed and controlled with an a software stack to perform some or all of the operations described herein, and include, e.g., a Qualcomm^{®} Neural Processing SDK for inferencing with versions for Android, Linux, and Windows. Developer libraries and services support the latest programming languages, virtual platforms, and compilers. At a lower level of the software stack, system software includes the basic real-time operating system (RTOS), system interfaces, and drivers. Software stack supports different operating systems, including Android, Windows, Linux, and QNX, and deployment and monitoring infrastructure like Prometheus, Kubernetes, and Docker. For direct cross-platform access to the GPU, OpenCL and DirectML may be supported. For the CPU, a LLVM compiler infrastructure optimizations enable accelerated and efficient AI inference. With respect to Qualcomm AI Engine 1100 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of the processor (e.g., in cache and/or memory). A result of API(s) can then be stored in storage within or outside of the processor, including registers, DRAM, flash, SRAM, cache, or other memory.

In at least one embodiment, processor 1100 or Qualcomm AI Engine 1100 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

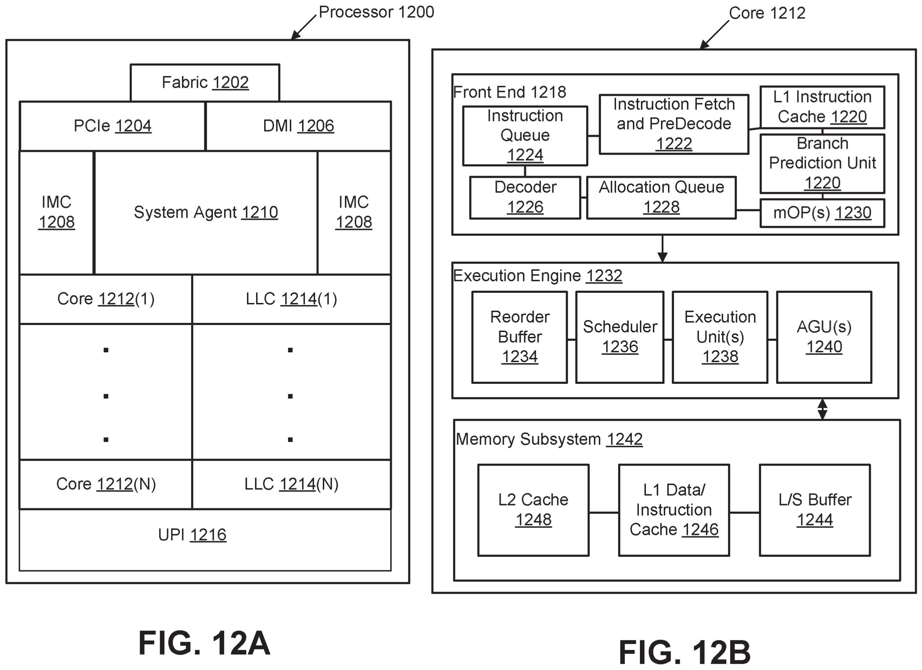

FIG. 12A illustrates a processor 1200, in accordance with at least one embodiment. Processor 1200 can include an processor with scalable family from Intel Corporation in Santa Clara, CA or another processor that shares at least some of the components described herein. Processor 1200 can include one or more cores 1212(1)-1212(N), where N is any integer greater than 1 that can perform the operations described elsewhere herein. Cores 1212(1)-1212(N) can be interlinked together using ring and/or mesh interconnects. With the mesh interconnects architecture, an array of vertical and horizontal communication paths may allow traversal from one core to another 1212(1)-1212(N) through a shortest path (hop on vertical path to correct row, and hop across horizontal path to correct column). For mesh interconnects, a die can house cores 1212(1)-1212(N) and can include a grid of converged mesh stops (CMS) that may be associated (e.g., 1:1) with cores 1212(1)-1212(N). Each core can be associated with one lower level cache (LLC) slice 1214(1)-1214(N), or cores 1212(1)-1212(N) can share cache, e.g., lower level cache. LLCs 1214(1)-1214(N) can be inclusive by incorporating blocks in higher level cache (e.g., L2 cache) or non-inclusive (having blocks that may be not present in higher level cache). Each core and LLC slice can include a Caching and Home Agent (CHA) (not shown) that can maintain cache coherency by providing scalability of resources across mesh interconnects for Intel^{®} Ultra Path Interconnect (Intel^{®} UPI 1216) cache coherency functionality. UPI 1216 can provide a coherent interconnect for scalable systems and can allow for multiple processors to share a single shared address space through links, such as, but not limited to, two or three UPI links per processor.

Processor 1200 can also include the System Agent 1210 that can house and/or perform various functionalities, such as, but not limited to, memory management, display functions, and/or input/output (I/O) functions. For example, processor 1200 can include one or more integrated memory controller(s) (IMC) 1208. IMC 1208 can control and manage memory, such as, but not limited to, different memory types e.g., DDR ram, like DDR4 or others described elsewhere herein. System Agent 1210 can include a display controller (not shown) to support display(s). System Agent 1210 can also incorporate PCIe 1204 (e.g., up to 20 lanes of PCIe), e.g., that can connect with an external dedicated graphics hookup over DMI bus (e.g., Intel's DMI 3.0 bus) 1206. System Agent 1210 can include an Image Processing Unit (IPU) (not shown) which incorporates an image signal processor (ISP) on-die. Fabric 702 can provide scalability for connecting

FIG. 12B illustrates components within core 1212, in accordance with at least one embodiment. Core 1212 can include front-end 1218, back-end or execution engine 1232, and memory subsystem 1242. Front-end 1218 can provide execution engine 1232 with operations (e.g., operations described elsewhere herein) by decoding instructions stored in memory. For example, front-end 1218 can include a micro-operations (µOps) cache path and/or a legacy path, along with branch prediction unit 1220 that can determine paths instructions. A legacy path for instructions may include fetching variable-length (e.g., x86) instructions from L1 instruction cache, queuing the instructions in instruction queue 1224, and decoding instructions using decoder 1226 into µOps that can be provided to allocation queue 1228. In the alternative, a µOPs cache path may include a cache containing already decoded µOps (µOps 1230) that can be sent to allocation queue 1228. Allocation queue 1228 can perform as an interface between front-end 1218 and execution engine 1232, and can provide instructions to execution engine 1232. One or more of API(s) described herein can, for example, get compiled into instructions that can be stored, processed, and executed by front-end 1218, execution engine 1232, and stored in memory subsystem 1242.

Execution engine 1232 can receive micro-operations into reorder buffer 1234, which can register allocation, rename, and retire µOPs. From the reorder buffer, µOPs can be sent to scheduler 1236 that can be connected one or more different execution units 1238. Execution units 1238 can perform, e.g., basic arithmetic logic unit (ALU) operations, multiplication, division, and/or more complex operations, such as, but not limited to, various vector operations. Scheduler 1236 may manage queuing µOPs for one or more of execution units 1238 depending, e.g., on operations needed to be performed.

Memory subsystem 1242 can process load and store requests as well as ordering operations. For example, µOPs may relate to memory access (e.g. load and store), and those can be sent on dedicated scheduler ports that can perform those memory operations. Store and load operations, for example, can be sent to load and store buffer(s) 1244. Memory subsystem 1242 can also include shared or separate L1 data and instruction cache 1246, as well as L2 cache 1248 that can be used and shared by L1 data and instruction cache 1246. As described above for FIG. 12A, each core 1212 can be connected to a slice of a third level of cache (e.g., LLC 1214) that can be shared by all core 1212.

In at least one embodiment, processor 1200 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

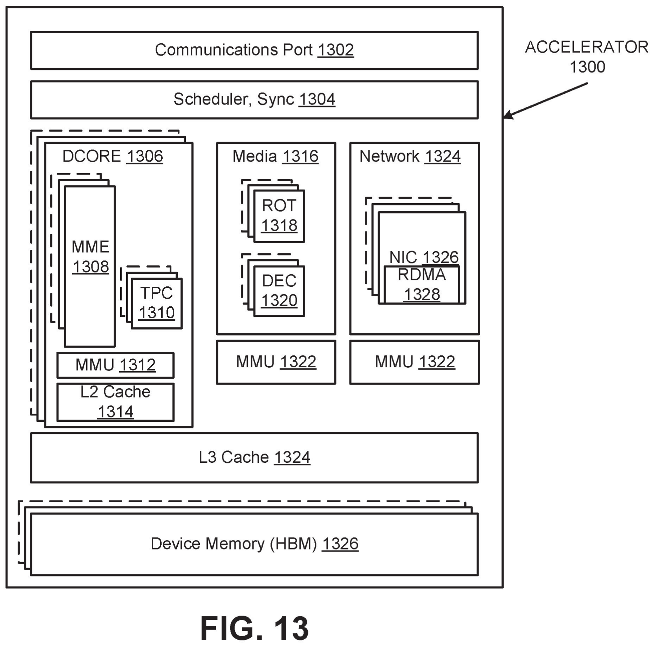

FIG. 13 illustrates an AI accelerator 1300, in accordance with at least one embodiment. Processor 1300 can include a processor with AI accelerator architecture from Intel Corporation in Santa Clara, CA or another processor that shares at least some of the components described herein. AI accelerator 1300 may use instructions that, if executed by AI accelerator 1300, cause AI accelerator 1300 to perform some or all of processes and techniques described elsewhere herein. For example, with respect to AI accelerator 1300 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of the processor (e.g., in cache and/or memory). A result of API(s) can then be stored in storage within or outside of the processor, including registers, DRAM, flash, SRAM, cache, or other memory. AI accelerator 1300 may include one or more compute dies that can include homogeneous or heterogeneous processors. Compute dies may include one or more central processing units (CPU), one or more graphics processing units (GPU), or combinations of both.

In at least one embodiment, compute dies may include compute engines to perform AI computations. In at least one embodiment, AI accelerator 1300 compute dies may be split into any number of (e.g., four) clusters that may be referred to as a DCORE (Deep Learning Core) 1306 and contain any number of Matrix Multiplication Engines (MMEs) 1308, Tensor Processor Cores (TPCs) 1310, and L2 Cache 1314, in any combination. MME(s) 1308 can perform operations that use Matrix Multiplication, like fully connected layers, convolutions and batched-General Matrix Multiplications (GEMMs). MMEs 1308 may be equipped with Multiply-Accumulate Units (MACs) (not shown) that, for example, may perform General Matrix Multiplication (GEMM) operations, such as, but not limited to, an AxB multiplication that involves generating tensor C[NxM] from two input tensors, A[NxK] and B[KxN]. MME(s) 1308 may be programmed with the array dimensions, locations, data types, and various execution operands. MME(s) 1308 can retrieve tensors A and B from memory, pulling them into its streaming buffers for the matrix multiplication to be performed in parallel by the MACs. MME(s) 1308 may push tensor C back to memory upon completion. TPC(s) 1310 may include any number of scalar units for performing scalar operations, any number of vector units for performing vector operations, any number of register files or local memory units (e.g., a vector local memory), and load and store components for instructions, which can be coupled to memory or cache (e.g., HBM, L3 cache and/or L2 cache) (all not shown). TPCs can support different types of parallel processing, e.g., Very Long Instruction Word (VLIW) Single-Instruction Multiple-Data (SIMD) that supports data types, such as, but not limited to, FP32, BF16, FP16 & FP8 (both E4M3 and E5M2), UINT32, INT32, UINT16, INT16, UINT8 and INT8 datatypes. Any number of compute dies may be connected through an interconnect. An interconnect among the compute dies can be over an interposer bridge that, e.g., is transparent to software.

Memory on AI Accelerator 1300 may include one or more levels of cache (e.g., L1, L2, L3, and/or last-level cache) and high-bandwidth memory (e.g., HBM2e or HBM3) in any combination. Memory and/or cache systems can be unified or separate. Compute dies of AI accelerator 1300 may include on-die memory that includes one or more levels (e.g., two-levels) of cache. On-die SRAM or other memory described elsewhere herein can be used as a uniformly accessible last-level cache (L3) or split to slices of L2 cache that may be accessible to groups of MMEs 1308 and TPCs 1310. Using the on-die memory as L2 or L3 cache can be fully configurable by software, which dynamically may decide per I/O tensor its optimal cache allocation. AI Accelerator 1300 may include one or more Memory Management Units (MMUs) 1322 for managing memory, such as allowing AI accelerator 1300 memory subsystem to operate in a virtual space when accessing VRAM.

AI accelerator 1300 may include a communications port (e.g., a PCIe Gen5 X16 port) 1302 for communicating with a host and Scheduling and Synchronization Unit 1304. AI accelerator 1300 may include Media Unit 1316 that may include any number or combinations of Media Decoder Engines (DECs) 1320 and Rotator Engines (ROT) 1318. AI accelerator 1300 may include a network unit 1324 that may include any number or combinations of network ports 1326 and the accompanied RDMA Engine(s) 1328, L2 Cache, and memory (e.g., HBM2e or HBM3) stacks. AI accelerator 1300 can incorporate a programmable Control Path entity (not shown) to manage the parallel and efficient execution of various engines. Control Path can include Submission Queues (SQs) that may be issued by the runtime system, Completion Queues (CQs) that may be used for job completion reporting, a Programmable Scheduling Mechanism that may be utilized for task scheduling, a Programmable Hardware Synchronization Mechanism or 'Sync Manager (SM)' that may be used for hardware synchronization, a Programmable Interrupt Service Mechanism or 'Interrupt Manager (INTR)' that can enable the passing of asynchronous events to drivers.

AI accelerator 1300 may include media decoding units that support Video Formats, such as, but not limited to, HEVC, Progressive H.264, SVC base layer, MVC, VP9, JPEG, Progressive JPEG. AI accelerator 1300 may support post processing of decoded media streams, such as, but not limited to, image down-scaling (resizing the image), vertical and horizontal scaling at different scaling ratios, Image up-scaling, Image cropping, bilinear scaling, and Lancos scaling. AI accelerator 1300 may implement two post processing channels per decoder unit, one with scalar (up and down) and one just to output the original image. AI accelerator 1300 may include a hardware rotator engine that performs the following transformations of an input image: 2D rotation, 3D rotation, Projection, distorting and undistorting images, resampling input data at user-defined coordinates, and rescaling.

RDMA 1328 over Converged Ethernet on AI accelerator 1300 may enable scaling from a single node (i.e., a single AI Accelerator 1300 to hundreds or thousands of nodes or AI Accelerators 1300). NW Subsystem 1324 can include an Intel^{®} Gaudi^{®} Communication Library (IGCL), a master conductor that orchestrates data movement, and a programable scheduling mechanism that can enable smooth activation of engines while maintaining task dependencies. A accelerator networking sub-system can include Gigabit Ethernet NIC ports 1326, a Layer2 MAC (not shown), and RDMA Engines 1328. AI Accelerator 1300 can include Aggregation Engines for performing summing activities. All engines in processor 1300 can operate in parallel, e.g., MME(s) 1308, TPC(s) 1310 and NIC(s) 1326 can all work at the same time. There can be dependency between operations running on different engines, e.g., the output of one engine can be used as the input of another engine, and/or MME, TPC and NIC can be scheduled to run in parallel. When one engine has completed its executing operation, another engine can be scheduled to start working on the next operation (immediately upon readiness of its inputs).

AI Accelerator 1300 can be operated and controlled using software layer 1328 that may include low-level components, such as, but not limited to, a graph compiler, an automatic kernel fuser and a library of precompiled kernels, as well as integration to AI ecosystems, such as, but not limited to, PyTorch, DeepSpeed, Hugging Face, vLLM, Ray and more, or as described elsewhere herein with respect to software and programming platforms. Software layer 1328 may include implementations of algorithms, such as, but not limited to, Paged Attention, Flash Attention and more. Software layer 1328 may generate optimized binary code that implements the given model topology, such as, but not limited to, performing operator fusion, data layout management, parallelization, pipelining and memory management, and graph-level optimizations.

In at least one embodiment, AI accelerator 1300 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

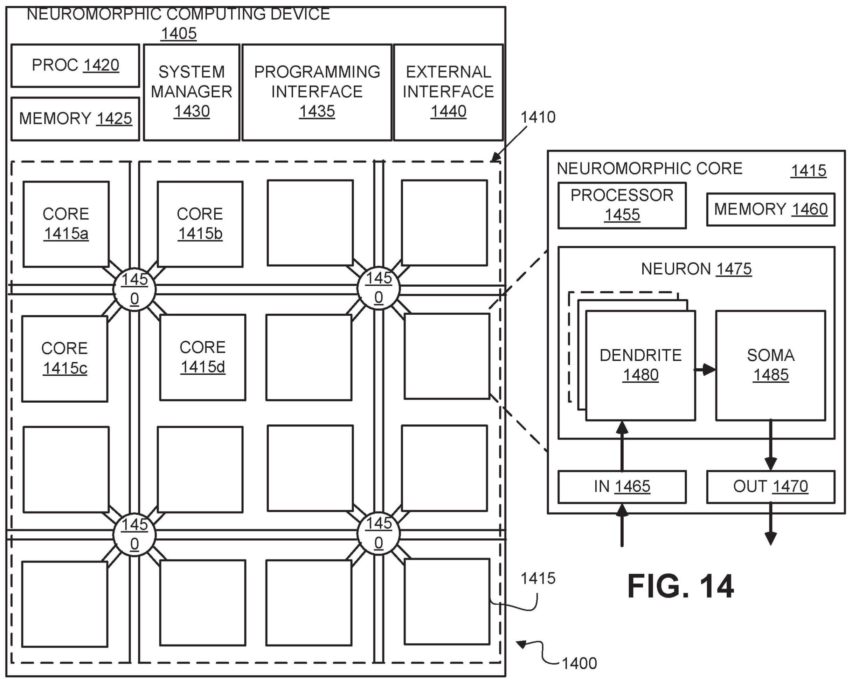

A neuromorphic computing system is described that adopts a multicore architecture where each core houses the computing elements including neurons, synapses with on-chip learning capability, and local memory to store synaptic weights and routing tables. FIG. 14 is a simplified block diagram 1400 illustrating an example of at least a portion of such a neuromorphic computing device 1405, in accordance with at least one embodiment. Neuromorphic computing device 1405 can include a neuromorphic processor from Intel Corporation in Santa Clara, CA or another processor that shares at least some of the components described herein. As shown in this example, a device 1405 may be provided with a network 1410 of multiple neural network cores interconnected by an on-device network such that multiple different connections may be potentially defined between the cores. For instance, a network 1410 of spiking neural network cores may be provided in the device 1405 and may each communicate via short packetized spike messages sent from core to core over the network channels. Each core (e.g., 1415) may possess processing and memory resources and logic to implement some number of primitive nonlinear temporal computing elements, such as, but not limited to, multiple (e.g., 1000+) distinct artificial neurons (referred to herein as "neurons"). For instance, each core may be capable of concurrently implementing multiple neurons such that the collection of neuromorphic cores may implement many multiples of neurons using the device. With respect to neuromorphic computing device 1405 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of the processor (e.g., in cache and/or memory). A result of API(s) can then be stored in storage within or outside of the processor, including registers, DRAM, flash, SRAM, cache, or other memory equivalents.

Continuing with the example of FIG. 14, a neuromorphic computing device 1405 may additionally include a processor 1420 and system memory 1425 to implement one or more components to manage and provide functionality of the device. For instance, a system manager 1430 may be provided to manage global attributes and operations of the device (e.g., attributes affecting the network of cores 1410, multiple cores in the network, interconnections of the device 1405 with other devices, manage access to global system memory 1425, among other potential examples). In one example, a system manager 1430 may manage the definition and provisioning of a specific routing tables to the various routers in the network 1410, orchestration of a network definition and attributes (e.g., weights, decay rates, etc.) to be applied in the network, core synchronization and time multiplexing management, routing of inputs to the appropriate cores, among other potential functions.

As another example, a neuromorphic computing device 1405 may additionally include a programming interface 1435 through which a user or system may specify a neural network definition to be applied (e.g., through a routing table and individual neuron properties) and implemented by the mesh 1410 of neuromorphic cores. A software-based programming tool may be provided with or separate from the neuromorphic computing device 1405 through which a user may provide a definition for a particular neural network to be implemented using the network 1410 of neuromorphic cores. The programming interface 1435 may take the input of the programmer to then generate corresponding routing tables and populate local memory of individual neuromorphic cores (e.g., 1415) with the specified parameters to implement a corresponding, customized network of artificial neurons implemented by the neuromorphic cores.

In some cases, a neuromorphic computing device 1405 may advantageously interface with and interoperate with other devices, including general purpose computing devices, to realize certain applications and use cases. Accordingly, external interface logic 1440 may be provided in some cases to communicate (e.g., over one or more defined communication protocols) with one or more other devices. An external interface 1440 may be utilized to accept input data from another device or external memory controller acting as the source of the input data. An external interface 1440 may be additionally or alternatively utilized to allow results or output of computations of a neural network implemented using the neuromorphic computing device 1405 to be provided to another device (e.g., another general purpose processor implementing a machine learning algorithm) to realize additional applications and enhancements, among other examples.

As shown in FIG. 14, a network 1410 of multiple neural network cores interconnected by an on-device network is shown illustrating a portion of a network fabric interconnecting multiple neuromorphic cores (e.g., 1415 a-d). For instance, a number of neuromorphic cores (e.g., 1415 a-d) may be provided in a mesh, with each core being interconnected by a network including a number of routers (e.g., 1450). In one implementation, each neuromorphic core (e.g., 1415 a-d) may be connected to a single one of the routers (e.g., 1450) and each of the routers may be connected to at least one other router (as shown at 1410 in FIG. 14). As an example, in one particular implementation, four neuromorphic cores (e.g., 1415 a-d) may be connected to a single router (e.g., 1450) and each of the routers may be connected to two or more other routers to form a manycore mesh, allowing each of the neuromorphic cores to interconnect with each other neuromorphic core in the device. Moreover, as each neuromorphic core may be configured to implement multiple distinct neurons, the router network of the device may similarly enable connections, or artificial synapses (or, simply, "synapses"), to be defined between any two of the potentially many (e.g., 30,000+) neurons defined using the network of neuromorphic cores provided in a neuromorphic computing device.

FIG. 14 shows a block diagram illustrating internal components of one example implementation of a neuromorphic core 1415. In one example, a single neuromorphic core may implement some number of neurons (e.g. 1024) that share architectural resources of the neuromorphic core in a time-multiplexed manner. In one example, each neuromorphic core 1415 may include a processor block 1455 capable of performing arithmetic functions and routing in connection with the realization of a digitally implemented artificial neuron, such as, but not limited to, explained herein. Each neuromorphic core 1415 may additionally provide local memory in which a routing table may be stored and accessed for a neural network, accumulated potential of each soma of each neuron implemented using the core may be tracked, parameters of each neuron implemented by the core may be recorded, among other data and usage. Components, or architectural resources, of a neuromorphic core 1415 may further include an input interface 1465 to accept input spike messages generated by other neurons on other neuromorphic cores and an output interface 1470 to send spike messages to other neuromorphic cores over the mesh network. In some instances, routing logic for the neuromorphic core 1415 may be at least partially implemented using the output interface 1470. Further, in some cases, a core (e.g., 1415) may implement multiple neurons within an example SNN and some of these neurons may be interconnected. In such instances, spike messages sent between the neurons hosted on the particular core may forego communication over the routing fabric of the neuromorphic computing device and may instead by managed locally at the particular neuromorphic core.

Each neuromorphic core may additionally include logic to implement, for each neuron 1475, an artificial dendrite 1480 and an artificial soma 1485 (referred to herein, simply, as "dendrite" and "soma" respectively). The dendrite 1480 may be a hardware-implemented process that receives spikes from the network. The soma 1485 may be a hardware-implemented process that receives each dendrite's accumulated neurotransmitter amounts for the current time and evolves each dendrite and soma's potential state to generate outgoing spike messages at the appropriate times. A dendrite 1480 may be defined for each connection receiving inputs from another source (e.g., another neuron). In one implementation, the dendrite process 1480 may receive and handle spike messages as they serially arrive in time-multiplexed fashion from the network. As spikes are received, the neuron's activation (tracked using the soma 1485 (and local memory 1460)) may increase. When the neuron's activation exceeds a threshold set for the neuron 1475, the neuron may generate a spike message that is propagated to a fixed set of fanout neurons via the output interface 1470. The network distributes the spike messages to all destination neurons, and in response those neurons, in turn, may update their activations in a transient, time-dependent manner, and so on, potentially causing the activation of some of these destination neurons to also surpass corresponding thresholds and trigger further spike messages, as in real biological neural networks.

As noted above, a neuromorphic computing device may reliably implement a spike-based model of neural computation. Such models may also be referred to as Spiking Neural Networks (SNNs). In addition to neuronal and synaptic state, SNNs also incorporate the concept of time. For instance, in an SNN, communication occurs over event-driven action potentials, or spikes, that convey no explicit information other than the spike time as well as an implicit source and destination neuron pair corresponding to the transmission of the spike. Computation occurs in each neuron as a result of the dynamic, nonlinear integration of weighted spike input. In some implementations, recurrence and dynamic feedback may be incorporated within an SNN computational model. Further, a variety of network connectivity models may be adopted to model various real world networks or relationships, including fully connected (all-to-all) networks, feed-forward trees, fully random projections, "small world" networks, among other examples. A homogeneous, two-dimensional network of neuromorphic cores, such as, but not limited to, shown in the example of FIG. 14 may advantageously supports all of these network models. As all cores of the device may be connected, all neurons defined in the cores may be therefore also fully connected through some number of router hops. The device may further include fully configurable routing tables to define a variety of different neural networks by allowing each core's neurons to distribute their spikes to any number of cores in the mesh to realize fully arbitrary connectivity graphs.

In an improved implementation of a system capable of supporting SNNs, such as, but not limited to, the very large scale integration (VLSI) hardware device illustrated in the example of FIG. 9, high speed and reliable circuits may be provided to implement SNNs to model the information processing algorithms as employed by the brain, but in a more programmable manner. For instance, while a biological brain can only implement a specific set of defined behaviors, as conditioned by years of development, a neuromorphic processor device may provide the capability to rapidly reprogram all neural parameters. Accordingly, a single neuromorphic processor may be utilized to realize a broader range of behaviors than those provided by a single slice of biological brain tissue. This distinction may be realized by adopting a neuromorphic processor with neuromorphic design realizations that differ markedly from those of the neural circuits found in nature.

As an example, a neuromorphic processor may utilize time-multiplexed computation in both the spike communication network and the neuron machinery of the device to implement SNNs. Accordingly, the same physical circuitry of the processor device may be shared among many neurons to realize higher neuron density. With time multiplexing, the network can connect N cores with O(N) total wiring length, whereas discrete point-to-point wiring would scale as O(N2), realizing a significant reduction in wiring resources to accommodate planar and non-plastic VLSI wiring technologies, among other examples. In the neuromorphic cores, time multiplexing may be implemented through dense memory allocation, for instance, using Static Random Access Memory (SRAM), with shared buses, address decoding logic, and other multiplexed logic elements. State of each neuron may be stored in the processor's memory, with data describing each neuron state including state of each neuron's collective synapses, all currents and voltages over its membrane, among other example information (such as, but not limited to, configuration and other information).

A neuromorphic processor may adopt a "digital" implementation that diverts from other processors adopting more "analog" or "isomorphic" neuromorphic approaches. For instance, a digital implementation may implement the integration of synaptic current using digital adder and multiplier circuits, as opposed to the analog isomorphic neuromorphic approaches that accumulate charge on capacitors in an electrically analogous manner to how neurons accumulate synaptic charge on their lipid membranes. The accumulated synaptic charge may be stored, for instance, for each neuron in local memory of the corresponding core. Further, at the architectural level of an example digital neuromorphic processor, reliable and deterministic operation may be realized by synchronizing time across the network of cores such that any two executions of the design, given the same initial conditions and configuration, will produce identical results. Asynchrony may be preserved at the circuit level to allow individual cores to operate as fast and freely as possible, while maintaining determinism at the system level. Accordingly, the notion of time as a temporal variable may be abstracted away in the neural computations, separating it from the "wall clock" time that the hardware utilized to perform the computation. Accordingly, in some implementation, a time synchronization mechanism may be provided that globally synchronizes the neuromorphic cores at discrete time intervals. The synchronization mechanism allows the system to complete a neural computation as fast as the circuitry allows, with a divergence between run time and the biological time that the neuromorphic system models.

In operation, the neuromorphic mesh device may begin in an idle state with all neuromorphic cores inactive. As each core asynchronously cycles through its neurons, it generates spike messages that the mesh interconnect routes to the appropriate destination cores containing all destination neurons. As the implementation of multiple neurons on a single neuromorphic core may be time-multiplexed, a time step may be defined in which all spikes involving the multiple neurons may be processed and considered using the shared resources of a corresponding core. As each core finishes servicing its neurons for a respective time step, the cores may, in some implementations, communicate (e.g., using a handshake) with neighboring cores using synchronization messages to flush the mesh of all spike messages in flight, allowing the cores to safely determine that all spikes have been serviced for the time step. At that point all cores may be considered synchronized, allowing them to advance their time step and return to the initial state and begin the next time step.

Given this context, and as introduced above, a device (e.g., 1405) implementing a mesh 1410 of interconnected neuromorphic cores may be provided, with the core implementing potentially multiple artificial neurons capable of being interconnected to implement an SNN. Each neuromorphic core (e.g., 1415) may provide two loosely coupled asynchronous processes: an input dendrite process (e.g., 1480) that receives spikes from the network and applies them to the appropriate destination dendrite compartments at the appropriate future times, and an output soma process (e.g., 1485) that receives each dendrite compartment's accumulated neurotransmitter amounts for the current time and evolves each dendrite and soma's membrane potential state, generating outgoing spike messages at the appropriate times (e.g., when a threshold potential of the soma has been reached). Note that, from a biological perspective, the dendrite and soma names used here only approximate the role of these functions and should not be interpreted too literally.

In at least one embodiment, neuromorphic computing device 1405 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

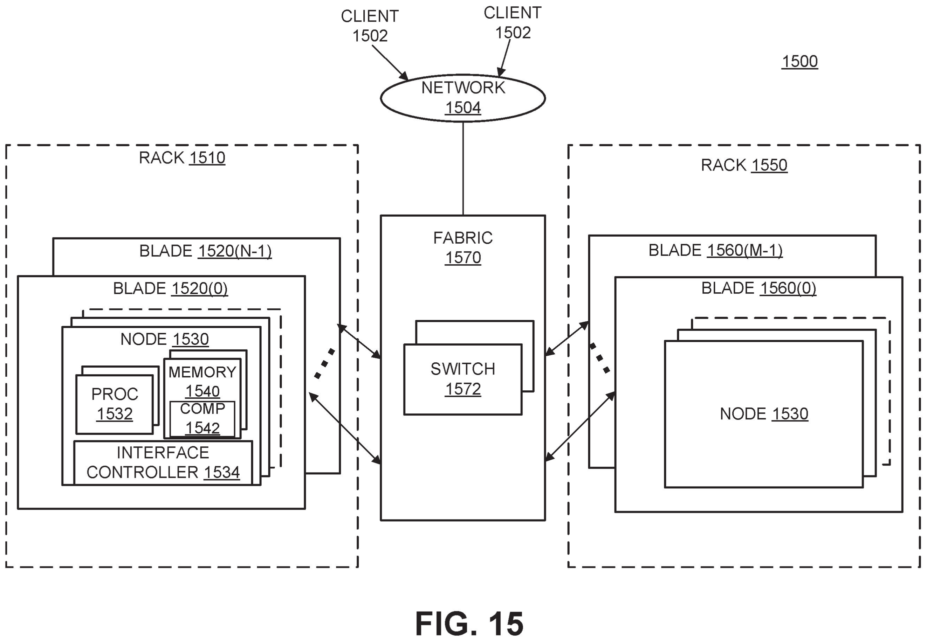

FIG. 15 is a block diagram of an embodiment of a multi-node network in which remote memory computation can be implemented, in accordance with any embodiment. System 1500 may represent a network of nodes described herein that can, e.g., be used to perform some or all of the operations described herein. System 1500 can represent a data center. System 1500 may represent a server farm. System 1500 may represent a data cloud or a processing cloud. System 1500 can represent a supercomputer. System 15 may include tens, hundreds, or thousands of nodes. The nodes of system 1500 may include processors, such as, but not limited to, central processing units (CPUs), graphics processing units (GPUs), or any combination of processors described herein, such as, but not limited to, other processors in FIGs. 9-21. With respect to any of the processors in system 1500 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of the processor (e.g., in cache and/or memory). A result of API(s) can then be stored in storage within or outside of the processor, including registers, DRAM, flash, SRAM, cache, or other memory equivalents. System 1500 may include over nine thousand nodes, with each node including two Intel Xeon Max processors, six Intel Max series GPUs and a unified memory architecture, such as, but not limited to, that used in the Intel Aurora Supercomputer from the Intel Corporation in Santa Clara, CA or another supercomputer that shares at least some of the components described herein.

One or more clients 1502 make requests over network 1504 to system 1500. Network 1504 represents one or more local networks, or wide area networks, or a combination. Clients 1502 can be human or machine clients, which generate requests for the execution of operations by system 1500. System 1500 executes applications or data computation tasks requested by clients 1502.

System 1500 can include one or more racks, which represent structural and interconnect resources to house and interconnect multiple computation nodes. Rack 1510 can include multiple nodes 1530. rack 1510 may host multiple blade components 1520. Hosting can refer to providing power, structural or mechanical support, and interconnection. Blades 1520 can refer to computing resources on printed circuit boards (PCBs), where a PCB houses the hardware components for one or more nodes 1530. Blades 1520 may or may not include a chassis or housing or other "box" other than that provided by rack 1510. Blades 1520 may include housing with exposed connector to connect into rack 1510. System 1500 may or may not include rack 1510, and each blade 1520 can include a chassis or housing that can stack or otherwise reside in close proximity to other blades and allow interconnection of nodes 1530. System 1500 may include 10,624 compute blades, which include 63,744 Intel Max Series GPUs and 21,248 Intel Xeon Max CPUs across 166 racks.

System 1500 can include fabric 1570, which represents one or more interconnectors for nodes 1530. Fabric 1570 can include multiple switches 1572 or routers or other hardware to route signals among nodes 1530. Additionally, fabric 1570 can couple system 1500 to network 1504 for access by clients 1502. In addition to routing equipment, fabric 1570 can be considered to include the cables or ports or other hardware equipment to couples nodes 1530 together. Fabric 1570 can have one or more associated protocols to manage the routing of signals through system 1500. The protocol or protocols is at least partly dependent on the hardware equipment used in system 1500.

As illustrated, rack 1510 can include N blades 1520. In addition to rack 1510, system 1500 can include rack 1550. As illustrated, rack 1550 may include M blades 1560. M is not necessarily the same as N; thus, it will be understood that various different hardware equipment components could be used, and coupled together into system 1500 over fabric 1570. Blades 1560 can be the same or similar to blades 1520. Nodes 1530 can be any type of node as described herein, and may not be necessarily all the same type of node. System 1500 is not limited to being homogenous, nor is it limited to not being homogenous.

A node in blade 1520(0) is illustrated in detail. However, other nodes in system 1500 can be the same or similar. At least some nodes 1530 may be computation nodes, with processor 1532 and memory 1540. A computation node refers to a node with processing resources (e.g., one or more processors) that executes an operating system and can receive and process one or more tasks. At least some nodes 1530 can include storage server nodes with a server as processing resources 1532 and memory 1540. A storage server refers to a node with more storage resources than a computation node, and rather than having processors for the execution of tasks, a storage server includes processing resources to manage access to the storage nodes within the storage server.

Node 1530 can include interface controller 1534, which can represent logic to control access by node 1530 to fabric 1570. Logic can include hardware resources to interconnect to the physical interconnection hardware. Logic can include software or firmware logic to manage the interconnection. Interface controller 1534 can be or includes a host fabric interface, which can be a fabric interface in accordance with any embodiment described herein.

Node 1530 may include memory subsystem 1540. Memory 1540 can include memory computation resources (comp) 1542, which represent one or more capabilities by memory 1540 to perform memory computations. System 1500 enables remote memory operations, such as, but not limited to, the operations described elsewhere herein. Thus, nodes 1530 can request memory computations by remote nodes, where data for the computation remains local to the executing node instead of being sent over fabric 1570 or instead of being sent from the memory to the fabric interface. In response to execution of the memory computation, the executing node can provide a result to the requesting node.

Processor 1532 can include one or more separate processors. Each separate processor can include a single processing unit, a multicore processing unit, or a combination. The processing unit can be a primary processor such as, but not limited to, a CPU (central processing unit), a peripheral processor such as, but not limited to, a GPU (graphics processing unit), or a combination. Memory 1540 can be or include memory devices and a memory controller.

Reference to memory devices can apply to different memory types. Memory devices generally refer to volatile memory technologies. Volatile memory is memory whose state (and therefore the data stored on it) is indeterminate if power is interrupted to the device. Nonvolatile memory refers to memory whose state is determinate even if power is interrupted to the device. Dynamic volatile memory requires refreshing the data stored in the device to maintain state. One example of dynamic volatile memory includes DRAM (dynamic random access memory), or some variant such as, but not limited to, synchronous DRAM (SDRAM). A memory subsystem as described herein may be compatible with a number of memory technologies, such as, but not limited to, DDR3 (dual data rate version 3, original release by JEDEC (Joint Electronic Device Engineering Council) on June 27, 2007, currently on release 21), DDR4 (DDR version 4, initial specification published in September 2012 by JEDEC), DDR4E (DDR version 4, extended, currently in discussion by JEDEC), LPDDR3 (low power DDR version 3, JESD209-3B, Aug 2013 by JEDEC), LPDDR4 (LOW POWER DOUBLE DATA RATE (LPDDR) version 4, JESD209-4, originally published by JEDEC in August 2014), WIO2 (Wide I/O 2 (WideI02), JESD229-2, originally published by JEDEC in August 2014), HBM (HIGH BANDWIDTH MEMORY DRAM, JESD235, originally published by JEDEC in October 2013), DDR5 (DDR version 5, currently in discussion by JEDEC), LPDDR5 (currently in discussion by JEDEC), HBM2 (HBM version 2), currently in discussion by JEDEC), or others or combinations of memory technologies, and technologies based on derivatives or extensions of such specifications.

In addition to, or alternatively to, volatile memory, in one embodiment, reference to memory devices can refer to a nonvolatile memory device whose state is determinate even if power is interrupted to the device. In one embodiment, the nonvolatile memory device is a block addressable memory device, such as, but not limited to, NAND or NOR technologies. Thus, a memory device can also include a future generation nonvolatile devices, such as, but not limited to, a three dimensional crosspoint (3DXP) memory device, other byte addressable nonvolatile memory devices, or memory devices that use chalcogenide phase change material (e.g., chalcogenide glass). In one embodiment, the memory device can be or include multi-threshold level NAND flash memory, NOR flash memory, single or multi-level phase change memory (PCM) or phase change memory with a switch (PCMS), a resistive memory, nanowire memory, ferroelectric transistor random access memory (FeTRAM), magnetoresistive random access memory (MRAM) memory that incorporates memristor technology, or spin transfer torque (STT)-MRAM, or a combination of any of the above, or other memory.

In at least one embodiment, system 1500 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

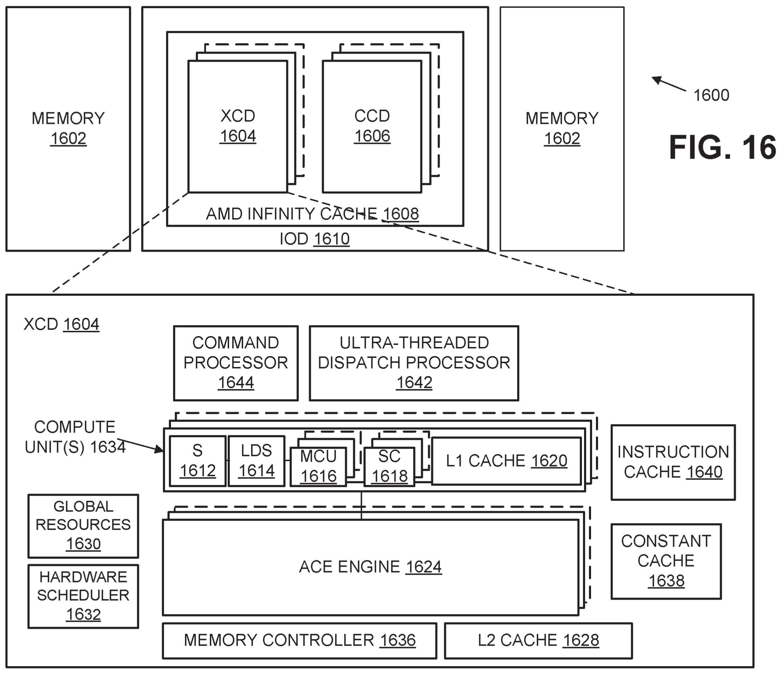

FIG. 16 illustrates accelerated processing unit 1600, in accordance with at least one embodiment. Accelerated processing unit 1600 can include a processor based on CDNA architecture from AMD Corporation in Santa Clara, CA or another processor that shares at least some of the components described herein. Accelerated processing unit 1600 can include one or more accelerator complex dies (XCDs) 1604 for performing operations described elsewhere herein, such as, but not limited to, graphics processing and/or parallel processing as well as computations with instruction-level parallelism, including support for a broad range of precisions (INT8, FP8, BF16, FP16, TF32, FP32, and FP64) and sparse matrix data (i.e. sparsity). XCDs may, in some instances, be referred to as Graphics Compute Dies (GCDs). Accelerated processing unit 1600 can include one or more complex compute dies (CCDs) 1606 for performing operations described elsewhere herein, such as, but not limited to, those operations performed by host processors. CCDs may, in some instances, be referred to as core complexes or CCXs, such as, but not limited to, CCXs used in AMD Ryzen processors. XCDs and CCDs can share any type of cache or memory (e.g., one or more memory units 1602), or have cache or memory allocated to each XCD or CCD or groups of XCDs or CCDs. For example, on-package AMD Infinity Fabric connects XCDs and CCD into shared AMD Infinity Cache 1608 and, in some embodiments, high-bandwidth memory (e.g., HMB3). Accelerated processing unit 1600 can include an AMD MI300a processor that includes three CPU chiplets (or CCDs) and six accelerator chiplets (XCDs) on top of four input-output dies (IODs) that may be layered on a piece of silicon that links them together (e.g., via AMD Infinity Fabric) to eight stacks of high-bandwidth DRAM that ring the superchip. An AMD MI300x processor substitutes the CCDs for two more XCDs, for an accelerator-only system.

Accelerated processing unit 1600 can include one or more input/output (I/O) interfaces. For example, XCDs 1604 and CCDs 1606 can be together on one or more input-output dies (IODs) 1610 that can include one or more I/O interfaces. IODs 1610 can include of any number and type of I/O interfaces (e.g., PCI , PCI-Extended ("PCI-X"), PCIe, gigabit Ethernet ("GBE"), USB, etc.). Various types of peripheral devices can be coupled to I/O interfaces 1670. I/O interfaces from IODs 1610 can also be used for connected one or more accelerated processing units 1600, e.g., in a server architecture.

Accelerated processing unit 1600 can include one or more memory units 1602 for storing instructions and other information used to perform operations described elsewhere herein. Memory units 1602 can include any volatile memory, such as, but not limited to, memory types described elsewhere herein and can include, e.g., high-bandwidth memory (e.g., HMB3) or high-bandwidth DRAM. Memory associated with accelerated processing unit 1600 (e.g., memory units 1602) can include system memory that can be used, for example, for commands, instructions and constants, and inputs and outputs. Memory units 1602 can also include device memory that can be used as storage and, for example, for commands, instructions and constants, and inputs and outputs, as return buffer(s) and for private data. Memory units 1602 can be linked to one or more IODs 1610. In at least on embodiment, L1 cache 1620 starts a memory hierarchy that includes shared L2 cache 1628, e.g., within the XCDs. AMD Infinity Cache^{™}, which is a last level cache (LLC) located on an active I/O die (IOD). CCDs 1606 and XCDs 1604 may have separate or shared memory. AMD Infinity Architecture and AMD Infinity Fabric^{™} technology can enable coherent, high-throughput unification of GPU and CPU chiplet technologies (e.g., XCDs, CCDs, and/or CCXs) with memory (e.g., stacked HBM3 memory) in single devices and across multi-device platforms.

As shown in FIG. 16, an XCD 1604 can include a shared set of global resources 1630, which can include hardware scheduler 1612 and Asynchronous Compute Engines (ACE) 1624 that send tasks (e.g., compute shader workgroups) to Compute Units (CUs or cores) 1630. ACEs 1624 (e.g., four) can be each associated with CUs 1630 (e.g., 40 CUs), and some of the CUs can be disabled for yield management. CUs 1630 can have dedicated cache or share cache (e.g., L2 cache) 1628 that may be used to coalesce all the memory traffic for the die. CUs 1630 can include threaded and parallel processor cores including instruction fetching and scheduling with Scheduler (S) 1612, matrix core unit (MCU) 1616 and shader core (SC) 1618 (e.g., execution units for scalar, vector and matrix data types), as well as load/store pipelines with an L1 cache 1620 and Local Data Share (LDS) 1614. Local data share can include, for example, a scratch RAM with built-in arithmetic capabilities that allow data to be shared between threads in a workgroup. An instruction cache 1640 (e.g., for storing and providing the instructions for performing operations described elsewhere herein) can be connected to one or more CUs and can be shared between two CUs. Matrix cores 1616 can process a variety of data types, such as, but not limited to, INT8, FP8, FP16, BF16 and TF32 data types. Accelerated processing unit 1600 can include compute units 1630 that may be arranged in an array format, e.g., as a data-parallel-processor (DPP) array. Ultra-threaded dispatch processor 1642 can communicate with compute units 1630, and command processor 1644 can read commands that the host has written to memory-mapped registers in a system-memory address space (not shown). Command processor 1644 can send hardware-generated interrupts to a host processor (e.g., a CCD) when the command is completed. Memory controller 1636 can also have direct access to all device memory and the host-specified areas of system memory. To satisfy read and write requests, memory controller 1636 can perform functions of a direct-memory access (DMA) controller, including computing memory-address offsets based on the format of the requested data in memory. For example, one or more of APIs described herein can, for example, get compiled into instructions that can be stored in instruction cache 1640 and then fetched by instruction fetch logic in processor 1640, decoded by a processor decoder or equivalents, scheduled (e.g., in order or out of order) for execution by a scheduler or equivalents, executed by execution logic or equivalents, reordered, and then retired by the retirement logic or equivalents. API(s) (and/or compiled instructions including API(s)) can be stored in any storage outside or inside of processor 1600 (e.g., in cache and/or memory). A result of API(s) can then be stored in storage within or outside of the processor, including registers, DRAM, flash, SRAM, cache, or other memory equivalents.

An application can include a program running on a host processor (e.g., a CCD) and programs, called kernels, running on one or more XCDs. Programs can be controlled by host commands that set internal base-address and other configuration registers, specify a data domain on which the accelerated processing unit 1600 can operate, invalidate and flush caches on accelerated processing unit 1600, and cause accelerated processing unit 1600 to begin execution of a program. Kernels can be referred to as programs executed by accelerated processing unit 1600. A kernel can be executed independently on every work item, or as groups of work-items that can be referred to as a wavefront, which can execute the kernel on all work-items in the group (e.g., 64) in one pass. Compute units 1630 can include a scalar arithmetic logic unit (ALU), which can operates on one value per wavefront (common to all work items), a vector ALU, which can operate on unique values per work-item, a local data share 1614, which can allow work-items within a workgroup to communicate and share data, a scalar memory (not shown), which can transfer data between scalar general-purpose registers (SGPRs) and memory through a cache, and vector memory, which can transfer data between vector general-purpose registers (VGPRs) and memory, including sampling texture maps. Kernel control flow can be handled using scalar ALU instructions, which can includes if/else, branches and looping. Scalar ALU (SALU) and memory instructions can work on an entire wavefront and operate on one or more SGPRs. Vector memory and ALU instructions can operate on all work-items in the wavefront at one time.

In at least one embodiment, accelerated processing unit 1600 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

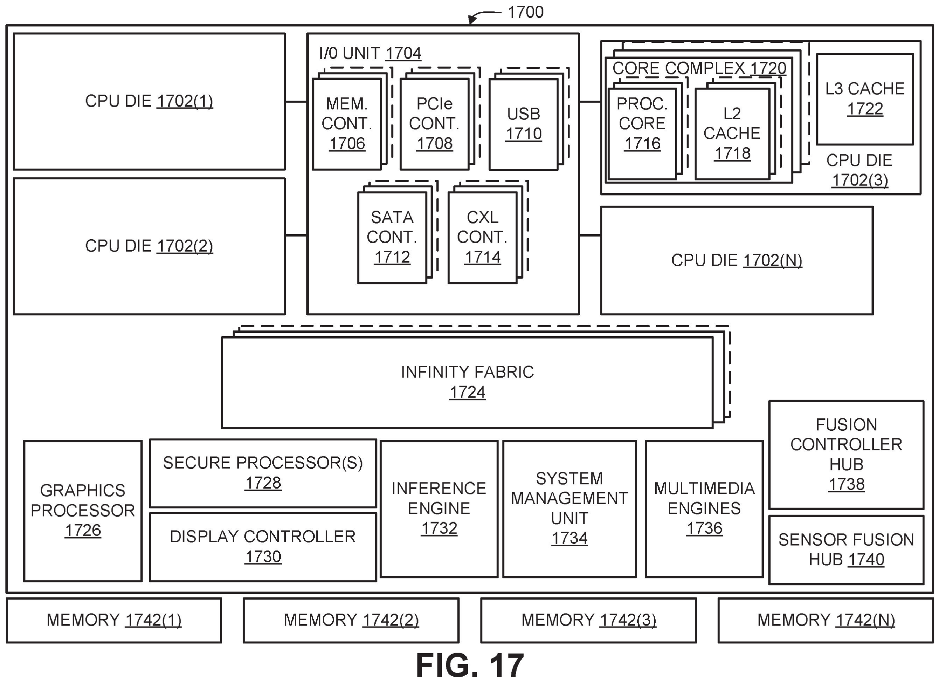

FIG. 17 illustrates a processor 1700, such as, but not limited to, a processor based on a Zen architecture (such as, e.g., Zen 1, 2, 3, 4, 5 or other) from AMD Corporation in Santa Clara, CA or another processor that shares at least some of the components described herein. Processor 1700 includes one or more CPU dies 1702(1)-1702(N), where N is any integer greater than 1. CPU die 1702 can include any number of processor cores 1716 (e.g., to perform any of the operations described elsewhere herein) and any number of cache memories (e.g., to store instructions and other information to perform any of the operations described elsewhere herein), in any combination. For example, L2 Cache units 1718 can be coupled to processor core(s) 1716, which can share and/or couple individually to L2 Cache units 1718. Processor cores 1716 can couple to L3 cache 1722 individually and/or share L3 Cache, which can be a lowest level cache (LLC) 1722 for access to data and other information used by the processor cores 1716. One or more processor cores 1716 and one or more L2 Cache units 1718 can be included in a core complex (CCX) 1720 that can include (e.g., a 32 MB) shared cache (e.g., L3 cache 1722). Core complex 1720 can be fabricated onto a die (CCD or CPU die) 1702. For example, up to 12 core complexes 1720 can be configured into a processor along with 8 CPU dies 1702 to provide up to 96 processor cores 1716 for the processor. A 'Zen 4c' core complex 1720, for example, can include up to eight cores 1716 and a shared 16 MB L3 cache 1722. Two of these core complexes 1720 can be combined onto a single CPU die 1702 for 16 cores per die and a total of 32 MB of L3 cache 1722 per die. Up to eight of CPU dies 1702 may be combined with an I/O unit 1704 to provide CPUs with up to 128 processor cores 1716. Up to four 'Zen 4c' dies described above can be combined to provide CPUs with up to 64 processor cores 1716.

Processor 1700 can include a variety of configurations for input/output operations that are described further herein. I/O unit 1704 can include one or more memory controllers 1706 that can manage memory usage (e.g., DDR5 memory) for processor 1700. I/O unit 1704 may include one or more SATA disk controllers for managing storage 1712 and one or more Compute Express Link (CXL^{™}) 1.1+ memory controllers 1714 that can provide CPU-to-device and CPU-to-memory connections and can be flexibly assigned to specific functions at server design time. I/O unit 1704 may include PCIe controller 1708 for connecting peripherals and other components connected to processor 1700. I/O unit 1704 may include USB ports 1710 for connecting to other components separate from processor 1700. CPU dies 1702 can support any number of connections, e.g., one or two connections, to I/O unit 1704. As shown, I/O unit 1704 includes the components described further herein, and I/O unit 1704 can be a I/O die that houses several different components. Memory controller 1706, PCIe controller 1708, USB ports 1710, SATA controller 1712, and/or CXL controller 1714 can be integrated anywhere within processor 1700 either separately or in any groups or combinations thereof.

Processor 1700 can include Infinity Fabric 1724 interconnects (which can be similar to or based on PCIe architectures) that can provide connections among CPUs (e.g., CPU dies 1702(1)-1702(N)), graphics processor(s) 1726, inference engine(s) 1732, and other components in the multi-chip architecture, such as secure processor(s) 1728 and I/O unit 1704. One or more AMD Infinity Fabric^{™} interconnects 1710 can connect to CPU dies 1702(1)-1702(N) and serve as a connection that is used between CPUs. One or more Infinity Fabric connections 1710 can connect each CPU die 1702 to the I/O unit 1710.

In at least one embodiment, processor 1700 can include central processing units (CPUs) and other associated hardware and software described above and further herein. Processor 1700 can also include graphics processor(s) 1726. Graphics processor 1726 can be used for image generation and processing, as well as other computations and operations described further herein. Graphics processor 1726 can be based on RDNA 3 or 3.5 architecture from AMD in Santa Clara, CA. Graphics processor 1726 can include graphics compute dies (GCDs) and memory cache dies (MCDs). GCDs can include any number of compute units (CUs) for graphics or other processing, such as operations performed by arithmetic logic units (ALUs) that are described further herein. Graphics processor 1726 can include L2 cache that can be used by compute units. MCDs (not shown) can include any number of memory units and can include cache, such as L3 cache, as well as memory interfaces for coupling to memory, such as memory 1742(1)-(N), where N is an integer. Components within graphics processor 1726 can be connected using various approaches, such as using Infinity Fabric 1724 interconnects outside or within graphics processor 1726.

Inference engine 1732 can provide neural processing capabilities for processor 1700 for computational processes that are used for neural networks, deep learning, and other artificial intelligence-related operations described further herein. Processor 1700 can include secure processor(s) 1728 for managing security of the processor, display controller 1730 for controlling displays, a system management unit 1734 for managing and operating some or all of the components on processor 1700, multimedia engines 1736 for audio and video operations, fusion controller hub 1738 for managing USB, SATA and PCIe connections to the processor, and sensor fusion hub 1740 for managing sensors, such as accelerometers. Processor 1700 can also include memory 1742(1)-(N), where N is any integer. Memory can include different memory types, such as LPDDR5 and/or DDR5, or others described elsewhere herein.

For performing operations described further herein, processor 1700 can include an execution pipeline including a front-end that can include a cache (e.g., L1 cache) that stores instructions (not shown). Flow of instructions can be modified by a branch predictor. Instructions can be decoded by a decoder, dispatched to a back-end for execution, and renamed. Instruction fetch and decode pipes, for example, can be dispatched to integer or floating point execution operations that can be scheduled by a scheduler and transferred to vector and/or general-purpose registers. Floating point multiplier and/or add operations can be processed, and arithmetic logic units (ALUs) can also be used to perform computations, such as arithmetic and logic operations. Outputs from the computation units can be coupled to a load/store queue, which can be connected to cache, such as L1 cache and/or L2 cache.

With respect to processor 1700 and any of its components described above or elsewhere herein, one or more of APIs or equivalents described herein can, for example, get compiled into instructions or equivalents (e.g., AVX-512 instructions based on an SIMD model), which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of the processor (e.g., in cache and/or memory). A result of API(s) can then be stored in storage within or outside of the processor, including registers, DRAM, flash, SRAM, cache, or other memory equivalents.

In at least one embodiment, processor 1700 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

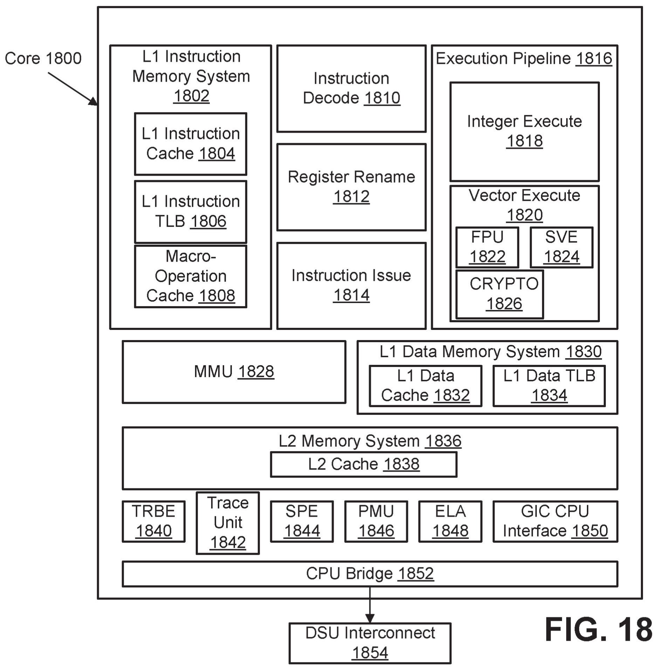

FIG. 18 illustrates an example of a processing core 1800 that may implement Arm architecture (e.g., v9.0-A) or another processor that shares at least some of the components described herein. Neoverse^{™} V2 core 1800 can be implemented inside a DynamIQ Shared Unit (DSU) cluster via DSU-110 interconnect 1854 for connected one or more cores, e.g., for parallel processing. Neoverse^{™} V2 core may be implemented as a single core in a DSU cluster that is configured for Direct connect, with or without L3 cache, snoop filter, or Snoop Control Unit (SCU) logic (not shown). Neoverse^{™} V2 core can include a CPU bridge 1852 that connects core 1800 to DSU-110 interconnect, which can also connect core 1800 to an external memory system and the rest of a system-on-a-chip. The L1 instruction memory system 1802 can fetch instructions from an instruction cache 1804 and deliver the instructions (e.g., one or more APIs described herein that may be compiled into instructions) to an instruction decode unit 1810, e.g., to perform some or all of the operations described above or elsewhere herein. L1 instruction memory system 1802 may include L1 instruction cache 1804, e.g., with 64-byte cache lines, L1 instruction Translation Lookaside Buffer (TLB) 1806, e.g., with native support for 4KB, 16KB, 64KB, and 2MB page sizes, Macro-Operation Cache (MOP) 1808 (e.g., 1536-entry, 4-way skewed associative L0 MOP cache), which can contain decoded and optimized instructions for higher performance. Instruction decode unit 1810 can decode AArch64 instructions into internal format. Register rename unit 1812 can perform register renaming to facilitate out-of-order execution and dispatches decoded instructions to various issue queues. Instruction issue unit 1814 can control when decoded instructions may be dispatched to the execution pipelines, and it can include issue queues for storing instructions pending dispatch to execution pipelines. Integer execution pipeline 1816 can be included in an execution pipeline and include integer execute unit 1818 that can perform arithmetic and logical data processing operations. Vector execute unit 1820 can be included in an execution pipeline and can perform Advanced SIMD and floating-point operations (FPU) 1822, execute Scalable Vector Extension (SVE) and Scalable Vector Extension 2 (SVE2) instructions 1824, and can optionally execute the cryptographic instructions (Crypto) 1826. Advanced SIMD can include media and signal processing architecture that adds instructions primarily for audio, video, 3D graphics, image, and speech processing. A floating-point architecture provides support for single-precision and double-precision floating-point operations. L1 data memory system 1830 can execute load and store instructions, as well as service memory coherency requests. L1 data memory system 1830 can include an L1 data cache 1832 and a fully associative L1 data TLB 1834 with native support for 4KB, 16KB and 64KB page sizes and 2MB and 512MB block sizes. Memory Management Unit (MMU) 1828 can provide fine-grained memory system control through a set of virtual-to-physical address mappings and memory attributes that can be held in translation tables, which can be saved into TLB 1834 when an address is translated. L2 memory system 1836 can include L2 cache 1838, and it can be connected to DSU-110 1854 through an asynchronous CPU bridge 1852. Neoverse^{™} V2 core 1800 can support a range of debug, test, and trace options including a trace unit 1842 and a trace buffer 1840, and an Embedded Logic Analyzer (ELA) 1848. Neoverse^{™} V2 core 1800 can implement the Statistical Profiling Extension (SPE) 1844 to provide a statistical view of the performance characteristics of executed instructions that software writers can use to optimize their code for better performance. Performance Monitoring Unit (PMU) 1846 can provide performance monitors that can be configured to gather statistics on the operation of each core and the memory system. The information can be used for debug and code profiling. Generic Interrupt Controller (GIC) CPU interface 1850, when integrated with an external distributor component, can be a resource for supporting and managing interrupts in a cluster system. In a cluster, there can be one CPU bridge 1852 between each Neoverse^{™} V2 core 1800 and DSU-110 1854. CPU bridge 1852 can control buffering and synchronization between core 1800 and the DSU-1101854. CPU bridge 1852 can be asynchronous to allow different frequency, power, and area implementation points for each core 1800. CPU bridge 1852 can run synchronously without affecting the other interfaces such as, but not limited to, debug and trace which can be asynchronous.

In at least one embodiment, core 1800 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

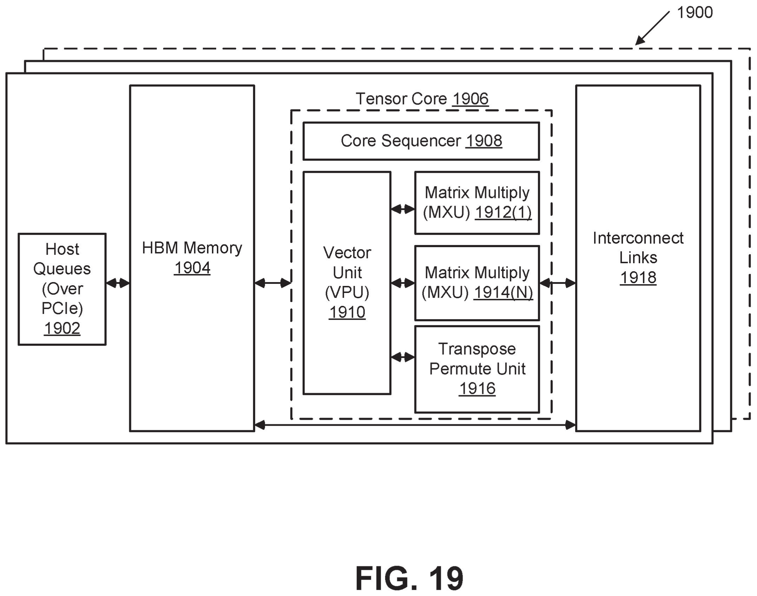

FIG. 19 illustrates one or more chips including one or more tensor processing units (TPUs) 1900, in accordance with at least one embodiment. TPUs 1900 in FIG. 19 can include application specific integrated circuits (ASICs), e.g., to perform some or all of the operations described above or elsewhere herein, such as, but not limited to, accelerate machine learning workloads performing matrix operations. TPUs 1900 may be ASICs from Alphabet Corporation in Mountain View, CA. Cloud TPU includes a cloud service that makes TPUs available as a scalable resource for processing tasks, such as, but not limited to, machine learning workloads that can run on frameworks such as, but not limited to, TensorFlow, Pytorch, and JAX.

Chip 1900 can include any number of TPUs that can include tensor cores 1906. Tensor core 1906 can include one or more core sequencer 1908, vector processing unit (VPU) 1910, matrix multiply unit (MXU) 1912(A)-1914(N), where N is any integer greater than 1, and a transpose permute unit 1916. Core Sequencer 1908 can fetch (e.g., VLIW (Very Long Instruction Word)) instructions from core's 1906 Instruction Memory (Imem), execute scalar operations using a scalar data memory (Smem) and scalar registers (Sregs) (not shown), and forward vector instructions to Vector Processing Unit (VPU) (1910. The instructions can, for example, launch eight operations: two scalar, two vector ALU, vector load and store, and a pair of slots that queue data to and from the matrix multiply and transpose units. VPU 1910 can perform vector operations using a large on-chip vector memory (Vmem), and vector registers (Vregs). VPU 1910 can stream data to and from the MXU through decoupling FIFOs. VPU 1910 can collect and distribute data to Vmem via data-level parallelism (2D matrix and vector functional units) and instruction-level parallelism (8 operations per instruction). A large two-dimensional matrix multiply unit (MXU) 1912(A)-1912(N) can, e.g., use a systolic array to reduce area and energy plus large, software-controlled on-chip memories instead of caches. Transpose Reduction Permute Unit 1916 can do (e.g., 128x128) matrix transposes, reductions, and permutations of the VPU 1910 lanes. High Bandwidth Memory 1904 can be used for applications on chip. One or more chips 1900 can be connected together for computing. For example, one or more chips 1900 can be connected as a torus, e.g., a 2D torus. Chip 1900 can also include any number (e.g., four) Inter-Core Interconnect (ICI) links 1918 that can enable direct connections between chips to form a supercomputer.

With respect to any of the processors in chip 1900 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of the processor (e.g., in cache and/or memory). A result of API(s) can then be stored in storage within or outside of the processor, including registers, DRAM, flash, SRAM, cache, or other memory equivalents.

In at least one embodiment, chip 1900 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

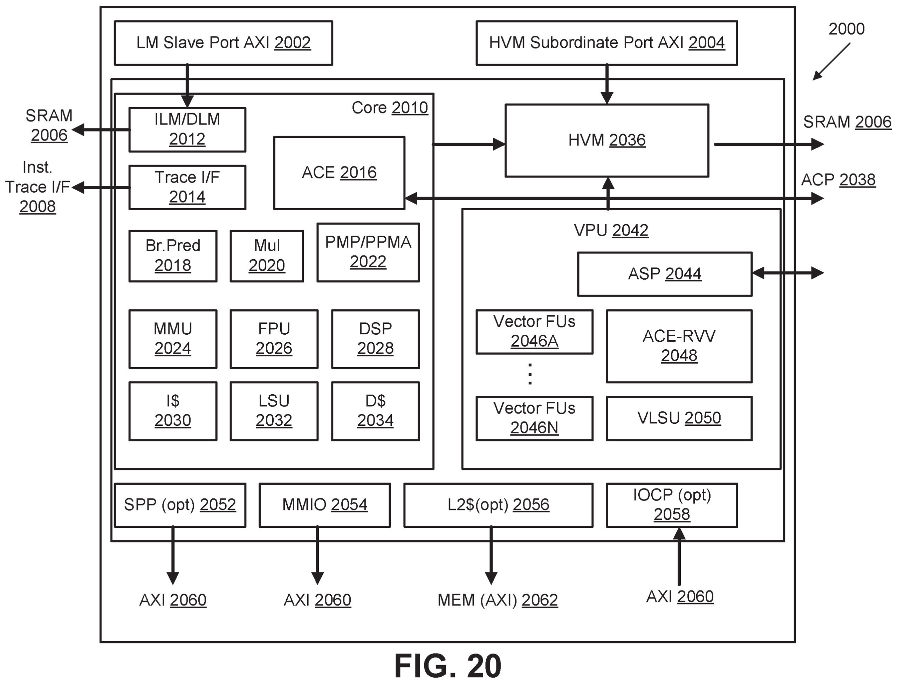

FIG. 20 illustrates a vector processor, in accordance with at least one embodiment. Vector processor 2000 may support a RISC-V standard. Vector processor 2000 can include one more cores 2010 (e.g., scalar units) with one or more Vector Processing Units (VPUs) 2042 (e.g., vector units) that can, e.g., perform some or all of the operations described above or elsewhere herein. Core 2010 may include Andes Custom Extension (ACE) 2016 that can be used for communication of customized instructions for the processor 2000. Core 2010 may include 1-cycle multiplier and 1-cycle instruction/data local memory (ILM/DLM) for increased parallelism by allowing simultaneous instruction fetches and data accesses. Memory management unit (MMU) 2024 may manage system memory and cache, and provide for branch execution, issuance of instruction pairs, L1 instruction/data caches and local memory storage. Core 2010 can include Physical memory protection and programmable physical memory attribute unit (PMP/PPMA) 2022. Core 2010 can include a digital signal processor (DSP) 2028, and a floating-point unit (FPU) 2026 as well as load-store unit (LSU) 2032 to interface with the memory hierarchy (D$ 2034 and I$ 2030). Core 2010 can include branch prediction unit 2018 and multiplier unit 2020.

Vector processing unit (VPU) 2042 can include one or more vector functional units (FUs) 2046(A)-2046(N) that can be chained together for parallel processing, independent memory paths for RISC-V vector (RVV) load/store via ACE-RVV 2048 and Andes Streaming port (ASP) 2044 load/store, and a vector load/store unit (VLSU) 2050.

Vector processor 2000 can include bus interfaces, such as, but not limited to, L2 cache memory port 2056 for cacheable access, a MMIO port 2054 for non-cacheable access, an input-output coherence Port (IOCP) 2058 for cacheless bus master, local memory access ports for ILM/DLM 2012 and high-bandwidth vector memory (HVM) 2036 access, a shared peripheral port (SPP) 2052 for external peripherals. Other memory ports include LM slave port AXI 2002 and HVM subordinate port AXI 2004.

With respect to any of the processors in processor 2000 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of the processor (e.g., in cache and/or memory). A result of API(s) can then be stored in storage within or outside of the processor, including registers, DRAM, flash, SRAM, cache, or other memory equivalents.

In at least one embodiment, vector processor 2000 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

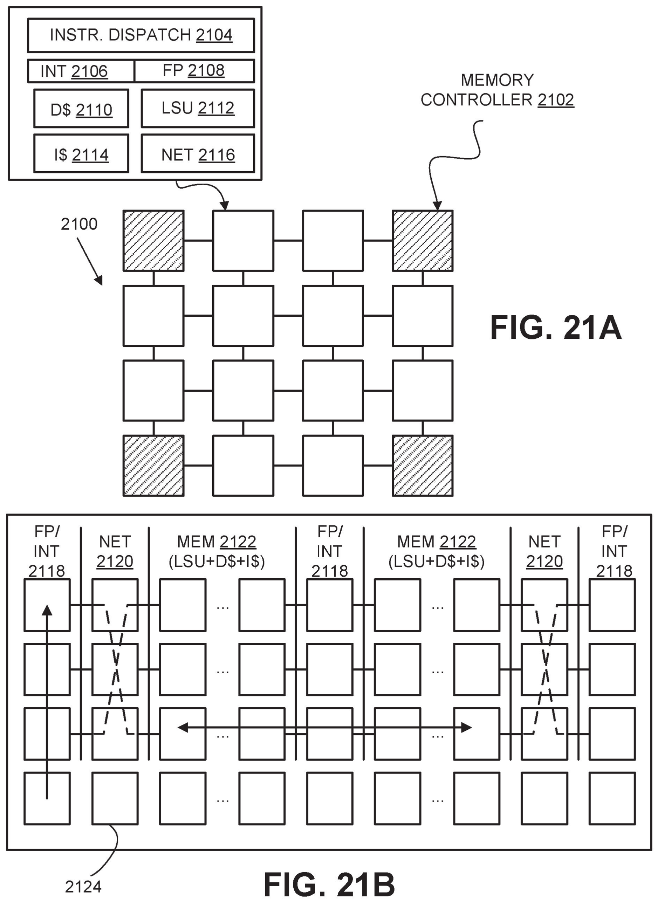

FIG. 21A illustrates a diagram of an example many-core tiled processor microarchitecture. Many-core tiled processor in FIG. 21 can include a language processing processor. As illustrated in FIG. 21A, each "tile" of the processor architecture is a processing element tied together using a network-on-chip (NoC) that can be used, e.g., to perform some or all of the operations described above or elsewhere herein. For example, each tile may have an instruction dispatch 2104 and an integer (INT) 2106 and floating-point (FP) unit 2108 as well as load-store unit (LSU) 2112 to interface with the memory hierarchy (data cache (D$) 2110 and instruction cache (I$) 2114) and a network (NET) 2116 interface for communication with other tiles of the architecture. Some tiles in processor 2100 may include memory controller 2102 for managing and controlling memory, as described further herein. Processor 2100 can have a functional slice architecture. Processor 2100 may be located on an application specific integrated circuit (ASIC), and FIG. 21A may represent the layout of the ASIC. Processor 2100 can include a co-processor that is designed to execute instructions for a predictive model. The predictive model is any model that is configured to make a prediction from input data. The predictive model can use a classifier to make a classification prediction. The predictive model may be a machine learning model such as, but not limited to, a tensor flow model, and the processor 2100 is a tensor streaming processor.

Processor 2100 can employ different microarchitectures, which disaggregates the functional units shown in each tile in FIG. 21B. Instead, the functional tiles of the processor 2100 may be aggregated into a plurality of functional process units (hereafter referred to as "slices") 2104, each corresponding to a particular function type (e.g., FP/INT, NET, MEM). For example, as illustrated in FIG. 21B, each slice may correspond to a column of functional tiles extending in a north-south direction. In addition, the processor also includes communication lanes to carry data between the tiles of different slices, each running horizontally in an east-west direction. Each communication lane may be connected to each of the slices 2104 of the processor 2100.

The slices 2104 of the processor @ may each correspond to a different function, and may include arithmetic logic slices (e.g., FP/INT), lane switching slices (e.g., NET), and memory slices (e.g., MEM). The arithmetic logic units execute one or more arithmetic and/or logic operations on the data received via the communication lanes to generate output data. Examples of arithmetic logic units may be matrix multiplication units and vector multiplication units. The memory slices include memory cells that store data. The memory slices can provide the data to other slices through the communication lanes. The memory slices can also receive data from other slices through the communication lanes. The lane switching slices can configurably route data from one communication lane to any other communication lane. For example, data from a first lane can be provided to a second lane through a lane switching slice. In some embodiments, the lane switching slice can be implemented as a crossbar switch. Each slice 2104 also includes its own instruction queue (not shown) that stores instructions, and an instruction control unit (ICU) to control execution of the instructions. The instructions in a given instruction queue may be executed only by tiles in its associated functional slice and may not be executed by the other slice of the processor.

By arranging the tiles of the processor 2100 into different functional slices 2104, the on-chip instruction and control flow of the processor 2100 can be decoupled from the data flow. For example, one arrow in FIG. 21B illustrates the flow of instructions within the processor architecture, in accordance with some embodiments. Another arrow in FIG. 21B illustrates data flow within the processor architecture, in accordance with at least one embodiment. As illustrated, the instructions and control flow flows in a first direction across the tiles of the processor 2100 (e.g., north-south, along the length of the functional slices, as shown by the first arrow), while the data flows flow in a second direction across the tiles of the processor 2100 (e.g., east-west, across the functional slices, as shown by the second arrow) that is perpendicular to the first direction.

Different functional slices of the processor may correspond to MEM (memory), VXM (vector execution module), MXM (matrix execution module), NIM (numerical interpretation module), and SXM (switching and permutation module). Each slice may include N tiles that may all be controlled by the same instruction control unit (ICU) (not shown). Each of the slices may operate completely independently and can only be coordinated using barrier-like synchronization primitives or through the compiler by exploiting "tractable determinism." Each tile of the processor can correspond to an execution unit organized as an ×M SIMD tile. For example, each tile of the on-chip memory of the processor may be organized to store an L-element vector atomically. As such, a MEM slice having N tiles may work together to store or process a large vector (e.g., having a total of N×M elements).

The tiles in the same slice may execute instructions in a "staggered" fashion where instructions may be issued tile-by-tile within the slice over a period of N cycles. Functional slices may be arranged physically on-chip to allow efficient data-flow for pipelined execution across hundreds of cycles for common patterns. Data flows can perform a single "u-turn" (change in direction) corresponding to a single matrix operation before being written back to memory, in some embodiments, a particular data flow may change direction multiple times (due to multiple matrix and vector operations) before the resulting data is written back into memory.

To get good single-thread performance, a conventional multi-core processor design (e.g., as illustrated in FIG. 21A) typically needs to dedicate a significant portion of silicon area for exposing and exploiting instruction-level parallelism (ILP). This usually involves register renaming schemes and large instruction windows over which the instructions have no explicit understanding of the hardware on which it will execute, all the while maintaining the illusion of in-order program execution. In contrast, when using a processor (e.g., TSP) having a functional slice architecture, the TSP compiler generates an explicit plan for how the processor will execute the microprogram. The compiler specifies when each operation will be executed, which functional slices will perform the work, and which STREAM registers hold the operands. The compiler maintains a high-fidelity (cycle accurate) model of the TSP's hardware state so the microprogram can orchestrate the data flow.

Processor 2100 (e.g., TSP) can use a Web-hosted compiler that takes as its input a model (e.g., a ML model such as, but not limited to, a TensorFlow model) and emits a proprietary instruction stream targeting the processor TSP hardware. The compiler is responsible for coordinating the control and data flow of the program, and specifies any instruction-level parallelism by explicitly bundling instructions that can and should execute concurrently so that they may be dispatched together. The primary hardware structure is the architecturally-visible streaming register file (STREAMs), described in greater detail below, which serves as the conduit through which operands flow from MEM slices (e.g., SRAM) to functional slices and vice versa.

The MEM unit of the processor serves as: (1) storage for model parameters, microprograms and the data on which they operate, and (2) network-on-chip (NoC) for communicating data operands from MEM to the functional slices and computed results back to MEM. In some embodiments, the on-chip memory consumes ≈75% of the chip area of the processor. In some embodiments, due to the bandwidth requirements of the processor, the on-chip memory of the MEM tiles may comprise SRAM, and not DRAM. The on-chip memory capacity of the processor determines (i) the number of ML models that can simultaneously reside on-chip, (ii) size of any given model, and (iii) partitioning of large models to fit into multi-chip systems. In some embodiments, the MEM system of the processor provides a plurality of memory slices organized into two different hemispheres (referred to as "MEM WEST" and "MEM EAST", respectively).

The memory slices of each hemisphere may mirrored, such that the slices may be physically numbered {0, . . . L} in the East hemisphere 410, and {L, . . . 0} in the West hemisphere 405, such that the memory slice 0 for each hemisphere corresponds to the slice closest to the VXM slices 415 between the hemispheres, where each hemisphere comprises L slices. The direction of data transfer towards the center of the chip may be referred to as inwards, while data transfer toward the outer (Eastern or Western most) edge of the chip may be referred to as outwards. Although the hemispheres of memory of the processor may be referred to as east and west, it is understood that in other embodiments, other names may be used to refer to the different hemispheres of memory.

In some embodiments, a streaming register file, referred to as STREAMS, transfers operands and results between SRAM of the MEM slices and the functional slices of the processor. In some embodiments, a plurality of MEM slices (e.g., between 2 and 10 adjacent MEM slices) may be physically organized as a set. Each set of slices may be located between a pair of STREAM register files, such that each slice is able to read or write to the STREAM registers in either direction. By placing STREAM register files between sets of MEM slices, a number of cycles needed for data operands to be transmitted across a hemisphere is decreased (e.g., by a factor corresponding to the number of slices per set). The number of slices per set may be configured based upon a distance over which data may be transmitted over a single clock cycle.

With respect to any of the processors in FIG. 21 and any components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of the processor (e.g., in cache and/or memory). A result of API(s) can then be stored in storage within or outside of the processor, including registers, DRAM, flash, SRAM, cache, or other memory equivalents.

In at least one embodiment, processor 2100 can include one or more circuits to cause a compiler to indicate one or more portions of one or more software programs to be performed by one or more processors concurrently or otherwise perform any of the operations described above or elsewhere herein. One or more circuits can be configured by software to cause a compiler to indicate one or more portions of one or more software programs to be performed by one or more processors concurrently or otherwise perform any of the operations described above or elsewhere herein.

### SOFTWARE CONSTRUCTIONS

The following figures set forth, without limitation, examples of software constructs for implementing at least one embodiment.

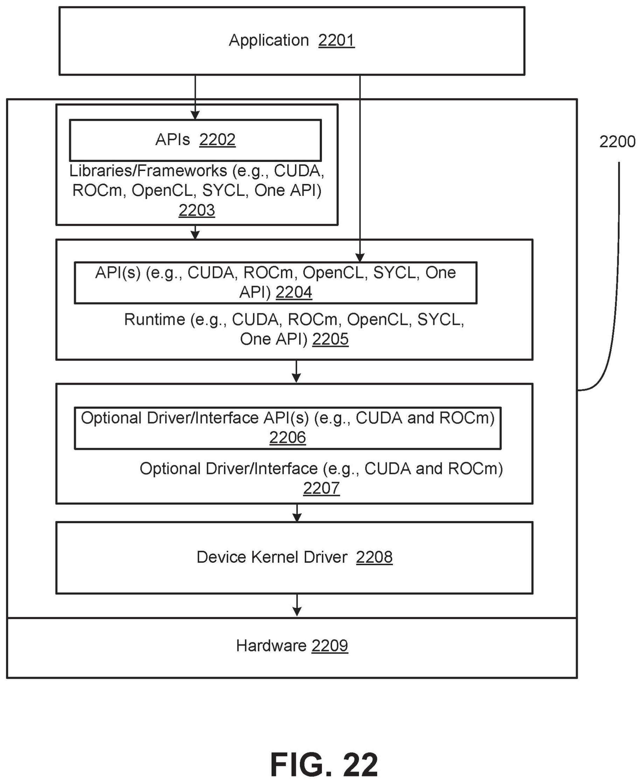

FIG. 22 illustrates a software stack of a programming platform, in accordance with at least one embodiment. A programming platform can include a platform for leveraging hardware on a computing system to accelerate computational tasks. A programming platform may be accessible to software developers through libraries, compiler directives, and/or extensions to programming languages, in at least one embodiment. A programming platform may be CUDA, Radeon Open Compute Platform ("ROCm"), OpenCL (OpenCL^{™} is developed by Khronos group), SYCL, or Intel oneAPI.

A software stack 2200 of a programming platform can provide an execution environment for an application 2201. Application 2201 may include any computer software capable of being launched on software stack 2200. Application 2201 may include an artificial intelligence ("AI")/machine learning ("ML") application, a high performance computing ("HPC") application, a virtual desktop infrastructure ("VDI"), or a data center workload.

Application 2201 and software stack 2200 run on hardware 2208. Hardware 2208 may include one or more GPUs, CPUs, FPGAs, AI engines, and/or other types of compute devices that support a programming platform. Software stack 2200 may be vendor specific and compatible with only devices from particular vendor(s), such as CUDA, ROCm, OneAPI, OpenCL, or other implementations. Hardware 2208 can include a host connected to one more devices that can be accessed to perform computational tasks via application programming interface ("API") calls. A device within hardware 2208 may include a GPU, FPGA, AI engine, or other compute device (but may also include a CPU) and its memory, as opposed to a host within hardware 2208 that may include a CPU (but may also include a compute device) and its memory, in at least one embodiment. With respect to any of the hardware 2208 described above or elsewhere herein, one or more of APIs described herein can, for example, get compiled into instructions, which may be fetched by instruction fetch logic, decoded by a processor decoder, scheduled (e.g., in order or out of order) for execution by a scheduler, executed by execution logic, reordered, and then retired by the retirement logic. API(s) (and/or compiled instructions including API(s)) can be stored in any storage outside or inside of the processor (e.g., in cache and/or memory). A result of API(s) can then be stored in storage within or outside of the processor, including registers, DRAM, flash, SRAM, cache, or other memory. One or more of APIs described herein can include a call. One or more of APIs described herein can include a library or a portion of a library to perform a function described by the call. One or more of APIs described herein can include a call and a library or portion of a library to perform a function described by the call.

Software stack 2200 of a programming platform can include a number of libraries 2203, a runtime 2205, an optional driver/interface 2207, and a device kernel driver 2208. Each of libraries 2203 may include data and programming code that can be used by computer programs and leveraged during software development. Libraries 2203 may include pre-written code and subroutines, classes, values, type specifications, configuration data, documentation, help data, and/or message templates. Libraries 2203 can include functions that may be optimized for execution on one or more types of devices. Libraries 2203 may include functions for performing mathematical, deep learning, and/or other types of operations on devices. Libraries 2203 can be associated with corresponding APIs 2202, which may include one or more APIs, that expose functions implemented in libraries 2203. A processor (e.g. CPU, GPU) may perform, call, or otherwise use one or more APIs to prioritize kernels. For example, a first kernel (e.g., parent) can launch a second kernel (e.g., child kernel), and said second kernel can be used by a processor to launch additional kernels (e.g., grandchildren kernels) independent of said first kernel. A processor may perform an API or calls an API from memory to be performed to support dynamic stream priority (e.g., updating priority while a stream is being used to perform operations). For example, when a processor performs said API, it allows a programmer to copy stream priority from one stream to one or more other streams.

Software stack 2200 may include an API to support dynamic stream priority (e.g., updating priority while a stream is being used to perform operations), which can allow a programmer to set priority of a stream at any time after creation. Software stack 2200 can include an API to support dynamic stream priority (e.g., updating priority while the stream is being used to perform operations), which may allow a programmer to obtain current priority of a stream, where the priority is one of a plurality of attributes of a stream. Software stack 2200 can include an API to support dynamic stream priority (e.g., updating priority while the stream is being used to perform operations), which may allow a programmer to obtain current priority of a stream as a single attribute. Software stack 2200 can include an API to support dynamic stream priority (e.g., updating priority while the stream is being used to perform operations), which allows a programmer to launch a kernel to perform operations on a stream at a set priority, which may be different from the stream priority. Software stack 2200 may include an API to indicate whether an object (e.g., a thread synchronization object such as, but not limited to, a barrier) tracks whether all data movement operations for a set of threads operating on a GPU may be complete has a specified state after a specified period of time, where a specified state can be a state indicating that data has been moved and is ready for use, and is specified using an expected parity value as an input to the API.

Software stack 2200 can include one or more APIs to updated kernels. A processor can perform an API or call an API from memory to be performed to update to an existing API is to support context-free kernels, which may allow a programmer to add a kernel node to a graph without a graphics context, so that a graphics context can be dynamically associated with a kernel at runtime. Software stack 2200 may include one or more APIs to allow a programmer to obtain a kernel identifier and a graphics context as separate parameters from a kernel node, so that parameters to be obtained from kernels and from context-free kernels. Software stack 2200 can include one or more APIs to use parallel processor(s), such as, but not limited to, one or more graphics processing units, to launch task graphs (e.g., task graphs) and to execute one or more task graphs (e.g., including one or more programs).

Software stack 2200 may include one or more APIs to associate one or more instructions with one or more memory ordering operations, such as, but not limited to, a fence or membar operation. Instructions can be associated with one or more domains such that a memory ordering operation is executed in association to one or more particular domains without interfering with instructions of other domains. An API can indicate a thread has arrived (e.g., at a thread synchronization barrier), or finished a stage of work in relation to asynchronous data movement operations on a GPU. Software stack 2200 may include one or more to allow programmers to manually indicate an expected transaction count when a thread has finished a stage of work, which can be used to update an object that tracks whether all data movement operations for a set of threads may be complete.

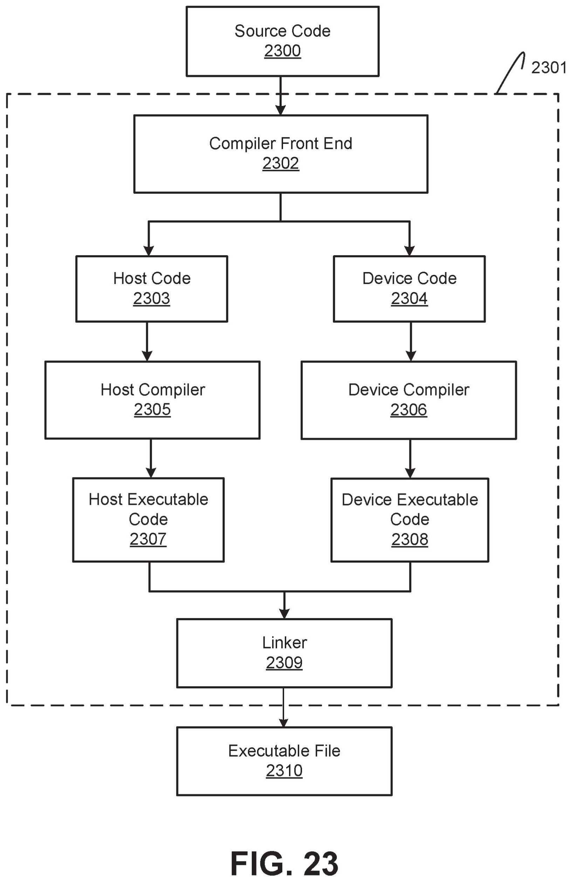

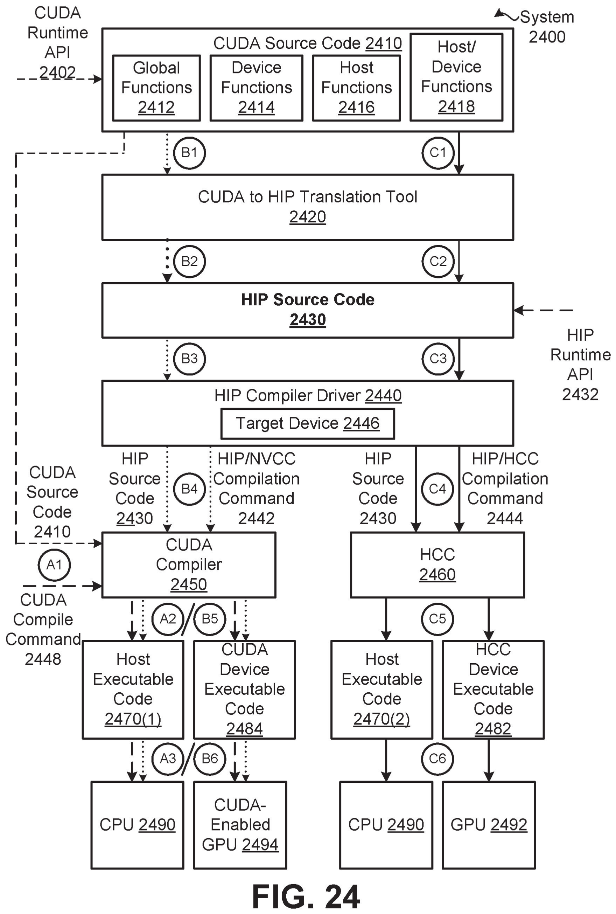

Application 2201 can be written as source code that is compiled into executable code, as discussed in greater detail below in conjunction with FIGs. 23 and 24. Executable code of application 2201 may run, at least in part, on an execution environment provided by software stack 2200. During execution of application 2201, code may be reached that needs to run on a device, as opposed to a host. In such a case, runtime 2205 may be called to load and launch requisite code on the device. Runtime 2205 may include any technically feasible runtime system that is able to support execution of application 2201.

Runtime 2205 can be implemented as one or more runtime libraries associated with corresponding APIs, which are shown as API(s) 2204. One or more of such runtime libraries may include functions for memory management, execution control, device management, error handling, and/or synchronization, among other things,. Memory management functions may include functions to allocate, deallocate, and copy device memory, as well as transfer data between host memory and device memory. Execution control functions may include functions to launch a function (sometimes referred to as a "kernel" when a function is a global function callable from a host) on a device and set attribute values in a buffer maintained by a runtime library for a given function to be executed on a device.

Runtime libraries and corresponding API(s) 2204 may be implemented in any technically feasible manner. One (or any number of) API may expose a low-level set of functions for fine-grained control of a device, while another (or any number of) API may expose a higher-level set of such functions. A high-level runtime API may be built on top of a low-level API. One or more of runtime APIs may be language-specific APIs that may be layered on top of a language-independent runtime API.

An optional driver or interface 2207 may be implemented, e.g., for CUDA and ROCm implementations, that are described further below. Optional driver/interface 2207 may be associated with optional driver or interface API(s), such as, but not limited to, CUDA and/or ROCm API(s).

One or more processors disclosed in "processing systems" can perform, access, or otherwise use software stack 2200. For example, system-on-a-chip 900, parallel processor 1000, graphics multiprocessor 1034, processor 1100, processor 1200, accelerator 1300, neuromorphic processor 1405, supercomputer 1500, acceleration processing unit 1600, processor 1700, processor 1800, tensor processing unit 1900, processor 2000, and language processing unit 2100 can perform, use, call, or otherwise implement (e.g., through accessing a memory) one or more APIs included in software stack 2200.

Device kernel driver 2208 can be configured to facilitate communication with an underlying device. Device kernel driver 2208 may provide low-level functionalities upon which APIs, such as, but not limited to, API(s) 2204, and/or other software relies. Device kernel driver 2208 may be configured to compile intermediate representation ("IR") code into binary code at runtime. For CUDA or other implementations such as, but not limited to, ROCm, OneAPI, or OpenCL, device kernel driver 2208 may compile Parallel Thread Execution ("PTX") IR code that is not hardware specific into binary code for a specific target device at runtime (with caching of compiled binary code), which is also sometimes referred to as "finalizing" code. Doing so may permit finalized code to run on a target device, which may not have existed when source code was originally compiled into PTX code. Alternatively, device source code may be compiled into binary code offline, without requiring device kernel driver 2208 to compile IR code at runtime.

Processors described elsewhere herein, such as, but not limited to, processors in FIGs. 9-21 can include one or more circuits to cause a compiler to indicate one or more portions of one or more software programs to be performed by one or more processors concurrently or otherwise perform any of the operations described above or elsewhere herein. One or more circuits can be configured by software, e.g., software stack 2200 to cause a compiler to indicate one or more portions of one or more software programs to be performed by one or more processors concurrently or otherwise perform any of the operations described above or elsewhere herein.

In accordance with at least one embodiment, software stack 2200 of FIG. 22 can be performed in a CUDA implementation. A CUDA software stack 2200, on which an application 2201 may be launched, may include CUDA libraries 2203, a CUDA runtime 2205, a CUDA driver 2207, and a device kernel driver 2208. CUDA software stack 2200 can execute on hardware (e.g., graphics multiprocessor 1034 that may include a GPU that supports CUDA and is developed by NVIDIA Corporation of Santa Clara, CA.

Application 2201, CUDA runtime 2205, and device kernel driver 2208 can perform functionalities that are described above and elsewhere herein. CUDA driver 2207 can include a library (libcuda.so) that may implement a CUDA driver API 2206. Similar to a CUDA runtime API 2204 implemented by a CUDA runtime library (cudart), CUDA driver API 2206 may expose functions for memory management, execution control, device management, error handling, synchronization, and/or graphics interoperability, among other things. CUDA driver API 2206 can differ from CUDA runtime API 2204 in that CUDA runtime API 2204 simplifies device code management by providing implicit initialization, context (analogous to a process) management, and module (analogous to dynamically loaded libraries) management. In contrast to high-level CUDA runtime API 2204, CUDA driver API 2206 can be a low-level API providing more fine-grained control of the device, particularly with respect to contexts and module loading. CUDA driver API 2206 may expose functions for context management that may be not exposed by CUDA runtime API 2204. CUDA driver API 2206 may also be language-independent and support, e.g., OpenCL, in addition to CUDA runtime API 2204. Further, development libraries, including CUDA runtime 2205, may be considered as separate from driver components, including user-mode CUDA driver 2207 and kernel-mode device driver 2208 (also sometimes referred to as a "display" driver).

CUDA libraries 2203 may include mathematical libraries, deep learning libraries, parallel algorithm libraries, and/or signal/image/video processing libraries, which parallel computing applications such as, but not limited to, application 2201 may utilize. CUDA libraries 2203 may include mathematical libraries such as, but not limited to, a cuBLAS library that is an implementation of Basic Linear Algebra Subprograms ("BLAS") for performing linear algebra operations, a cuFFT library for computing fast Fourier transforms ("FFTs"), and a cuRAND library for generating random numbers, among others. CUDA libraries 2203 may include deep learning libraries such as, but not limited to, a cuDNN library of primitives for deep neural networks and a TensorRT platform for high-performance deep learning inference, among others.

In at least one embodiment, processors described elsewhere herein, such as, but not limited to, processors in FIGs. 9-21 can include one or more circuits to cause a compiler to indicate one or more portions of one or more software programs to be performed by one or more processors concurrently or otherwise perform any of the operations described above or elsewhere herein. One or more circuits can be configured by software, e.g., software stack 2200 to cause a compiler to indicate one or more portions of one or more software programs to be performed by one or more processors concurrently or otherwise perform any of the operations described above or elsewhere herein.

In accordance with at least one embodiment, software stack 2200 of FIG. 22 can be performed in a ROCm implementation. A ROCm software stack 2200, on which an application 2201 may be launched, includes a language runtime 2203, a system runtime 2205, a thunk 2207, and a ROCm kernel driver 2208. ROCm software stack 2200 executes on hardware 2209, which may include a GPU that supports ROCm and is developed by AMD Corporation of Santa Clara, CA.

Application 2201 may perform similar functionalities as discussed above in conjunction with FIG. 22. In addition, language runtime 2203 and system runtime 2205 may perform similar functionalities as runtime 2205 discussed above in conjunction with FIG. 22. Language runtime 2203 and system runtime 2205 may differ in that system runtime 2205 is a language-independent runtime that implements a ROCr system runtime API 2204 and makes use of a Heterogeneous System Architecture ("HSA") Runtime API. HSA runtime API can include a thin, user-mode API that exposes interfaces to access and interact with an AMD GPU, including functions for memory management, execution control via architected dispatch of kernels, error handling, system and agent information, and runtime initialization and shutdown, among other things. In contrast to system runtime 2205, language runtime 2203 can be an implementation of a language-specific runtime API 2202 layered on top of ROCr system runtime API 2204. Language runtime API may include a Heterogeneous compute Interface for Portability ("HIP") language runtime API, a Heterogeneous Compute Compiler ("HCC") language runtime API, or an OpenCL API, among others. HIP language in particular is an extension of C++ programming language with functionally similar versions of CUDA mechanisms, and a HIP language runtime API may include functions that may be similar to those of CUDA runtime API discussed above in conjunction with FIG. 22, such as, but not limited to, functions for memory management, execution control, device management, error handling, and synchronization, among other things.

Thunk (ROCt) 2207 can be an interface 2206 that can be used to interact with underlying ROCm driver 2208. ROCm driver 2208 can be a ROCk driver, which is a combination of an AMDGPU driver and a HSA kernel driver (amdkfd). AMDGPU driver can be a device kernel driver for GPUs developed by AMD that performs similar functionalities as device kernel driver 2209 discussed above in conjunction with FIG. 22. HSA kernel driver can be a driver permitting different types of processors to share system resources more effectively via hardware features.

Various libraries (not shown) may be included in ROCm software stack 2200 above language runtime 2203 and provide functionality similar to CUDA libraries 2203, discussed above in conjunction with FIG. 22. Various libraries may include mathematical, deep learning, and/or other libraries such as, but not limited to, a hipBLAS library that implements functions similar to those of CUDA cuBLAS, a rocFFT library for computing FFTs that is similar to CUDA cuFFT, among others.

Processors described elsewhere herein, such as, but not limited to, processors in FIGs. 9-21 can include one or more circuits to cause a compiler to indicate one or more portions of one or more software programs to be performed by one or more processors concurrently or otherwise perform any of the operations described above or elsewhere herein. One or more circuits can be configured by software, e.g., software stack 2200 to cause a compiler to indicate one or more portions of one or more software programs to be performed by one or more processors concurrently or otherwise perform any of the operations described above or elsewhere herein.

In accordance with at least one embodiment, software stack 2200 of FIG. 22 can be performed in a OpenCL implementation. An OpenCL software stack 2200, on which an application 2201 may be launched, can include an OpenCL framework 2203, an OpenCL runtime 2205, and a driver 2208. OpenCL software stack 2200 may execute on hardware 2209 that is not vendor-specific. As OpenCL is supported by devices developed by different vendors, specific OpenCL drivers may be required to interoperate with hardware from such vendors.

Application 2201, OpenCL runtime 2205, device kernel driver 2208, and hardware 2209 may perform similar functionalities as other implementations of application 2201, runtime 2205, device kernel driver 2208, and hardware 2209, respectively, that are discussed above in conjunction with FIG. 22. Application 2201 can further include an OpenCL kernel (not shown) with code that is to be executed on a device.

OpenCL may define a "platform" that allows a host to control devices connected to the host. An OpenCL framework can provide a platform layer API and a runtime API, shown as platform API 2202 and runtime API 2204. Runtime API 2204 can use contexts to manage execution of kernels on devices. Each identified device may be associated with a respective context, which runtime API 2204 may use to manage command queues, program objects, and kernel objects, share memory objects, among other things, for that device. Platform API 2202 can expose functions that permit device contexts to be used to select and initialize devices, submit work to devices via command queues, and enable data transfer to and from devices, among other things. In addition, OpenCL framework can provide various built-in functions (not shown), including math functions, relational functions, and image processing functions, among others.

A compiler (not shown) can also be included in OpenCL framework 2203. Source code may be compiled offline prior to executing an application or online during execution of an application. In contrast to CUDA and ROCm, OpenCL applications may be compiled online by a compiler that is representative of any number of compilers that may be used to compile source code and/or IR code, such as, but not limited to, Standard Portable Intermediate Representation ("SPIR-V") code, into binary code. Alternatively, OpenCL applications may be compiled offline, prior to execution of such applications.

In at least one embodiment, processors described elsewhere herein, such as, but not limited to, processors in FIGs. 9-21 can include one or more circuits to cause a compiler to indicate one or more portions of one or more software programs to be performed by one or more processors concurrently or otherwise perform any of the operations described above or elsewhere herein. One or more circuits can be configured by software, e.g., software stack 2200 to cause a compiler to indicate one or more portions of one or more software programs to be performed by one or more processors concurrently or otherwise perform any of the operations described above or elsewhere herein.

In accordance with at least one embodiment, software can be supported by a programming platform that is configured to support various programming models, middlewares and/or libraries, and frameworks that an application may rely upon. Application may be an AI/ML application implemented using, for example, a deep learning framework such as, but not limited to, MXNet, PyTorch, or TensorFlow, which may rely on libraries such as, but not limited to, cuDNN, NVIDIA Collective Communications Library ("NCCL"), and/or NVIDA Developer Data Loading Library ("DALI") CUDA libraries to provide accelerated computing on underlying hardware.

Programming platform may be one of a CUDA, ROCm, or OpenCL platform described above in conjunction with FIG. 22. Programming platform can support multiple programming models, which may be abstractions of an underlying computing system permitting expressions of algorithms and data structures. Programming models may expose features of underlying hardware in order to improve performance. Programming models may include CUDA, HIP, OpenCL, C++ Accelerated Massive Parallelism ("C++AMP"), Open Multi-Processing ("OpenMP"), Open Accelerators ("OpenACC"), and/or Vulcan Compute.

Libraries and/or middlewares may provide implementations of abstractions of programming models. Such libraries can include data and programming code that may be used by computer programs and leveraged during software development. Such middlewares can include software that provides services to applications beyond those available from programming platform. Libraries and/or middlewares may include cuBLAS, cuFFT, cuRAND, and other CUDA libraries, or rocBLAS, rocFFT, rocRAND, and other ROCm libraries. In addition, libraries and/or middlewares may include NCCL and ROCm Communication Collectives Library ("RCCL") libraries providing communication routines for GPUs, a MIOpen library for deep learning acceleration, and/or an Eigen library for linear algebra, matrix and vector operations, geometrical transformations, numerical solvers, and related algorithms.

Application frameworks may depend on libraries and/or middlewares. Each of application frameworks can be a software framework used to implement a standard structure of application software. Returning to the AI/ML example discussed above, an AI/ML application may be implemented using a framework such as, but not limited to, Caffe, Caffe2, TensorFlow, Keras, PyTorch, or MxNet deep learning frameworks, for example.

In at least one embodiment, processors described elsewhere herein, such as, but not limited to, processors in FIGs. 9-21 can include one or more circuits to cause a compiler to indicate one or more portions of one or more software programs to be performed by one or more processors concurrently or otherwise perform any of the operations described above or elsewhere herein. One or more circuits can be configured by software, e.g., programming platforms described herein, to cause a compiler to indicate one or more portions of one or more software programs to be performed by one or more processors concurrently or otherwise perform any of the operations described above or elsewhere herein.

FIG. 23 illustrates compiling code to execute on one of programming platforms of FIGS. 22 described above, in accordance with at least one embodiment. A compiler 2301 is configured to receive source code 2300, compile source code 2300, and output an executable file 2310. Complier 2301 can be configured to convert source code 2300 into host executable code 2307 for execution on a host and device executable code 2308 for execution on a device. Source code 2300 may either be compiled offline prior to execution of an application, or online during execution of an application. Source code 2300 may include code in any programming language supported by compiler 2301, such as, but not limited to, C++, C, Fortran, etc. Source code 2300 may be included in a single-source file having a mixture of host code and device code, with locations of device code being indicated therein. A single-source file may be a .cu file that includes CUDA code or a .hip.cpp file that includes HIP code or a file in another format that includes both host code and device code. Alternatively, source code 3200 may include multiple source code files, rather than a single-source file, into which host code and device code may be separated. Compiler 2301 includes or has access to one or more libraries to recognize a sequence of API calls to perform a single fused API, where a single fused API is a combined API for two or more APIs. In at least one embodiment, compiler 2301 may be an NVIDIA CUDA compiler ("NVCC") for compiling CUDA code in .cu files, or a HCC compiler for compiling HIP code in .hip.cpp files, or other compilers.

Compiler 2301 can be configured to compile source code 2300 into host executable code 2307 for execution on a host and device executable code 2308 for execution on a device. Compiler 2301 performs operations including parsing source code 2300 into an abstract system tree (AST), performing optimizations, and generating executable code. When source code 2300 includes a single-source file, compiler 2301 may separate device code from host code in such a single-source file, compile device code and host code into device executable code 2308 and host executable code 2307, respectively, and link device executable code 2308 and host executable code 2307 together in a single file.

Compiler 2301 can include a compiler front end 2302, a host compiler 2305, a device compiler 2306, and a linker 2309. Compiler front end 2302 can be configured to separate device code 2304 from host code 2303 in source code 2300. Device code 2304 may be compiled by device compiler 2306 into device executable code 2308, which as described may include binary code or IR code, in at least one embodiment. Separately, host code 2303 may be compiled by host compiler 2305 into host executable code 2307. For NVCC other compilers, such as, but not limited to, those for oneAPI, ROCm, and OpenCL, host compiler 2305 may be a general purpose C/C++ compiler that outputs native object code, while device compiler 2306 may be a Low Level Virtual Machine ("LLVM")-based compiler that forks a LLVM compiler infrastructure and outputs PTX code or binary code. For HCC, both host compiler 2305 and device compiler 2306 may be LLVM-based compilers that output target binary code.

Subsequent to compiling source code 2300 into host executable code 2307 and device executable code 2308, linker 2309 can link host and device executable code 2307 and 2308 together in executable file 2310. Native object code for a host and PTX or binary code for a device may be linked together in an Executable and Linkable Format ("ELF") file, which is a container format used to store object code. Host executable code 2307 and device executable code 2308 may be in any suitable format, such as, but not limited to, binary code and/or IR code. In the case of CUDA, host executable code 2307 may include native object code and device executable code 2308 may include code in PTX intermediate representation, in at least one embodiment. In the case of ROCm, both host executable code 2307 and device executable code 2308 may include target binary code, in at least one embodiment. Other implementations, such as, but not limited to, oneAPI, OpenCL are contemplated and can be performed similarly to the CUDA and ROCm implementations above.

Source code 2300 may be translated prior to compiling source code. Source code is passed through a translation tool (not shown), which translates source code 2300 into translated source code. A compiler 2301 can be used to compile translated source code into host executable code 2307 and device executable code 2308 in a process that is similar to compilation of source code 2300 by compiler 2301 into host executable code 2307 and device executable code 2308, as discussed above in conjunction with FIG. 23.

A translation performed by translation tool can be used to port source code 2300 for execution in a different environment than that in which it was originally intended to run. Translation tool may include a HIP translator that is used to "hipify" CUDA code intended for a CUDA platform into HIP code that can be compiled and executed on a ROCm platform. Translation of source code 2300 may include parsing source code 2300 and converting calls to API(s) provided by one programming model (e.g., CUDA) into corresponding calls to API(s) provided by another programming model (e.g., HIP), as discussed in greater detail below in conjunction with FIG. 24. Returning to the example of hipifying CUDA code, calls to CUDA runtime API, CUDA driver API, and/or CUDA libraries may be converted to corresponding HIP API calls. Automated translations performed by translation tool 2301 may sometimes be incomplete, requiring additional, manual effort to fully port source code 2300.

One or more techniques described herein may utilize other methods of converting one type of code to another type of code to enable interchangeability between different device architectures. In at least one embodiment, an application for one platform (e.g., a CUDA application) can be compiled into code for implementation on another platform (e.g., an AMD processor, Intel processor, or other processor). For example, source code 2300 can include source code for one platform (e.g., CUDA). Compiler 2301 can compile the source 2300 into an executable file 2310 that can be used by another platform (e.g., AMD or Intel). Programming toolkits can allow applications for one platform (e.g., CUDA) to be compiled (e.g., natively) for another platform (e.g., AMD or Intel). For example, a GPGPU programming toolkit can allow for CUDA applications to be natively compiled for AMD GPUs. Programs (e.g., CUDA programs) or its build system do not have to be modified or translated to another language before compiling to code for another platform. A compiler may accept the same command-line options and programming dialect (e.g., CUDA dialect) as another compiler (e.g., nvcc for CUDA), serving as a drop-in replacement to impersonate an installation of a toolkit (e.g., NVIDIA CUDA Toolkit), so existing build tools and scripts (e.g., like cmake) work without further modification. In at least one embodiment, an nvcc-compatible compiler can be used to compile nvcc-dialect CUDA for AMD GPUs, including PTX asm. Implementations of CUDA runtime and driver APIs for AMD GPUs can be used. Libraries (e.g., open source wrapper libraries) can provide APIs, such as "CUDA-X" APIs by delegating to the corresponding ROCm libraries. An example implementation includes SCALE from Spectral Compute in London, England. Instead of providing a new way to write GPGPU software, SCALE allows programs written using the widely-popular CUDA language to be directly compiled for AMD GPUs. Additional implementations can include a Clang compiler that provides a language front-end and tooling infrastructure for languages in the C language family (C, C++, Objective C/C++, OpenCL, CUDA, and RenderScript). In at least one embodiment, compilers described herein, such as, but not limited to compiler 2301, compiler 2305, and/or compiler 2306 can include one or more circuits to compile code (e.g., CUDA, HIP, OpenCL, OneAPI, or others) to cause a compiler to indicate one or more portions of one or more software programs to be performed by one or more processors concurrently and/or perform any of the operations described above or elsewhere herein.

FIG. 24 illustrates a system 2400 configured to compile and execute CUDA source code 2410 using different types of processing units, in accordance with at least one embodiment. System 2400 includes CUDA source code 2410, a CUDA compiler 2450, host executable code 2470(1), host executable code 2470(2), CUDA device executable code 2484, a CPU 2490, a CUDA-enabled GPU 2494, a GPU 2492, a CUDA to HIP translation tool 2420, HIP source code 2430, a HIP compiler driver 2440, an HCC 2460, and HCC device executable code 2482.

CUDA source code 2410 may be a collection of human-readable code in a CUDA programming language. A CUDA programming language can be an extension of the C++ programming language that includes mechanisms to define device code and distinguish between device code and host code. Device code can include source code that, after compilation, is executable in parallel on a device. A device may be a processor that is optimized for parallel instruction processing, such as, but not limited to, CUDA-enabled GPU 2490, GPU 2492, or another GPGPU, etc. Host code is source code that, after compilation, is executable on a host. A host is a processor that is optimized for sequential instruction processing, such as, but not limited to, CPU 2490.

CUDA source code 2410 can include any number (including zero) of global functions 2412, any number (including zero) of device functions 2414, any number (including zero) of host functions 2416, and any number (including zero) of host/device functions 2418. Global functions 2412, device functions 2414, host functions 2416, and host/device functions 2418 may be mixed in CUDA source code 2410. Each of global functions 2412 may be executable on a device and callable from a host. One or more of global functions 2412 may therefore act as entry points to a device. Each of global functions 2412 can be a kernel. In a technique known as dynamic parallelism, one or more of global functions 2412 can define a kernel that is executable on a device and callable from such a device. A kernel can be executed N (where N is any positive integer) times in parallel by N different threads on a device during execution.

Each of device functions 2414 can be executed on a device and callable from such a device only. Each of host functions 2416 can be executed on a host and callable from such a host only. Each of host/device functions 2416 may define both a host version of a function that is executable on a host and callable from such a host only and a device version of the function that is executable on a device and callable from such a device only.

CUDA source code 2410 may also include any number of calls to any number of functions that may be defined via a CUDA runtime API 2402. CUDA runtime API 2402 may include any number of functions that execute on a host to allocate and deallocate device memory, transfer data between host memory and device memory, manage systems with multiple devices, etc. CUDA source code 2410 may also include any number of calls to any number of functions that may be specified in any number of other CUDA APIs. A CUDA API may be any API that is designed for use by CUDA code. CUDA APIs can include CUDA runtime API 2402, a CUDA driver API, APIs for any number of CUDA libraries, etc, including any API(s) described elsewhere herein. Relative to CUDA runtime API 2402, a CUDA driver API can be a lower-level API but can provide finer-grained control of a device. Examples of CUDA libraries include cuBLAS, cuFFT, cuRAND, cuDNN, etc.

CUDA compiler 2450 may compile input CUDA code (e.g., CUDA source code 2410) to generate host executable code 2470(1) and CUDA device executable code 2484. CUDA compiler 2450 may be, but is not limited to, NVCC. Host executable code 2470(1) can be a compiled version of host code included in input source code that is executable on CPU 2490. CPU 2490 may be any processor that is optimized for sequential instruction processing.

CUDA device executable code 2484 may be a compiled version of device code included in input source code that is executable on CUDA-enabled GPU 2494. CUDA device executable code 2484 may include binary code. CUDA device executable code 2484 can include IR code, such as, but not limited to, PTX code, that is further compiled at runtime into binary code for a specific target device (e.g., CUDA-enabled GPU 2494) by a device driver. CUDA-enabled GPU 2494 may include any processor that is optimized for parallel instruction processing and that supports CUDA. CUDA-enabled GPU 2494 may be developed by NVIDIA Corporation of Santa Clara, CA.

CUDA to HIP translation tool 2420 can be configured to translate CUDA source code 2410 to functionally similar HIP source code 2430. HIP source code 2430 may include a collection of human-readable code in a HIP programming language. HIP code can include human-readable code in a HIP programming language. A HIP programming language can include an extension of the C++ programming language that includes functionally similar versions of CUDA mechanisms to define device code and distinguish between device code and host code. A HIP programming language may include a subset of functionality of a CUDA programming language. For example, a HIP programming language includes mechanism(s) to define global functions 2412, but such a HIP programming language may lack support for dynamic parallelism and therefore global functions 2412 defined in HIP code may be callable from a host only.

HIP source code 2430 may include any number (including zero) of global functions 2412, any number (including zero) of device functions 2414, any number (including zero) of host functions 2416, and any number (including zero) of host/device functions 2418. HIP source code 2430 may also include any number of calls to any number of functions that may be specified in a HIP runtime API 2432. HIP runtime API 2432 may include functionally similar versions of a subset of functions included in CUDA runtime API 2402. HIP source code 2430 may also include any number of calls to any number of functions that may be specified in any number of other HIP APIs. A HIP API may be any API that is designed for use by HIP code and/or ROCm. HIP APIs may include HIP runtime API 2432, a HIP driver API, APIs for any number of HIP libraries, APIs for any number of ROCm libraries, etc.

CUDA to HIP translation tool 2420 can convert each kernel call in CUDA code from a CUDA syntax to a HIP syntax and can convert any number of other CUDA calls in CUDA code to any number of other functionally similar HIP calls. A CUDA call can include a call to a function specified in a CUDA API, and a HIP call can include a call to a function specified in a HIP API. CUDA to HIP translation tool 2420 may convert any number of calls to functions specified in CUDA runtime API 2402 to any number of calls to functions specified in HIP runtime API 2432.

CUDA to HIP translation tool 2420 can include a tool known as hipify-perl that executes a text-based translation process. CUDA to HIP translation tool 2420 can include a tool known as hipify-clang that, relative to hipify-perl, executes a more complex and more robust translation process that involves parsing CUDA code using clang (a compiler front-end) and then translating resulting symbols. Converting CUDA code to HIP code may include modifications (e.g., manual edits) in addition to those performed by CUDA to HIP translation tool 2420.

HIP compiler driver 2440 can include a front end that determines a target device 2446 and then configures a compiler that is compatible with target device 2446 to compile HIP source code 2430. Target device 2446 can include a processor that is optimized for parallel instruction processing. HIP compiler driver 2440 may determine target device 2446 in any technically feasible fashion.

If target device 2446 is compatible with CUDA (e.g., CUDA-enabled GPU 2494), then HIP compiler driver 2440 can generate a HIP/NVCC compilation command 2442. HIP/NVCC compilation command 2442 can configure CUDA compiler 2450 to compile HIP source code 2430 using a HIP to CUDA translation header and a CUDA runtime library. In response to HIP/NVCC compilation command 2442, CUDA compiler 2450 may generate host executable code 2470(1) and CUDA device executable code 2484.

If target device 2446 is not compatible with CUDA, then HIP compiler driver 2440 may generate a HIP/HCC compilation command 2444. HIP/HCC compilation command 2444 can configure HCC 2460 to compile HIP source code 2430 using an HCC header and a HIP/HCC runtime library. In response to HIP/HCC compilation command 2444, HCC 2460 may generate host executable code 2470(2) and HCC device executable code 2482. HCC device executable code 2482 may be a compiled version of device code included in HIP source code 2430 that is executable on GPU 2492. GPU 2492 may be any processor that is optimized for parallel instruction processing, is not compatible with CUDA, and is compatible with HCC. GPU 2492 can be developed by AMD Corporation of Santa Clara, CA. GPU 2492 can include a non-CUDA-enabled GPU 2492.

For explanatory purposes only, three different flows that may be implemented in at least one embodiment to compile CUDA source code 2410 for execution on CPU 2490 and different devices are depicted in FIG. 24. A direct CUDA flow can compile CUDA source code 2410 for execution on CPU 2490 and CUDA-enabled GPU 2494 without translating CUDA source code 2410 to HIP source code 2430. An indirect CUDA flow can translate CUDA source code 2410 to HIP source code 2430 and then compiles HIP source code 2430 for execution on CPU 2490 and CUDA-enabled GPU 2494. A CUDA/HCC flow can translate CUDA source code 2410 to HIP source code 2430 and then can compile HIP source code 2430 for execution on CPU 2490 and GPU 2492.

A direct CUDA flow that may be implemented is depicted via dashed lines and a series of bubbles annotated A1-A3. As depicted with bubble annotated A1, CUDA compiler 2450 can receive CUDA source code 2410 and a CUDA compile command 2448 that can configure CUDA compiler 2450 to compile CUDA source code 2410. CUDA source code 2410 that can be used in a direct CUDA flow can be written in a CUDA programming language that is based on a programming language other than C++ (e.g., C, Fortran, Python, Java, etc.). In response to CUDA compile command 2448, CUDA compiler 2450 can generate host executable code 2470(1) and CUDA device executable code 2484 (depicted with bubble annotated A2). As depicted with bubble annotated A3, host executable code 2470(1) and CUDA device executable code 2484 may be executed on, respectively, CPU 2490 and CUDA-enabled GPU 2494. CUDA device executable code 2484 can include binary code. CUDA device executable code 2484 can include PTX code and can be further compiled into binary code for a specific target device at runtime.

An indirect CUDA flow that may be implemented is depicted via dotted lines and a series of bubbles annotated B1-B6. As depicted with bubble annotated B1, CUDA to HIP translation tool 2420 can receive CUDA source code 2410. As depicted with bubble annotated B2, CUDA to HIP translation tool 2420 can translate CUDA source code 2410 to HIP source code 2430. As depicted with bubble annotated B3, HIP compiler driver 2440 can receive HIP source code 2430 and can determine that target device 2446 is CUDA-enabled.

As depicted with bubble annotated B4, HIP compiler driver 2440 can generate HIP/NVCC compilation command 2442 and can transmit both HIP/NVCC compilation command 2442 and HIP source code 2430 to CUDA compiler 2450. HIP/NVCC compilation command 2442 can configure CUDA compiler 2450 to compile HIP source code 2430 using a HIP to CUDA translation header and a CUDA runtime library. HIP to CUDA translation header can translate any number of mechanisms (e.g., functions) specified in any number of HIP APIs to any number of mechanisms specified in any number of CUDA APIs. CUDA compiler 2450 may use HIP to CUDA translation header in conjunction with a CUDA runtime library corresponding to CUDA runtime API 2402 to generate host executable code 2470(1) and CUDA device executable code 2484. In response to HIP/NVCC compilation command 2442, CUDA compiler 2450 can generate host executable code 2470(1) and CUDA device executable code 2484 (depicted with bubble annotated B5). As depicted with bubble annotated B6, host executable code 2470(1) and CUDA device executable code 2484 may be executed on, respectively, CPU 2490 and CUDA-enabled GPU 2494. CUDA device executable code 2484 can include binary code. CUDA device executable code 2484 can include PTX code and can be further compiled into binary code for a specific target device at runtime.

A CUDA/HCC flow that may be implemented is depicted via solid lines and a series of bubbles annotated C1-C6. As depicted with bubble annotated C1, CUDA to HIP translation tool 2420 can receive CUDA source code 2410. As depicted with bubble annotated C2, CUDA to HIP translation tool 2420 can translate CUDA source code 2410 to HIP source code 2430. As depicted with bubble annotated C3, HIP compiler driver 2440 can receive HIP source code 2430 and can determine that target device 2446 is not CUDA-enabled.

HIP compiler driver 2440 may generate HIP/HCC compilation command 2444 and may transmit both HIP/HCC compilation command 2444 and HIP source code 2430 to HCC 2460 (depicted with bubble annotated C4). HIP/HCC compilation command 2444 can configure HCC 2460 to compile HIP source code 2430 using an HCC header and a HIP/HCC runtime library. HIP/HCC runtime library can correspond to HIP runtime API 2432. HCC header may include any number and type of interoperability mechanisms for HIP and HCC. In response to HIP/HCC compilation command 2444, HCC 2460 can generate host executable code 2470(2) and HCC device executable code 2482 (depicted with bubble annotated C5). As depicted with bubble annotated C6, host executable code 2470(2) and HCC device executable code 2482 may be executed on, respectively, CPU 2490 and GPU 2492.

After CUDA source code 2410 is translated to HIP source code 2430, HIP compiler driver 2440 may subsequently be used to generate executable code for either CUDA-enabled GPU 2494 or GPU 2492 without re-executing CUDA to HIP translation tool 2420. CUDA to HIP translation tool 2420 can translate CUDA source code 2410 to HIP source code 2430 that is then stored in memory. HIP compiler driver 2440 can then configure HCC 2460 to generate host executable code 2470(2) and HCC device executable code 2482 based on HIP source code 2430. In at least one embodiment, HIP compiler driver 2440 subsequently configures CUDA compiler 2450 to generate host executable code 2470(1) and CUDA device executable code 2484 based on stored HIP source code 2430.

An example kernel may be translated by CUDA-to-HIP translation tool 2420 of FIG. 24, in accordance with at least one embodiment. CUDA source code 2410 partitions an overall problem that a given kernel is designed to solve into relatively coarse sub-problems that can independently be solved using thread blocks. Each thread block includes any number of threads. Each sub-problem can be partitioned into relatively fine pieces that can be solved cooperatively in parallel by threads within a thread block. Threads within a thread block can cooperate by sharing data through shared memory and by synchronizing execution to coordinate memory accesses.

CUDA source code 2410 can organize thread blocks associated with a given kernel into a one-dimensional, a two-dimensional, or a three-dimensional grid of thread blocks. Each thread block includes any number of threads, and a grid includes any number of thread blocks.

A kernel can be a function in device code that is defined using a "__global__" declaration specifier. The dimension of a grid that executes a kernel for a given kernel call and associated streams may be specified using a CUDA kernel launch syntax. CUDA kernel launch syntax is specified as "KernelName<<<GridSize, BlockSize, SharedMemorySize, Stream>>>(KernelArguments);". An execution configuration syntax can include a "<<<...>>>" construct that is inserted between a kernel name ("KernelName") and a parenthesized list of kernel arguments ("KernelArguments"). CUDA kernel launch syntax can include a CUDA launch function syntax instead of an execution configuration syntax.

"GridSize" can be of a type dim3 and specify the dimension and size of a grid. Type dim3 may be a CUDA-defined structure that includes unsigned integers x, y, and z. If z is not specified, then z may default to one. If y is not specified, then y may default to one. The number of thread blocks in a grid can be equal to the product of GridSize.x, GridSize.y, and GridSize.z. "BlockSize" can be of type dim3 and specify the dimension and size of each thread block. The number of threads per thread block may be equal to the product of BlockSize.x, BlockSize.y, and BlockSize.z. Each thread that executes a kernel may be given a unique thread ID that is accessible within the kernel through a built-in variable (e.g., "threadIdx").

With respect to CUDA kernel launch syntax, "SharedMemorySize" may be an optional argument that may specify a number of bytes in a shared memory that is dynamically allocated per thread block for a given kernel call in addition to statically allocated memory. With respect to CUDA kernel launch syntax, SharedMemorySize may default to zero. With respect to CUDA kernel launch syntax, "Stream" may be an optional argument that specifies an associated stream and defaults to zero to specify a default stream. A stream may be a sequence of commands (possibly issued by different host threads) that execute in order. Different streams may execute commands out of order with respect to one another or concurrently.

CUDA source code 2410 may include a kernel definition for an example kernel "MatAdd" and a main function. Main function may be host code that executes on a host and includes a kernel call that causes kernel MatAdd to execute on a device. Kernel MatAdd can add two matrices A and B of size NxN, where N is a positive integer, and store the result in a matrix C. Main function can define a threadsPerBlock variable as 16 by 16 and a numBlocks variable as N/16 by N/16. Main function can then specify kernel call "MatAdd<<<numBlocks, threadsPerBlock>>>(A, B, C);". As per CUDA kernel launch syntax, kernel MatAdd can be executed using a grid of thread blocks having a dimension N/16 by N/16, where each thread block has a dimension of 16 by 16. Each thread block can include 256 threads, a grid can be created with enough blocks to have one thread per matrix element, and each thread in such a grid may execute kernel MatAdd to perform one pair-wise addition.

While translating CUDA source code 2410 to HIP source code 2430, CUDA to HIP translation tool 2420 may translate each kernel call in CUDA source code 2410 from CUDA kernel launch syntax to a HIP kernel launch syntax and may convert any number of other CUDA calls in source code 2410 to any number of other functionally similar HIP calls. HIP kernel launch syntax can be specified as "hipLaunchKernelGGL(KernelName,GridSize, BlockSize, SharedMemorySize, Stream, KernelArguments);". Each of KernelName, GridSize, BlockSize, ShareMemorySize, Stream, and KernelArguments can have the same meaning in HIP kernel launch syntax as in CUDA kernel launch syntax (described previously herein). Arguments SharedMemorySize and Stream can be required in HIP kernel launch syntax and can be optional in CUDA kernel launch syntax.

A portion of HIP source code 2430 can be identical to a portion of CUDA source code 2410 depicted except for a kernel call that causes kernel MatAdd to execute on a device. Kernel MatAdd may be defined in HIP source code 2430 with the same "__global__" declaration specifier with which kernel MatAdd is defined in CUDA source code 2410. A kernel call in HIP source code 2430 may be "hipLaunchKernelGGL(MatAdd, numBlocks, threadsPerBlock, 0, 0, A, B, C);", while a corresponding kernel call in CUDA source code 2410 is "MatAdd<<<numBlocks, threadsPerBlock>>>(A, B, C);".

Other implementations are contemplated and can be performed similarly to the CUDA and HIP implementations above, such as oneAPI, OpenCL, and other programming platforms. Code can be translated in any direction. For example, CUDA can be translated to HIP, and CUDA can be translated to OpenCL. SnuCL-Tr and CUCL can be used to translate OpenCL to CUDA or CUDA to OpenCL, respectively. Compiled code or intermediate representations (e.g., CUDA PTX code) can also be translated to run on other processor platforms (e.g., AMD or Intel). For example, PTX code can be translated to run on Intel or AMD processors using a translation tool, such as ZLUDA.

One or more techniques described herein can utilize a oneAPI programming model. A oneAPI programming model can refer to a programming model for interacting with various compute accelerator architectures. OneAPI may refer to an application programming interface (API) designed to interact with various compute accelerator architectures. A oneAPI programming model may utilize a DPC++ programming language. A DPC++ programming language may refer to a high-level language for data parallel programming productivity. A DPC++ programming language can be based at least in part on C and/or C++ programming languages. A oneAPI programming model can be a programming model such as, but not limited to, those developed by Intel Corporation of Santa Clara, CA.

OneAPI and/or oneAPI programming model can be utilized to interact with various accelerator, GPU, processor, and/or variations thereof, architectures. OneAPI may include a set of libraries that implement various functionalities. OneAPI may include at least a oneAPI DPC++ library, a oneAPI math kernel library, a oneAPI data analytics library, a oneAPI deep neural network library, a oneAPI collective communications library, a oneAPI threading building blocks library, a oneAPI video processing library, and/or variations thereof.

A oneAPI DPC++ library, also referred to as oneDPL, can be a library that implements algorithms and functions to accelerate DPC++ kernel programming. OneDPL may implement one or more standard template library (STL) functions. OneDPL can implement one or more parallel STL functions. OneDPL can provide a set of library classes and functions such as, but not limited to, parallel algorithms, iterators, function object classes, range-based API, and/or variations thereof. OneDPL can implement one or more classes and/or functions of a C++ standard library. OneDPL can implement one or more random number generator functions.

A oneAPI math kernel library, also referred to as oneMKL, can be a library that implements various optimized and parallelized routines for various mathematical functions and/or operations. OneMKL can implement one or more basic linear algebra subprograms (BLAS) and/or linear algebra package (LAPACK) dense linear algebra routines. OneMKL may implement one or more sparse BLAS linear algebra routines. OneMKL can implement one or more random number generators (RNGs). OneMKL may implement one or more vector mathematics (VM) routines for mathematical operations on vectors. OneMKL may implement one or more Fast Fourier Transform (FFT) functions.

A oneAPI data analytics library, also referred to as oneDAL, can include a library that implements various data analysis applications and distributed computations. OneDAL can implement various algorithms for preprocessing, transformation, analysis, modeling, validation, and decision making for data analytics, in batch, online, and distributed processing modes of computation. OneDAL can implement various C++ and/or Java APIs and various connectors to one or more data sources. OneDAL may implement DPC++ API extensions to a traditional C++ interface and enables GPU usage for various algorithms.

A oneAPI deep neural network library, also referred to as oneDNN, can include a library that implements various deep learning functions. OneDNN may implement various neural network, machine learning, and deep learning functions, algorithms, and/or variations thereof.

A oneAPI collective communications library, also referred to as oneCCL, can include a library that implements various applications for deep learning and machine learning workloads. OneCCL can be built upon lower-level communication middleware, such as, but not limited to, message passing interface (MPI) and libfabrics. OneCCL can enable a set of deep learning specific optimizations, such as, but not limited to, prioritization, persistent operations, out of order executions, and/or variations thereof. OneCCL can implement various CPU and GPU functions.

A oneAPI threading building blocks library, also referred to as oneTBB, can include a library that implements various parallelized processes for various applications. OneTBB can be utilized for task-based, shared parallel programming on a host. OneTBB may implement generic parallel algorithms. OneTBB may implement concurrent containers. OneTBB may implement a scalable memory allocator. OneTBB may implement a work-stealing task scheduler. OneTBB may implement low-level synchronization primitives. OneTBB may be compiler-independent and usable on various processors, such as, but not limited to, GPUs, PPUs, CPUs, and/or variations thereof.

A oneAPI video processing library, also referred to as oneVPL, can include a library that is utilized for accelerating video processing in one or more applications. OneVPL can implement various video decoding, encoding, and processing functions. OneVPL can implement various functions for media pipelines on CPUs, GPUs, and other accelerators. OneVPL can implement device discovery and selection in media centric and video analytics workloads. OneVPL can implement API primitives for zero-copy buffer sharing.

A oneAPI programming model may utilize a DPC++ programming language. A DPC++ programming language can include a programming language that can include functionally similar versions of CUDA mechanisms to define device code and distinguish between device code and host code. A DPC++ programming language may include a subset of functionality of a CUDA programming language. One or more CUDA programming model operations may be performed using a oneAPI programming model using a DPC++ programming language.

Any application programming interface (API) described herein can be compiled into one or more instructions, operations, or any other signal by a compiler, interpreter, or other software tool. Compilation can include generating one or more machine-executable instructions, operations, or other signals from source code. An API compiled into one or more instructions, operations, or other signals, when performed, can cause one or more processors such as, but not limited to, processors described, e.g., in FIGs. 9-21, or any other logic circuit further described herein to perform one or more computing operations.

In at least one embodiment, translation tools described elsewhere herein, such as, but not limited to, can include one or more circuits to translate CUDA code to cause a compiler to indicate one or more portions of one or more software programs to be performed by one or more processors concurrently to HIP, oneAPI, OpenCL, or any other language used to perform any of the operations described above or elsewhere herein. One or more circuits can be configured by software to translate CUDA code to cause a compiler to indicate one or more portions of one or more software programs to be performed by one or more processors concurrently to HIP, oneAPI, OpenCL, or any other language used to perform any of the operations described above or elsewhere herein.

### AUTONOMOUS VEHICLE

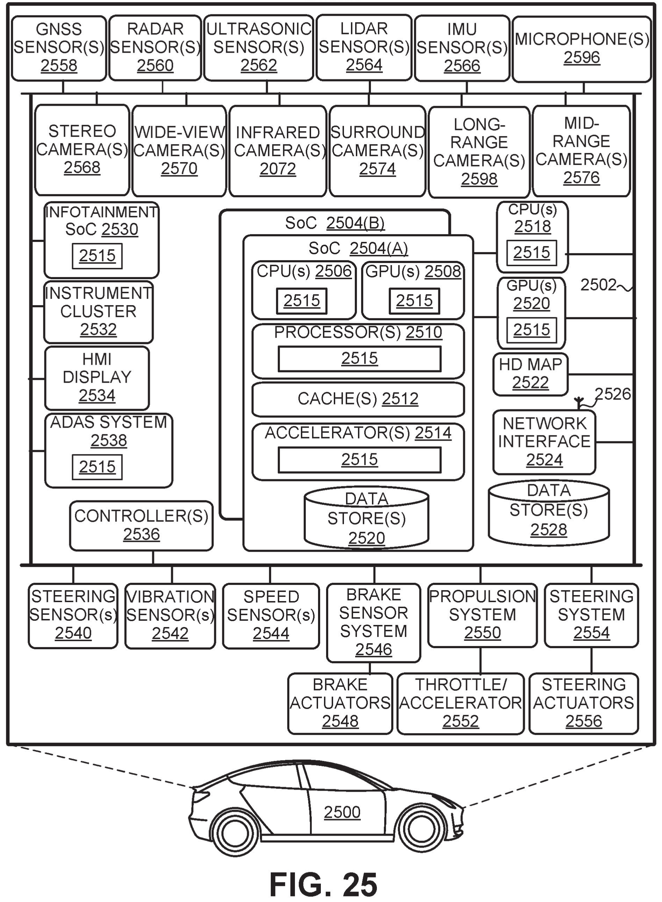

FIG. 25 illustrates an example of an autonomous vehicle 2500, in accordance with at least one embodiment. Autonomous vehicle 2500 (alternatively referred to herein as "vehicle 2500") may be a passenger vehicle, such as, but not limited to, a car, a truck, a bus, and/or another type of vehicle that accommodates one or more passengers. In at least one embodiment, vehicle 2500 may be a semi-tractor-trailer truck used for hauling cargo. Vehicle 2500 may be an airplane, robotic vehicle, or other kind of vehicle.

Autonomous vehicles may be described in terms of automation levels, defined by National Highway Traffic Safety Administration ("NHTSA"), a division of US Department of Transportation, and Society of Automotive Engineers ("SAE") "Taxonomy and Definitions for Terms Related to Driving Automation Systems for On-Road Motor Vehicles" (e.g., Standard No. J3016-201706, published on June 15, 2018, Standard No. J3016-201609, published on September 30, 2016, and previous and future versions of this standard). In at least one embodiment, vehicle 2500 may be capable of functionality in accordance with one or more of Level 1 through Level 5 of autonomous driving levels. For example, in at least one embodiment, vehicle 2500 may be capable of conditional automation (Level 3), high automation (Level 4), and/or full automation (Level 5), depending on embodiment.

Vehicle 2500 may include components such as, but not limited to, a chassis, a vehicle body, wheels (e.g., 2, 4, 6, 8, 18, etc.), tires, axles, and other components of a vehicle. Vehicle 2500 may include a propulsion system 2550, such as, but not limited to, an internal combustion engine, hybrid electric power plant, an all-electric engine, and/or another propulsion system type. Propulsion system 2550 may be connected to a drive train of vehicle 2500, which may include a transmission, to enable propulsion of vehicle 2500. Propulsion system 2550 may be controlled in response to receiving signals from a throttle/accelerator(s) 2552.

A steering system 2554, which may include a steering wheel, is used to steer vehicle 2500 (e.g., along a desired path or route) when propulsion system 2550 is operating (e.g., when vehicle 2500 is in motion). Steering system 2554 may receive signals from steering actuator(s) 2556. A steering wheel may be optional for full automation (Level 5) functionality. A brake sensor system 2546 may be used to operate vehicle brakes in response to receiving signals from brake actuator(s) 2548 and/or brake sensors.

Controller(s) 2536, which may include one or more system on chips ("SoCs") and/or graphics processing unit(s) ("GPU(s)"), can provide signals (e.g., representative of commands) to one or more components and/or systems of vehicle 2500. For instance, controller(s) 2536 may send signals to operate vehicle brakes via brake actuator(s) 2548, to operate steering system 2554 via steering actuator(s) 2556, to operate propulsion system 2550 via throttle/accelerator(s) 2552. Controller(s) 2536 may include one or more onboard (e.g., integrated) computing devices that process sensor signals, and output operation commands (e.g., signals representing commands) to enable autonomous driving and/or to assist a human driver in driving vehicle 2500. Controller(s) 2536 may include a first controller for autonomous driving functions, a second controller for functional safety functions, a third controller for artificial intelligence functionality (e.g., computer vision), a fourth controller for infotainment functionality, a fifth controller for redundancy in emergency conditions, and/or other controllers. A single controller may handle two or more of above functionalities, two or more controllers may handle a single functionality, and/or any combination thereof.

Controller(s) 2536 may provide signals for controlling one or more components and/or systems of vehicle 2500 in response to sensor data received from one or more sensors (e.g., sensor inputs). Sensor data may be received from, for example, global navigation satellite systems ("GNSS") sensor(s) 2558 (e.g., Global Positioning System sensor(s)), RADAR sensor(s) 2560, ultrasonic sensor(s) 2562, LIDAR sensor(s) 2564, inertial measurement unit ("IMU") sensor(s) 2566 (e.g., accelerometer(s), gyroscope(s), a magnetic compass or magnetic compasses, magnetometer(s), etc.), microphone(s) 2596, stereo camera(s) 2568, wide-view camera(s) 2570 (e.g., fisheye cameras), infrared camera(s) 2572, surround camera(s) 2574 (e.g., 360 degree cameras), long-range cameras 2598, mid-range camera(s) 2576, speed sensor(s) 2544 (e.g., for measuring speed of vehicle 2500), vibration sensor(s) 2542, steering sensor(s) 2540, brake sensor(s) (e.g., as part of brake sensor system 2546), and/or other sensor types.

One or more of controller(s) 2536 may receive inputs (e.g., represented by input data) from an instrument cluster 2532 of vehicle 2500 and provide outputs (e.g., represented by output data, display data, etc.) via a human-machine interface ("HMI") display 2534, an audible annunciator, a loudspeaker, and/or via other components of vehicle 2500. Outputs may include information such as, but not limited to, vehicle velocity, speed, time, map data (e.g., a High Definition map (not shown), location data (e.g., vehicle's 2500 location, such as, but not limited to, on a map), direction, location of other vehicles (e.g., an occupancy grid), information about objects and status of objects as perceived by controller(s) 2536, etc. For example, HMI display 2534 may display information about presence of one or more objects (e.g., a street sign, caution sign, traffic light changing, etc.), and/or information about driving maneuvers vehicle has made, is making, or will make (e.g., changing lanes now, taking exit 34B in two miles, etc.).

Each of components, features, and systems of vehicle 2500 in FIG. 25 may be connected via a bus 2502. Bus 2502 may include a CAN data interface (alternatively referred to herein as a "CAN bus"). A CAN may be a network inside vehicle 2500 used to aid in control of various features and functionality of vehicle 2500, such as, but not limited to, actuation of brakes, acceleration, braking, steering, windshield wipers, etc. Bus 2502 may be configured to have dozens or even hundreds of nodes, each with its own unique identifier (e.g., a CAN ID). Bus 2502 may be read to find steering wheel angle, ground speed, engine revolutions per minute ("RPMs"), button positions, and/or other vehicle status indicators. Bus 2502 may be a CAN bus that is ASIL B compliant.

In addition to, or alternatively from CAN, FlexRay and/or Ethernet protocols may be used. There may be any number of busses forming bus 2502, which may include zero or more CAN busses, zero or more FlexRay busses, zero or more Ethernet busses, and/or zero or more other types of busses using different protocols. Two or more busses may be used to perform different functions, and/or may be used for redundancy. For example, a first bus may be used for collision avoidance functionality and a second bus may be used for actuation control. Each bus of bus 2502 may communicate with any of components of vehicle 2500, and two or more busses of bus 2502 may communicate with corresponding components. Each of any number of system(s) on chip(s) ("SoC(s)") 2504 (such as, but not limited to, SoC 2504(A) and SoC 2504(B)), each of controller(s) 2536, and/or each computer within vehicle may have access to same input data (e.g., inputs from sensors of vehicle 2500), and may be connected to a common bus, such CAN bus.

Any number of cameras can be positioned at any choice of camera locations and fields of view for autonomous vehicle 2500 of FIG. 25A, in accordance with at least one embodiment. Cameras and respective fields of view may be one example embodiment and are not intended to be limiting. For instance, additional and/or alternative cameras may be included and/or cameras may be located at different locations on vehicle 2500.

Camera types for cameras may include digital cameras that may be adapted for use with components and/or systems of vehicle 2500. Camera(s) may operate at automotive safety integrity level ("ASIL") B and/or at another ASIL. Camera types may be capable of any image capture rate, such as, but not limited to, 60 frames per second (fps), 1220 fps, 240 fps, etc., depending on embodiment. Cameras may be capable of using rolling shutters, global shutters, another type of shutter, or a combination thereof. In at least one embodiment, color filter array may include a red clear clear clear ("RCCC") color filter array, a red clear clear blue ("RCCB") color filter array, a red blue green clear ("RBGC") color filter array, a Foveon X3 color filter array, a Bayer sensors ("RGGB") color filter array, a monochrome sensor color filter array, and/or another type of color filter array. Clear pixel cameras, such as, but not limited to, cameras with an RCCC, an RCCB, and/or an RBGC color filter array, may be used in an effort to increase light sensitivity.

One or more of camera(s) may be used to perform advanced driver assistance systems ("ADAS") functions (e.g., as part of a redundant or fail-safe design). For example, a MultiFunction Mono Camera may be installed to provide functions including lane departure warning, traffic sign assist and intelligent headlamp control. One or more of camera(s) (e.g., all cameras) may record and provide image data (e.g., video) simultaneously.

One or more cameras may be mounted in a mounting assembly, such as, but not limited to, a custom designed (three-dimensional ("3D") printed) assembly, in order to cut out stray light and reflections from within vehicle 2500 (e.g., reflections from dashboard reflected in windshield mirrors) which may interfere with camera image data capture abilities. With reference to wing-mirror mounting assemblies, wing-mirror assemblies may be custom 3D printed so that a camera mounting plate matches a shape of a wing-mirror. Camera(s) may be integrated into wing-mirrors. For side-view cameras, camera(s) may also be integrated within four pillars at each corner of a cabin.

Cameras with a field of view that include portions of an environment in front of vehicle 2500 (e.g., front-facing cameras) may be used for surround view, to help identify forward facing paths and obstacles, as well as aid in, with help of one or more of controller(s) 2536 and/or control SoCs, providing information critical to generating an occupancy grid and/or determining preferred vehicle paths. Front-facing cameras may be used to perform many similar ADAS functions as LIDAR, including emergency braking, pedestrian detection, and collision avoidance. Front-facing cameras may also be used for ADAS functions and systems including Lane Departure Warnings ("LDW"), Autonomous Cruise Control ("ACC"), and/or other functions such as, but not limited to, traffic sign recognition.

A variety of cameras may be used in a front-facing configuration, including, for example, a monocular camera platform that includes a CMOS ("complementary metal oxide semiconductor") color imager. A wide-view camera 2570 may be used to perceive objects coming into view from a periphery (e.g., pedestrians, crossing traffic or bicycles). There may be any number (including zero) wide-view cameras 2570 on vehicle 2500. Any number of long-range camera(s) 2598 (e.g., a long-view stereo camera pair) may be used for depth-based object detection, especially for objects for which a neural network has not yet been trained. Long-range camera(s) 2598 may also be used for object detection and classification, as well as basic object tracking.

Any number of stereo camera(s) 2568 may also be included in a front-facing configuration. One or more of stereo camera(s) 2568 may include an integrated control unit comprising a scalable processing unit, which may provide a programmable logic ("FPGA") and a multi-core micro-processor with an integrated Controller Area Network ("CAN") or Ethernet interface on a single chip. Such a unit may be used to generate a 3D map of an environment of vehicle 2500, including a distance estimate for all points in an image. One or more of stereo camera(s) 2568 may include compact stereo vision sensor(s) that may include two camera lenses (one each on left and right) and an image processing chip that may measure distance from vehicle 2500 to target object and use generated information (e.g., metadata) to activate autonomous emergency braking and lane departure warning functions. Other types of stereo camera(s) 2568 may be used in addition to, or alternatively from, those described herein.

Cameras with a field of view that include portions of environment to sides of vehicle 2500 (e.g., side-view cameras) may be used for surround view, providing information used to create and update an occupancy grid, as well as to generate side impact collision warnings. For example, surround camera(s) 2574 (e.g., four surround cameras) could be positioned on vehicle 2500. Surround camera(s) 2574 may include any number and combination of wide-view cameras, fisheye camera(s), 360 degree camera(s), and/or similar cameras. For instance, four fisheye cameras may be positioned on a front, a rear, and sides of vehicle 2500. Vehicle 2500 may use three surround camera(s) 2574 (e.g., left, right, and rear), and may leverage one or more other camera(s) (e.g., a forward-facing camera) as a fourth surround-view camera.

Cameras with a field of view that include portions of an environment behind vehicle 2500 (e.g., rear-view cameras) may be used for parking assistance, surround view, rear collision warnings, and creating and updating an occupancy grid. A wide variety of cameras may be used including, but not limited to, cameras that may be also suitable as a front-facing camera(s) (e.g., long-range cameras 2598 and/or mid-range camera(s) 2576, stereo camera(s) 2568, infrared camera(s) 2572, etc.,) as described herein.

Vehicle 2500 may include any number of SoCs 2504 or other processors described elsewhere herein, such as, but not limited to, processors and/or components illustrated and described for FIGs. 9-21. Each of SoCs 2504 may include central processing units ("CPU(s)") 2506, graphics processing units ("GPU(s)") 2508, processor(s) 2510, cache(s) 2512, accelerator(s) 2514, data store(s) 2516, and/or other components and features not illustrated. SoC(s) 2504 may be used to control vehicle 2500 in a variety of platforms and systems. For example, SoC(s) 2504 may be combined in a system (e.g., system of vehicle 2500) with a High Definition ("HD") map 2522 which may obtain map refreshes and/or updates via network interface 2524 from one or more servers (not shown).

CPU(s) 2506 may include a CPU cluster or CPU complex (alternatively referred to herein as a "CCPLEX"). CPU(s) 2506 may include multiple cores and/or level two ("L2") caches. For instance, CPU(s) 2506 may include eight cores in a coherent multi-processor configuration. CPU(s) 2506 may include four dual-core clusters where each cluster has a dedicated L2 cache (e.g., a 2 megabyte (MB) L2 cache). CPU(s) 2506 (e.g., CCPLEX) may be configured to support simultaneous cluster operations enabling any combination of clusters of CPU(s) 2506 to be active at any given time.

One or more of CPU(s) 2506 may implement power management capabilities that include one or more of following features: individual hardware blocks may be clock-gated automatically when idle to save dynamic power; each core clock may be gated when such core is not actively executing instructions due to execution of Wait for Interrupt ("WFI")/Wait for Event ("WFE") instructions; each core may be independently power-gated; each core cluster may be independently clock-gated when all cores may be clock-gated or power-gated; and/or each core cluster may be independently power-gated when all cores may be power-gated. CPU(s) 2506 may further implement an enhanced algorithm for managing power states, where allowed power states and expected wakeup times may be specified, and hardware/microcode determines which best power state to enter for core, cluster, and CCPLEX. Processing cores may support simplified power state entry sequences in software with work offloaded to microcode.

GPU(s) 2508 may include an integrated GPU (alternatively referred to herein as an "iGPU"). GPU(s) 2508 may be programmable and may be efficient for parallel workloads. GPU(s) 2508 may use an enhanced tensor instruction set. GPU(s) 2508 may include one or more streaming microprocessors, where each streaming microprocessor may include a level one ("L1") cache (e.g., an L1 cache with at least 96 KB storage capacity), and two or more streaming microprocessors may share an L2 cache (e.g., an L2 cache with a 512 KB storage capacity). GPU(s) 2508 may include at least eight streaming microprocessors. GPU(s) 2508 may use compute application programming interface(s) (API(s)). GPU(s) 2508 may use one or more parallel computing platforms and/or programming models (e.g., NVIDIA's CUDA model). Streaming microprocessors may be referred to as streaming multiprocessors ("SMs"), stream processors ("SPs"), stream processing units ("SPUs"), compute units ("CUs"), execution units ("EUs"), and/or slices, where a slice in this context can refer to a portion of processing resources in a processing unit (e.g., 16 cores, a ray tracing unit, a thread director or scheduler).

One or more of GPU(s) 2508 may be power-optimized for best performance in automotive and embedded use cases. For example, GPU(s) 2508 could be fabricated on Fin field-effect transistor ("FinFET") circuitry. Each streaming microprocessor may incorporate a number of mixed-precision processing cores partitioned into multiple blocks. For example, 64 PF32 cores and 32 FP64 cores could be partitioned into four processing blocks. Each processing block could be allocated 16 FP32 cores, 8 FP64 cores, 16 INT32 cores, two mixed-precision NVIDIA Tensor cores for deep learning matrix arithmetic, a level zero ("L0") instruction cache, a scheduler (e.g., warp scheduler) or sequencer, a dispatch unit, and/or a 64 KB register file. Streaming microprocessors may include independent parallel integer and floating-point data paths to provide for efficient execution of workloads with a mix of computation and addressing calculations. Streaming microprocessors may include independent thread scheduling capability to enable finer-grain synchronization and cooperation between parallel threads. Streaming microprocessors may include a combined L1 data cache and shared memory unit in order to improve performance while simplifying programming.

One or more of GPU(s) 2508 may include a high bandwidth memory ("HBM") and/or a 16 GB HBM2 memory subsystem to provide, in some examples, about 900 GB/second peak memory bandwidth. In addition to, or alternatively from, HBM memory, a synchronous graphics random-access memory ("SGRAM") may be used, such as, but not limited to, a graphics double data rate type five synchronous random-access memory ("GDDR5").

GPU(s) 2508 may include unified memory technology. Address translation services ("ATS") support may be used to allow GPU(s) 2508 to access CPU(s) 2506 page tables directly. When a GPU of GPU(s) 2508 memory management unit ("MMU") experiences a miss, an address translation request may be transmitted to CPU(s) 2506. In response, 2 CPU of CPU(s) 2506 may look in its page tables for a virtual-to-physical mapping for an address and transmit translation back to GPU(s) 2508. Unified memory technology may allow a single unified virtual address space for memory of both CPU(s) 2506 and GPU(s) 2508, thereby simplifying GPU(s) 2508 programming and porting of applications to GPU(s) 2508.

GPU(s) 2508 may include any number of access counters that may keep track of frequency of access of GPU(s) 2508 to memory of other processors. Access counter(s) may help ensure that memory pages may be moved to physical memory of a processor that is accessing pages most frequently, thereby improving efficiency for memory ranges shared between processors.

One or more of SoC(s) 2504 may include any number of cache(s) 2512, including those described herein. For example, cache(s) 2512 could include a level three ("L3") cache that is available to both CPU(s) 2506 and GPU(s) 2508 (e.g., that is connected to CPU(s) 2506 and GPU(s) 2508). Cache(s) 2512 may include a write-back cache that may keep track of states of lines, such as, but not limited to, by using a cache coherence protocol (e.g., MEI, MESI, MSI, etc.). A L3 cache may include 4 MB of memory or more, depending on embodiment, although smaller cache sizes may be used.

One or more of SoC(s) 2504 may include one or more accelerator(s) 2514 (e.g., hardware accelerators, software accelerators, or a combination thereof). SoC(s) 2504 may include a hardware acceleration cluster that may include optimized hardware accelerators and/or large on-chip memory. Large on-chip memory (e.g., 4 MB of SRAM), may enable a hardware acceleration cluster to accelerate neural networks and other calculations. A hardware acceleration cluster may be used to complement GPU(s) 2508 and to off-load some of tasks of GPU(s) 2508 (e.g., to free up more cycles of GPU(s) 2508 for performing other tasks). Accelerator(s) 2514 could be used for targeted workloads (e.g., perception, convolutional neural networks ("CNNs"), recurrent neural networks ("RNNs"), etc.) that may be stable enough to be amenable to acceleration. A CNN may include a region-based or regional convolutional neural networks ("RCNNs") and Fast RCNNs (e.g., as used for object detection) or other type of CNN.

Accelerator(s) 2514 (e.g., hardware acceleration cluster) may include one or more deep learning accelerator ("DLA"). DLA(s) may include one or more Tensor processing units ("TPUs") that may be configured to provide an additional ten trillion operations per second for deep learning applications and inferencing, such as TPU(s) described herein, e.g., in FIG. 19. TPUs may be accelerators configured to, and optimized for, performing image processing functions (e.g., for CNNs, RCNNs, etc.). DLA(s) may further be optimized for a specific set of neural network types and floating point operations, as well as inferencing. Design of DLA(s) may provide more performance per millimeter than a typical general-purpose GPU, and typically vastly exceeds performance of a CPU. TPU(s) may perform several functions, including a single-instance convolution function, supporting, for example, INT8, INT16, and FP16 data types for both features and weights, as well as post-processor functions. DLA(s) may quickly and efficiently execute neural networks, especially CNNs, on processed or unprocessed data for any of a variety of functions, including, for example: a CNN for object identification and detection using data from camera sensors; a CNN for distance estimation using data from camera sensors; a CNN for emergency vehicle detection and identification and detection using data from microphones; a CNN for facial recognition and vehicle owner identification using data from camera sensors; and/or a CNN for security and/or safety related events.

DLA(s) may perform any function of GPU(s) 2508, and by using an inference accelerator, for example, a designer may target either DLA(s) or GPU(s) 2508 for any function. For example, a designer may focus processing of CNNs and floating point operations on DLA(s) and leave other functions to GPU(s) 2508 and/or accelerator(s) 2514.

Accelerator(s) 2514 may include programmable vision accelerator ("PVA"), which may alternatively be referred to herein as a computer vision accelerator. PVA may be designed and configured to accelerate computer vision algorithms for advanced driver assistance system ("ADAS") 2538, autonomous driving, augmented reality ("AR") applications, and/or virtual reality ("VR") applications. PVA may provide a balance between performance and flexibility. For example, each PVA may include, for example, any number of reduced instruction set computer ("RISC") cores, direct memory access ("DMA"), and/or any number of vector processors.

RISC cores may interact with image sensors (e.g., image sensors of any cameras described herein), image signal processor(s), etc. Each RISC core may include any amount of memory. RISC cores may use any of a number of protocols, depending on embodiment. RISC cores may execute a real-time operating system ("RTOS"). RISC cores may be implemented using one or more integrated circuit devices, application specific integrated circuits ("ASICs"), and/or memory devices. For example, RISC cores could include an instruction cache and/or a tightly coupled RAM.

DMA may enable components of PVA to access system memory independently of CPU(s) 2506. DMA may support any number of features used to provide optimization to a PVA including supporting multi-dimensional addressing and/or circular addressing. DMA may support up to six or more dimensions of addressing, which may include block width, block height, block depth, horizontal block stepping, vertical block stepping, and/or depth stepping.

Vector processors may be programmable processors that may be designed to efficiently and flexibly execute programming for computer vision algorithms and provide signal processing capabilities. A PVA may include a PVA core and two vector processing subsystem partitions. A PVA core may include a processor subsystem, DMA engine(s) (e.g., two DMA engines), and/or other peripherals. A vector processing subsystem may operate as a primary processing engine of a PVA, and may include a vector processing unit ("VPU"), an instruction cache, and/or vector memory (e.g., "VMEM"). VPU core may include a digital signal processor such as, but not limited to, a single instruction, multiple data ("SIMD"), very long instruction word ("VLIW") digital signal processor. A combination of SIMD and VLIW may enhance throughput and speed.

Each of vector processors may include an instruction cache and may be coupled to dedicated memory. As a result, each of vector processors may be configured to execute independently of other vector processors. Vector processors that may be included in a particular PVA may be configured to employ data parallelism. For instance, plurality of vector processors included in a single PVA may execute a common computer vision algorithm, but on different regions of an image. Vector processors included in a particular PVA may simultaneously execute different computer vision algorithms, on one image, or even execute different algorithms on sequential images or portions of an image. Among other things, any number of PVAs may be included in hardware acceleration cluster and any number of vector processors may be included in each PVA. PVA may include additional error correcting code ("ECC") memory, to enhance overall system safety.

Accelerator(s) 2514 may include a computer vision network on-chip and static random-access memory ("SRAM"), for providing a high-bandwidth, low latency SRAM for accelerator(s) 2514. On-chip memory may include at least 4 MB SRAM, including, for example, eight field-configurable memory blocks, that may be accessible by both a PVA and a DLA. Each pair of memory blocks may include an advanced peripheral bus ("APB") interface, configuration circuitry, a controller, and a multiplexer. Any type of memory may be used. A PVA and a DLA may access memory via a backbone that provides a PVA and a DLA with high-speed access to memory. A backbone may include a computer vision network on-chip that interconnects a PVA and a DLA to memory (e.g., using APB).

A computer vision network on-chip may include an interface that determines, before transmission of any control signal/address/data, that both a PVA and a DLA provide ready and valid signals. An interface may provide for separate phases and separate channels for transmitting control signals/addresses/data, as well as burst-type communications for continuous data transfer. An interface may comply with International Organization for Standardization ("ISO") 26262 or International Electrotechnical Commission ("IEC") 61508 standards, although other standards and protocols may be used.

One or more of SoC(s) 2504 may include a real-time ray-tracing hardware accelerator. Real-time ray-tracing hardware accelerator may be used to quickly and efficiently determine positions and extents of objects (e.g., within a world model), to generate real-time visualization simulations, for RADAR signal interpretation, for sound propagation synthesis and/or analysis, for simulation of SONAR systems, for general wave propagation simulation, for comparison to LIDAR data for purposes of localization and/or other functions, and/or for other uses.

Accelerator(s) 2514 can have a wide array of uses for autonomous driving. A PVA may be used for key processing stages in ADAS and autonomous vehicles. A PVA's capabilities may be a good match for algorithmic domains needing predictable processing, at low power and low latency. In other words, a PVA can perform well on semi-dense or dense regular computation, even on small data sets, which might require predictable run-times with low latency and low power. In vehicle 2500, PVAs might be designed to run classic computer vision algorithms, as they can be efficient at object detection and operating on integer math. For example, a PVA is used to perform computer stereo vision. A semi-global matching-based algorithm may be used in some examples, although this is not intended to be limiting. Applications for Level 3-5 autonomous driving use motion estimation/stereo matching on-the-fly (e.g., structure from motion, pedestrian recognition, lane detection, etc.). A PVA may perform computer stereo vision functions on inputs from two monocular cameras. A PVA may be used to perform dense optical flow. For example, a PVA could process raw RADAR data (e.g., using a 4D Fast Fourier Transform) to provide processed RADAR data. A PVA is used for time of flight depth processing, by processing raw time of flight data to provide processed time of flight data, for example.

A DLA may be used to run any type of network to enhance control and driving safety, including, for example, a neural network that outputs a measure of confidence for each object detection. Confidence may be represented or interpreted as a probability, or as providing a relative "weight" of each detection compared to other detections. A confidence measure enables a system to make further decisions regarding which detections should be considered as true positive detections rather than false positive detections. A system may set a threshold value for confidence and consider only detections exceeding threshold value as true positive detections. When an automatic emergency braking ("AEB") system is used, false positive detections can cause vehicle to automatically perform emergency braking, which is obviously undesirable. Highly confident detections may be considered as triggers for AEB. a DLA may run a neural network for regressing confidence value. A neural network may take as its input at least some subset of parameters, such as, but not limited to, bounding box dimensions, ground plane estimate obtained (e.g., from another subsystem), output from IMU sensor(s) 2566 that correlates with vehicle 2500 orientation, distance, 3D location estimates of object obtained from neural network and/or other sensors (e.g., LIDAR sensor(s) 2564 or RADAR sensor(s) 2560), among others.

One or more of SoC(s) 2504 may include data store(s) 2516 (e.g., memory). Data store(s) 2516 may be on-chip memory of SoC(s) 2504, which may store neural networks to be executed on GPU(s) 2508 and/or a DLA. Data store(s) 2516 may be large enough in capacity to store multiple instances of neural networks for redundancy and safety. Data store(s) 2516 may comprise L2 or L3 cache(s).

One or more of SoC(s) 2504 may include any number of processor(s) 2510 (e.g., embedded processors). Processor(s) 2510 may include a boot and power management processor that may be a dedicated processor and subsystem to handle boot power and management functions and related security enforcement. A boot and power management processor may be a part of a boot sequence of SoC(s) 2504 and may provide runtime power management services. A boot power and management processor may provide clock and voltage programming, assistance in system low power state transitions, management of SoC(s) 2504 thermals and temperature sensors, and/or management of SoC(s) 2504 power states. Each temperature sensor may be implemented as a ring-oscillator whose output frequency is proportional to temperature, and SoC(s) 2504 may use ring-oscillators to detect temperatures of CPU(s) 2506, GPU(s) 2508, and/or accelerator(s) 2514. If temperatures may be determined to exceed a threshold, then a boot and power management processor may enter a temperature fault routine and put SoC(s) 2504 into a lower power state and/or put vehicle 2500 into a chauffeur to safe stop mode (e.g., bring vehicle 2500 to a safe stop).

Processor(s) 2510 may further include a set of embedded processors that may serve as an audio processing engine which may be an audio subsystem that enables full hardware support for multi-channel audio over multiple interfaces, and a broad and flexible range of audio I/O interfaces. An audio processing engine is a dedicated processor core with a digital signal processor with dedicated RAM.

Processor(s) 2510 may further include an always-on processor engine that may provide necessary hardware features to support low power sensor management and wake use cases. An always-on processor engine may include a processor core, a tightly coupled RAM, supporting peripherals (e.g., timers and interrupt controllers), various I/O controller peripherals, and routing logic.

Processor(s) 2510 may further include a safety cluster engine that may include a dedicated processor subsystem to handle safety management for automotive applications. A safety cluster engine may include two or more processor cores, a tightly coupled RAM, support peripherals (e.g., timers, an interrupt controller, etc.), and/or routing logic. In a safety mode, two or more cores may operate, in a lockstep mode and function as a single core with comparison logic to detect any differences between their operations. Processor(s) 2510 may further include a real-time camera engine that may include a dedicated processor subsystem for handling real-time camera management. Processor(s) 2510 may further include a high-dynamic range signal processor that may include an image signal processor that is a hardware engine that is part of a camera processing pipeline.

Processor(s) 2510 may include a video image compositor that may be a processing block (e.g., implemented on a microprocessor) that implements video post-processing functions needed by a video playback application to produce a final image for a player window. A video image compositor may perform lens distortion correction on wide-view camera(s) 2570, surround camera(s) 2574, and/or on in-cabin monitoring camera sensor(s). In-cabin monitoring camera sensor(s) may be preferably monitored by a neural network running on another instance of SoC 2504, configured to identify in cabin events and respond accordingly. An in-cabin system may perform lip reading to activate cellular service and place a phone call, dictate emails, change a vehicle's destination, activate or change a vehicle's infotainment system and settings, or provide voice-activated web surfing. Certain functions may be available to a driver when a vehicle is operating in an autonomous mode and may be disabled otherwise.

A video image compositor may include enhanced temporal noise reduction for both spatial and temporal noise reduction. For example, where motion occurs in a video, noise reduction weights spatial information appropriately, decreasing weights of information provided by adjacent frames. Where an image or portion of an image does not include motion, temporal noise reduction performed by video image compositor may use information from a previous image to reduce noise in a current image.

A video image compositor may also be configured to perform stereo rectification on input stereo lens frames. A video image compositor may further be used for user interface composition when an operating system desktop is in use, and GPU(s) 2508 may not be required to continuously render new surfaces. When GPU(s) 2508 are powered on and active doing 3D rendering, a video image compositor may be used to offload GPU(s) 2508 to improve performance and responsiveness.

One or more SoC of SoC(s) 2504 may further include a mobile industry processor interface ("MIPI") camera serial interface for receiving video and input from cameras, a high-speed interface, and/or a video input block that may be used for a camera and related pixel input functions. One or more of SoC(s) 2504 may further include an input/output controller(s) that may be controlled by software and may be used for receiving I/O signals that may be uncommitted to a specific role.

One or more SoC of SoC(s) 2504 may further include a broad range of peripheral interfaces to enable communication with peripherals, audio encoders/decoders ("codecs"), power management, and/or other devices. SoC(s) 2504 may be used to process data from cameras (e.g., connected over Gigabit Multimedia Serial Link and Ethernet channels), sensors (e.g., LIDAR sensor(s) 2564, RADAR sensor(s) 2560, etc. that may be connected over Ethernet channels), data from bus 2502 (e.g., speed of vehicle 2500, steering wheel position, etc.), data from GNSS sensor(s) 2558 (e.g., connected over a Ethernet bus or a CAN bus), etc. One or more SoC of SoC(s) 2504 may further include dedicated high-performance mass storage controllers that may include their own DMA engines, and that may be used to free CPU(s) 2506 from routine data management tasks.

SoC(s) 2504 may be an end-to-end platform with a flexible architecture that spans automation Levels 3-5, thereby providing a comprehensive functional safety architecture that leverages and makes efficient use of computer vision and ADAS techniques for diversity and redundancy, and provides a platform for a flexible, reliable driving software stack, along with deep learning tools. SoC(s) 2504 may be faster, more reliable, and even more energy-efficient and space-efficient than conventional systems. For example, accelerator(s) 2514, when combined with CPU(s) 2506, GPU(s) 2508, and data store(s) 2516, may provide for a fast, efficient platform for Level 3-5 autonomous vehicles.

Computer vision algorithms may be executed on CPUs, which may be configured using a high-level programming language, such as, but not limited to, C, to execute a wide variety of processing algorithms across a wide variety of visual data. However, CPUs may be oftentimes unable to meet performance requirements of many computer vision applications, such as, but not limited to, those related to execution time and power consumption, for example. Many CPUs may be unable to execute complex object detection algorithms in real-time, which is used in in-vehicle ADAS applications and in practical Level 3-5 autonomous vehicles.

Embodiments described herein allow for multiple neural networks to be performed simultaneously and/or sequentially, and for results to be combined together to enable Level 3-5 autonomous driving functionality. For example, a CNN executing on a DLA or a discrete GPU (e.g., GPU(s) 2520) may include text and word recognition, allowing reading and understanding of traffic signs, including signs for which a neural network has not been specifically trained. A DLA may further include a neural network that is able to identify, interpret, and provide semantic understanding of a sign, and to pass that semantic understanding to path planning modules running on a CPU Complex.

Multiple neural networks may be run simultaneously, as for Level 3, 4, or 5 driving. For example, a warning sign stating "Caution: flashing lights indicate icy conditions," along with an electric light, may be independently or collectively interpreted by several neural networks. Such warning sign itself may be identified as a traffic sign by a first deployed neural network (e.g., a neural network that has been trained), text "flashing lights indicate icy conditions" may be interpreted by a second deployed neural network, which informs a vehicle's path planning software (preferably executing on a CPU Complex) that when flashing lights may be detected, icy conditions exist. A flashing light may be identified by operating a third deployed neural network over multiple frames, informing a vehicle's path-planning software of a presence (or an absence) of flashing lights. All three neural networks may run simultaneously, such as, but not limited to, within a DLA and/or on GPU(s) 2508.

A CNN for facial recognition and vehicle owner identification may use data from camera sensors to identify presence of an authorized driver and/or owner of vehicle 2500. An always-on sensor processing engine may be used to unlock a vehicle when an owner approaches a driver door and turns on lights, and, in a security mode, to disable such vehicle when an owner leaves such vehicle. In this way, SoC(s) 2504 can provide for security against theft and/or carjacking.

A CNN for emergency vehicle detection and identification may use data from microphones 2596 to detect and identify emergency vehicle sirens. SoC(s) 2504 use a CNN for classifying environmental and urban sounds, as well as classifying visual data. A CNN running on a DLA is trained to identify a relative closing speed of an emergency vehicle (e.g., by using a Doppler effect). A CNN may also be trained to identify emergency vehicles specific to a local area in which a vehicle is operating, as identified by GNSS sensor(s) 2558. When operating in Europe, a CNN may seek to detect European sirens, and when in North America, a CNN may seek to identify only North American sirens. Once an emergency vehicle is detected, a control program may be used to execute an emergency vehicle safety routine, slowing a vehicle, pulling over to a side of a road, parking a vehicle, and/or idling a vehicle, with assistance of ultrasonic sensor(s) 2562, until emergency vehicles pass.

Vehicle 2500 may include CPU(s) 2518 (e.g., discrete CPU(s), or dCPU(s)), that may be coupled to SoC(s) 2504 via a high-speed interconnect (e.g., PCIe). CPU(s) 2518 may include an X86 processor, for example. CPU(s) 2518 may be used to perform any of a variety of functions, including arbitrating potentially inconsistent results between ADAS sensors and SoC(s) 2504, and/or monitoring status and health of controller(s) 2536 and/or an infotainment system on a chip ("infotainment SoC") 2530, for example. SoC(s) 2504 may include one or more interconnects, and an interconnect can include a peripheral component interconnect express (PCIe).

Vehicle 2500 may include GPU(s) 2520 (e.g., discrete GPU(s), or dGPU(s)), that may be coupled to SoC(s) 2504 via a high-speed interconnect (e.g., NVIDIA's NVLINK channel). GPU(s) 2520 may provide additional artificial intelligence functionality, such as, but not limited to, by executing redundant and/or different neural networks, and may be used to train and/or update neural networks based at least in part on input (e.g., sensor data) from sensors of a vehicle 2500.

Vehicle 2500 may further include network interface 2524 which may include wireless antenna(s) (e.g., one or more wireless antennas 2526 for different communication protocols, such as, but not limited to, a cellular antenna, a Bluetooth antenna, etc.). Network interface 2524 may be used to enable wireless connectivity to Internet cloud services (e.g., with server(s) and/or other network devices), with other vehicles, and/or with computing devices (e.g., client devices of passengers). To communicate with other vehicles, a direct link may be established between vehicle 2500 and another vehicle and/or an indirect link may be established (e.g., across networks and over the Internet). Direct links may be provided using a vehicle-to-vehicle communication link. A vehicle-to-vehicle communication link may provide vehicle 2500 information about vehicles in proximity to vehicle 2500 (e.g., vehicles in front of, on a side of, and/or behind vehicle 2500). Such aforementioned functionality may be part of a cooperative adaptive cruise control functionality of vehicle 2500.

Network interface 2524 may include an SoC that provides modulation and demodulation functionality and enables controller(s) 2536 to communicate over wireless networks. Network interface 2524 may include a radio frequency front-end for up-conversion from baseband to radio frequency, and down conversion from radio frequency to baseband. Frequency conversions may be performed in any technically feasible fashion. For example, frequency conversions could be performed through well-known processes, and/or using superheterodyne processes. Radio frequency front end functionality may be provided by a separate chip. Network interfaces may include wireless functionality for communicating over LTE, WCDMA, UMTS, GSM, CDMA2000, Bluetooth, Bluetooth LE, Wi-Fi, Z-Wave, ZigBee, LoRaWAN, and/or other wireless protocols.

Vehicle 2500 may further include data store(s) 2528 which may include off-chip (e.g., off SoC(s) 2504) storage. Data store(s) 2528 may include one or more storage elements including RAM, SRAM, dynamic random-access memory ("DRAM"), video random-access memory ("VRAM"), flash memory, hard disks, and/or other components and/or devices that may store at least one bit of data.

Vehicle 2500 may further include GNSS sensor(s) 2558 (e.g., GPS and/or assisted GPS sensors), to assist in mapping, perception, occupancy grid generation, and/or path planning functions. Any number of GNSS sensor(s) 2558 may be used, including, for example, a GPS using a USB connector with an Ethernet-to-Serial (e.g., RS-232) bridge.

Vehicle 2500 may further include RADAR sensor(s) 2560. RADAR sensor(s) 2560 may be used by vehicle 2500 for long-range vehicle detection, even in darkness and/or severe weather conditions. RADAR functional safety levels may be ASIL B. RADAR sensor(s) 2560 may use a CAN bus and/or bus 2502 (e.g., to transmit data generated by RADAR sensor(s) 2560) for control and to access object tracking data, with access to Ethernet channels to access raw data in some examples. A wide variety of RADAR sensor types may be used. For example, RADAR sensor(s) 2560 may be suitable for front, rear, and side RADAR use. One or more sensor of RADAR sensors(s) 2560 is a Pulse Doppler RADAR sensor.

RADAR sensor(s) 2560 may include different configurations, such as, but not limited to, long-range with narrow field of view, short-range with wide field of view, short-range side coverage, etc. Long-range RADAR may be used for adaptive cruise control functionality. Long-range RADAR systems may provide a broad field of view realized by two or more independent scans, such as, but not limited to, within a 250 m (meter) range. RADAR sensor(s) 2560 may help in distinguishing between static and moving objects, and may be used by ADAS system 2538 for emergency brake assist and forward collision warning. Sensors 2560(s) included in a long-range RADAR system may include monostatic multimodal RADAR with multiple (e.g., six or more) fixed RADAR antennae and a high-speed CAN and FlexRay interface. With six antennae, a central four antennae may create a focused beam pattern, designed to record vehicle's 2500 surroundings at higher speeds with minimal interference from traffic in adjacent lanes. Another two antennae may expand field of view, making it possible to quickly detect vehicles entering or leaving a lane of vehicle 2500.

Mid-range RADAR systems may include, as an example, a range of up to 160 m (front) or 80 m (rear), and a field of view of up to 42 degrees (front) or 150 degrees (rear). Short-range RADAR systems may include any number of RADAR sensor(s) 2560 designed to be installed at both ends of a rear bumper. When installed at both ends of a rear bumper, a RADAR sensor system may create two beams that constantly monitor blind spots in a rear direction and next to a vehicle. Short-range RADAR systems may be used in ADAS system 2538 for blind spot detection and/or lane change assist.

Vehicle 2500 may further include ultrasonic sensor(s) 2562. Ultrasonic sensor(s) 2562, which may be positioned at a front, a back, and/or side location of vehicle 2500, may be used for parking assist and/or to create and update an occupancy grid. A wide variety of ultrasonic sensor(s) 2562 may be used, and different ultrasonic sensor(s) 2562 may be used for different ranges of detection (e.g., 2.5 m, 4 m). Ultrasonic sensor(s) 2562 may operate at functional safety levels of ASIL B.

Vehicle 2500 may include LIDAR sensor(s) 2564. LIDAR sensor(s) 2564 may be used for object and pedestrian detection, emergency braking, collision avoidance, and/or other functions. LIDAR sensor(s) 2564 may operate at functional safety level ASIL B. Vehicle 2500 may include multiple LIDAR sensors 2564 (e.g., two, four, six, etc.) that may use an Ethernet channel (e.g., to provide data to a Gigabit Ethernet switch).

LIDAR sensor(s) 2564 may be capable of providing a list of objects and their distances for a 360-degree field of view. Commercially available LIDAR sensor(s) 2564 may have an advertised range of approximately 100 m, with an accuracy of 2 cm to 3 cm, and with support for a 100 Mbps Ethernet connection, for example. One or more non-protruding LIDAR sensors may be used. LIDAR sensor(s) 2564 may include a small device that may be embedded into a front, a rear, a side, and/or a corner location of vehicle 2500. LIDAR sensor(s) 2564, in such an embodiment, may provide up to a 120-degree horizontal and 35-degree vertical field-of-view, with a 200 m range even for low-reflectivity objects. Front-mounted LIDAR sensor(s) 2564 may be configured for a horizontal field of view between 45 degrees and 135 degrees.

LIDAR technologies, such as, but not limited to, 3D flash LIDAR, may also be used. 3D flash LIDAR uses a flash of a laser as a transmission source, to illuminate surroundings of vehicle 2500 up to approximately 200 m. A flash LIDAR unit may include a receptor, which records laser pulse transit time and reflected light on each pixel, which in turn corresponds to a range from vehicle 2500 to objects. Flash LIDAR may allow for highly accurate and distortion-free images of surroundings to be generated with every laser flash. Four flash LIDAR sensors may be deployed, one at each side of vehicle 2500. 3D flash LIDAR systems include a solid-state 3D staring array LIDAR camera with no moving parts other than a fan (e.g., a non-scanning LIDAR device). Flash LIDAR device may use a 5 nanosecond class I (eye-safe) laser pulse per frame and may capture reflected laser light as a 3D range point cloud and co-registered intensity data.

Vehicle 2500 may further include IMU sensor(s) 2566. IMU sensor(s) 2566 may be located at a center of a rear axle of vehicle 2500. IMU sensor(s) 2566 may include, for example, accelerometer(s), magnetometer(s), gyroscope(s), a magnetic compass, magnetic compasses, and/or other sensor types. In six-axis applications, but not limited to, IMU sensor(s) 2566 may include accelerometers and gyroscopes. In nine-axis applications, but not limited to, IMU sensor(s) 2566 may include accelerometers, gyroscopes, and magnetometers.

IMU sensor(s) 2566 may be implemented as a miniature, high performance GPS-Aided Inertial Navigation System ("GPS/INS") that combines micro-electro-mechanical systems ("MEMS") inertial sensors, a high-sensitivity GPS receiver, and advanced Kalman filtering algorithms to provide estimates of position, velocity, and attitude. IMU sensor(s) 2566 may enable vehicle 2500 to estimate its heading without requiring input from a magnetic sensor by directly observing and correlating changes in velocity from a GPS to IMU sensor(s) 2566. IMU sensor(s) 2566 and GNSS sensor(s) 2558 may be combined in a single integrated unit.

Vehicle 2500 may include microphone(s) 2596 placed in and/or around vehicle 2500. Microphone(s) 2596 may be used for emergency vehicle detection and identification, among other things.

Vehicle 2500 may further include any number of camera types, including stereo camera(s) 2568, wide-view camera(s) 2570, infrared camera(s) 2572, surround camera(s) 2574, long-range camera(s) 2598, mid-range camera(s) 2576, and/or other camera types. Cameras may be used to capture image data around an entire periphery of vehicle 2500. Types of cameras used may depend on vehicle 2500. Any combination of camera types may be used to provide necessary coverage around vehicle 2500. A number of cameras deployed may differ depending on embodiment. For example, vehicle 2500 could include six cameras, seven cameras, ten cameras, twelve cameras, or another number of cameras. Cameras may support, as an example, Gigabit Multimedia Serial Link ("GMSL") and/or Gigabit Ethernet communications. Each camera might be as described with more detail previously herein.

Vehicle 2500 may further include vibration sensor(s) 2542. Vibration sensor(s) 2542 may measure vibrations of components of vehicle 2500, such as, but not limited to, axle(s). For example, changes in vibrations may indicate a change in road surfaces. When two or more vibration sensors 2542 may be used, differences between vibrations may be used to determine friction or slippage of road surface (e.g., when a difference in vibration is between a power-driven axle and a freely rotating axle).

Vehicle 2500 may include ADAS system 2538. ADAS system 2538 may include an SoC, in some examples. ADAS system 2538 may include any number and combination of an autonomous/adaptive/automatic cruise control ("ACC") system, a cooperative adaptive cruise control ("CACC") system, a forward crash warning ("FCW") system, an automatic emergency braking ("AEB") system, a lane departure warning ("LDW") system, a lane keep assist ("LKA") system, a blind spot warning ("BSW") system, a rear cross-traffic warning ("RCTW") system, a collision warning ("CW") system, a lane centering ("LC") system, and/or other systems, features, and/or functionality.

ACC system may use RADAR sensor(s) 2560, LIDAR sensor(s) 2564, and/or any number of camera(s). ACC system may include a longitudinal ACC system and/or a lateral ACC system. A longitudinal ACC system monitors and controls distance to another vehicle immediately ahead of vehicle 2500 and automatically adjusts speed of vehicle 2500 to maintain a safe distance from vehicles ahead. A lateral ACC system performs distance keeping, and advises vehicle 2500 to change lanes when necessary. A lateral ACC is related to other ADAS applications, such as, but not limited to, LC and CW.

A CACC system uses information from other vehicles that may be received via network interface 2524 and/or wireless antenna(s) 2526 from other vehicles via a wireless link, or indirectly, over a network connection (e.g., over the Internet). Direct links may be provided by a vehicle-to-vehicle ("V2V") communication link, while indirect links may be provided by an infrastructure-to-vehicle ("I2V") communication link. In general, V2V communication provides information about immediately preceding vehicles (e.g., vehicles immediately ahead of and in same lane as vehicle 2500), while I2V communication provides information about traffic further ahead. A CACC system may include either or both I2V and V2V information sources. Given information of vehicles ahead of vehicle 2500, a CACC system may be more reliable and it has potential to improve traffic flow smoothness and reduce congestion on road.

An FCW system is designed to alert a driver to a hazard, so that such driver may take corrective action. An FCW system uses a front-facing camera and/or RADAR sensor(s) 2560, coupled to a dedicated processor, DSP, FPGA, and/or ASIC, that is electrically coupled to provide driver feedback, such as, but not limited to, a display, speaker, and/or vibrating component. An FCW system may provide a warning, such as, but not limited to, in form of a sound, visual warning, vibration and/or a quick brake pulse.

An AEB system detects an impending forward collision with another vehicle or other object, and may automatically apply brakes if a driver does not take corrective action within a specified time or distance parameter. AEB system may use front-facing camera(s) and/or RADAR sensor(s) 2560, coupled to a dedicated processor, DSP, FPGA, and/or ASIC. When an AEB system detects a hazard, it will typically first alert a driver to take corrective action to avoid collision and, if that driver does not take corrective action, that AEB system may automatically apply brakes in an effort to prevent, or at least mitigate, an impact of a predicted collision. An AEB system may include techniques such as, but not limited to, dynamic brake support and/or crash imminent braking.

An LDW system provides visual, audible, and/or tactile warnings, such as, but not limited to, steering wheel or seat vibrations, to alert driver when vehicle 2500 crosses lane markings. An LDW system does not activate when a driver indicates an intentional lane departure, such as, but not limited to, by activating a turn signal. An LDW system may use frontside facing cameras, coupled to a dedicated processor, DSP, FPGA, and/or ASIC, that is electrically coupled to provide driver feedback, such as, but not limited to, a display, speaker, and/or vibrating component. An LKA system is a variation of an LDW system. An LKA system provides steering input or braking to correct vehicle 2500 if vehicle 2500 starts to exit its lane.

A BSW system detects and warns a driver of vehicles in an automobile's blind spot. A BSW system may provide a visual, audible, and/or tactile alert to indicate that merging or changing lanes is unsafe. A BSW system may provide an additional warning when a driver uses a turn signal. A BSW system may use rear-side facing camera(s) and/or RADAR sensor(s) 2560, coupled to a dedicated processor, DSP, FPGA, and/or ASIC, that is electrically coupled to driver feedback, such as, but not limited to, a display, speaker, and/or vibrating component.

An RCTW system may provide visual, audible, and/or tactile notification when an object is detected outside a rear-camera range when vehicle 2500 is backing up. An RCTW system includes an AEB system to ensure that vehicle brakes may be applied to avoid a crash. An RCTW system may use one or more rear-facing RADAR sensor(s) 2560, coupled to a dedicated processor, DSP, FPGA, and/or ASIC, that is electrically coupled to provide driver feedback, such as, but not limited to, a display, speaker, and/or vibrating component.

Conventional ADAS systems may be prone to false positive results which may be annoying and distracting to a driver, but typically may not be catastrophic, because conventional ADAS systems alert a driver and allow that driver to decide whether a safety condition truly exists and act accordingly. Vehicle 2500 itself decides, in case of conflicting results, whether to heed result from a primary computer or a secondary computer (e.g., a first controller or a second controller of controllers 2536). For example, ADAS system 2538 may be a backup and/or secondary computer for providing perception information to a backup computer rationality module. A backup computer rationality monitor may run redundant diverse software on hardware components to detect faults in perception and dynamic driving tasks. Outputs from ADAS system 2538 may be provided to a supervisory MCU. If outputs from a primary computer and outputs from a secondary computer conflict, a supervisory MCU can determine how to reconcile conflict to ensure safe operation.

A primary computer may be configured to provide a supervisory MCU with a confidence score, indicating that primary computer's confidence in a chosen result. If that confidence score exceeds a threshold, that supervisory MCU may follow that primary computer's direction, regardless of whether that secondary computer provides a conflicting or inconsistent result. Where a confidence score does not meet a threshold, and where primary and secondary computers indicate different results (e.g., a conflict), a supervisory MCU may arbitrate between computers to determine an appropriate outcome.

A supervisory MCU may be configured to run a neural network(s) that is trained and configured to determine, based at least in part on outputs from a primary computer and outputs from a secondary computer, conditions under which that secondary computer provides false alarms. Neural network(s) in a supervisory MCU may learn when a secondary computer's output may be trusted, and when it cannot. For example, when that secondary computer is a RADAR-based FCW system, a neural network(s) in that supervisory MCU may learn when an FCW system is identifying metallic objects that may not be, in fact, hazards, such as, but not limited to, a drainage grate or manhole cover that triggers an alarm. When a secondary computer is a camera-based LDW system, a neural network in a supervisory MCU may learn to override LDW when bicyclists or pedestrians may be present and a lane departure is, in fact, a safest maneuver. A supervisory MCU may include at least one of a DLA or a GPU suitable for running neural network(s) with associated memory. A supervisory MCU may comprise and/or be included as a component of SoC(s) 2504.

ADAS system 2538 may include a secondary computer that performs ADAS functionality using traditional rules of computer vision, and that secondary computer may use classic computer vision rules (if-then), and presence of a neural network(s) in a supervisory MCU may improve reliability, safety and performance. For example, diverse implementation and intentional non-identity makes an overall system more fault-tolerant, especially to faults caused by software (or software-hardware interface) functionality. For example, if there is a software bug or error in software running on a primary computer, and non-identical software code running on a secondary computer provides a consistent overall result, then a supervisory MCU may have greater confidence that an overall result is correct, and a bug in software or hardware on that primary computer is not causing a material error.

An output of ADAS system 2538 may be fed into a primary computer's perception block and/or a primary computer's dynamic driving task block. For example, if ADAS system 2538 indicates a forward crash warning due to an object immediately ahead, a perception block may use this information when identifying objects. A secondary computer may have its own neural network that is trained and thus reduces a risk of false positives, as described herein.

Vehicle 2500 may further include infotainment SoC 2530 (e.g., an in-vehicle infotainment system (IVI)). Although illustrated and described as an SoC, infotainment system SoC 2530, may not be an SoC, and may include two or more discrete components. Infotainment SoC 2530 may include a combination of hardware and software that may be used to provide audio (e.g., music, a personal digital assistant, navigational instructions, news, radio, etc.), video (e.g., TV, movies, streaming, etc.), phone (e.g., hands-free calling), network connectivity (e.g., LTE, WiFi, etc.), and/or information services (e.g., navigation systems, rear-parking assistance, a radio data system, vehicle related information such as, but not limited to, fuel level, total distance covered, brake fuel level, oil level, door open/close, air filter information, etc.) to vehicle 2500. For example, infotainment SoC 2530 could include radios, disk players, navigation systems, video players, USB and Bluetooth connectivity, carputers, in-car entertainment, WiFi, steering wheel audio controls, hands free voice control, a heads-up display ("HUD"), HMI display 2534, a telematics device, a control panel (e.g., for controlling and/or interacting with various components, features, and/or systems), and/or other components. Infotainment SoC 2530 may further be used to provide information (e.g., visual and/or audible) to user(s) of vehicle 2500, such as, but not limited to, information from ADAS system 2538, autonomous driving information such as, but not limited to, planned vehicle maneuvers, trajectories, surrounding environment information (e.g., intersection information, vehicle information, road information, etc.), and/or other information.

Infotainment SoC 2530 may include any amount and type of GPU functionality. Infotainment SoC 2530 may communicate over bus 2502 with other devices, systems, and/or components of vehicle 2500. Infotainment SoC 2530 may be coupled to a supervisory MCU such that a GPU of an infotainment system may perform some self-driving functions in event that primary controller(s) 2536 (e.g., primary and/or backup computers of vehicle 2500) fail. Infotainment SoC 2530 may put vehicle 2500 into a chauffeur to safe stop mode, as described herein.

Vehicle 2500 may further include instrument cluster 2532 (e.g., a digital dash, an electronic instrument cluster, a digital instrument panel, etc.). Instrument cluster 2532 may include a controller and/or supercomputer (e.g., a discrete controller or supercomputer). Instrument cluster 2532 may include any number and combination of a set of instrumentation such as, but not limited to, a speedometer, fuel level, oil pressure, tachometer, odometer, turn indicators, gearshift position indicator, seat belt warning light(s), parking-brake warning light(s), engine-malfunction light(s), supplemental restraint system (e.g., airbag) information, lighting controls, safety system controls, navigation information, etc. Information may be displayed and/or shared among infotainment SoC 2530 and instrument cluster 2532. Instrument cluster 2532 may be included as part of infotainment SoC 2530, or vice versa.

System may include server(s), network(s), and any number and type of vehicles, including vehicle 2500. Server(s) may include a plurality of GPUs, PCIe switches, and/or CPUs. GPUs, CPUs, and PCIe switches may be interconnected with high-speed interconnects such as, but not limited to, for example, NVLink interfaces developed by NVIDIA and/or PCIe connections. GPUs can be connected via any interconnects, such as NVLink and/or NVSwitch SoC, and GPUs and PCIe switches can be, for example, connected via PCIe interconnects. Each of server(s) may include any number of GPUs, CPUs, and/or PCIe switches, in any combination. For example, server(s) could each include eight, sixteen, thirty-two, and/or more GPUs.

Server(s) may receive, over network(s) and from vehicles, image data representative of images showing unexpected or changed road conditions, such as, but not limited to, recently commenced road-work. Server(s) may transmit, over network(s) and to vehicles, neural networks, updated or otherwise, and/or map information, including information regarding traffic and road conditions. Updates to map information may include updates for HD map, such as, but not limited to, information regarding construction sites, potholes, detours, flooding, and/or other obstructions. Neural networks, and/or map information may have resulted from new training and/or experiences represented in data received from any number of vehicles in an environment, and/or based at least in part on training performed at a data center (e.g., using server(s) and/or other servers).

Server(s) may be used to train machine learning models (e.g., neural networks) based at least in part on training data. Training data may be generated by vehicles, and/or may be generated in a simulation (e.g., using a game engine). Any amount of training data can be tagged (e.g., where associated neural network benefits from supervised learning) and/or undergoes other pre-processing. Any amount of training data may not be tagged and/or pre-processed (e.g., where associated neural network does not require supervised learning). Once machine learning models are trained, machine learning models may be used by vehicles (e.g., transmitted to vehicles over network(s)), and/or machine learning models may be used by server(s) to remotely monitor vehicles.

Server(s) may receive data from vehicles and apply data to up-to-date real-time neural networks for real-time intelligent inferencing. Server(s) may include deep-learning supercomputers and/or dedicated AI computers powered by GPU(s), such as, but not limited to, a DGX and DGX Station machines developed by NVIDIA. Alternatively, server(s) may include deep learning infrastructure that uses CPU-powered data centers.

Deep-learning infrastructure of server(s) may be capable of fast, real-time inferencing, and may use that capability to evaluate and verify health of processors, software, and/or associated hardware in vehicle 2500. For example, deep-learning infrastructure may receive periodic updates from vehicle 2500, such as, but not limited to, a sequence of images and/or objects that vehicle 2500 has located in that sequence of images (e.g., via computer vision and/or other machine learning object classification techniques). Deep-learning infrastructure may run its own neural network to identify objects and compare them with objects identified by vehicle 2500 and, if results do not match and deep-learning infrastructure concludes that AI in vehicle 2500 is malfunctioning, then server(s) may transmit a signal to vehicle instructing a fail-safe computer of vehicle 2500 to assume control, notify passengers, and complete a safe parking maneuver.

Server(s) may include GPU(s) and one or more programmable inference accelerators (e.g., NVIDIA's TensorRT 3 devices). A combination of GPU-powered servers and inference acceleration may make real-time responsiveness possible. Where performance is less critical, servers powered by CPUs, FPGAs, and other processors may be used for inferencing.

In at least one embodiment, autonomous vehicle 2500 described elsewhere herein, can include one or more circuits to cause a compiler to indicate one or more portions of one or more software programs to be performed by one or more processors concurrently or otherwise perform any of the operations described above or elsewhere herein. One or more circuits in autonomous vehicle 2500 can be configured by software, e.g., programming platforms described herein, to cause a compiler to indicate one or more portions of one or more software programs to be performed by one or more processors concurrently or otherwise perform any of the operations described above or elsewhere herein.

### CLOUD AND WEB-BASED SERVICES

The following description sets forth, without limitation, cloud-based and/or web-based services and/or systems that can be used to cause a compiler to indicate one or more portions of one or more software programs to be performed by one or more processors concurrently or otherwise perform some or all of processes, operations and/or and techniques described elsewhere herein. cloud-based and/or web-based services and/or systems can be configured by software to cause a compiler to indicate one or more portions of one or more software programs to be performed by one or more processors concurrently or otherwise perform any of the operations described above or elsewhere herein.

Cloud computing can include a style of computing in which dynamically scalable and often virtualized resources are provided as a service over the Internet. Users need not have knowledge of, expertise in, or control over technology infrastructure, which can be referred to as "in the cloud," that supports them. Cloud computing may incorporate infrastructure as a service, platform as a service, software as a service, and other variations that have a common theme of reliance on the Internet for satisfying computing needs of users. A typical cloud deployment, such as in a private cloud (e.g., enterprise network), or a data center (DC) in a public cloud (e.g., Internet) can include thousands of servers (or alternatively, VMs), hundreds of Ethernet, Fiber Channel or Fiber Channel over Ethernet (FCoE) ports, switching and storage infrastructure, etc. A cloud can also include network services infrastructure like IPsec VPN hubs, firewalls, load balancers, wide area network (WAN) optimizers etc. Remote subscribers can access cloud applications and services securely by connecting via a VPN tunnel, such as an IPsec VPN tunnel.

Cloud computing may include a model for enabling convenient, on-demand network access to a shared pool of configurable computing resources (e.g., networks, servers, storage, applications, and services) that can be rapidly provisioned and released with minimal management effort or service provider interaction.

Cloud computing may be characterized by on-demand self-service, in which a consumer can unilaterally provision computing capabilities, such as server time and network storage, as needed automatically without requiring human inter-action with each service's provider. Cloud computing may be characterized by broad network access, in which capabilities are available over a network and accessed through standard mechanisms that promote use by heterogeneous thin or thick client platforms (e.g., mobile phones, laptops, and PDAs). Cloud computing may be characterized by resource pooling, in which a provider's computing resources are pooled to serve multiple consumers using a multi-tenant model, with different physical and virtual resources dynamically as-signed and reassigned according to consumer demand. In at least one embodiment, there is a sense of location independence in that a customer generally has no control or knowledge over an exact location of provided resources, but may be able to specify location at a higher level of abstraction (e.g., country, state, or datacenter). Examples of resources include storage, processing, memory, network bandwidth, and virtual machines. Cloud computing may be characterized by rapid elasticity, in which capabilities can be rapidly and elastically provisioned, in some cases automatically, to quickly scale out and rapidly released to quickly scale in. In at least one embodiment, to a consumer, capabilities available for provisioning often appear to be unlimited and can be purchased in any quantity at any time. Cloud computing may be characterized by measured service, in which cloud systems automatically control and optimize resource use by leveraging a metering capability at some level of abstraction appropriate to a type of service (e.g., storage, processing, bandwidth, and active user accounts). Resource usage can be monitored, controlled, and reported providing transparency for both a provider and consumer of a utilized service.

Cloud computing may be associated with various services. Cloud Software as a Service (SaaS) may refer to as service in which a capability provided to a consumer is to use a provider's applications running on a cloud infrastructure. Applications can be accessible from various client devices through a thin client interface such as a web browser (e.g., web-based email). In at least one embodiment, consumer does not manage or control underlying cloud infrastructure including network, servers, operating systems, storage, or even individual application capabilities, with a possible exception of limited user-specific application configuration settings.

Cloud Platform as a Service (PaaS) may refer to a service in which a capability provided to consumer is to deploy onto cloud infrastructure consumer-created or acquired applications created using programming languages and tools supported by a provider. In at least one embodiment, a consumer does not manage or control underlying cloud infrastructure including networks, servers, operating systems, or storage, but has control over deployed applications and possibly application hosting environment configurations.

Cloud Infrastructure as a Service (IaaS) may refer to a service in which a capability provided to a consumer is to provision processing, storage, networks, and other fundamental computing resources where a consumer is able to deploy and run arbitrary software, which can include operating systems and applications. In at least one embodiment, consumer does not manage or control underlying cloud infrastructure, but has control over operating systems, storage, deployed applications, and possibly limited control of select networking components (e.g., host firewalls).

Cloud computing may be deployed in various ways. A private cloud may refer to a cloud infrastructure that is operated solely for an organization. A private cloud may be managed by an organization or a third party and may exist on-premises or off-premises. A community cloud may refer to a cloud infrastructure that is shared by several organizations and supports a specific community that has shared concerns (e.g., mission, security requirements, policy, and compliance considerations). A community cloud may be managed by organizations or a third party and may exist on-premises or off-premises. A public cloud may refer to a cloud infrastructure that is made available to a general public or a large industry group and is owned by an organization providing cloud services. A hybrid cloud may refer to a cloud infrastructure that is a composition of two or more clouds (private, community, or public) that remain unique entities, but are bound together by standardized or proprietary technology that enables data and application portability (e.g., cloud bursting for load-balancing between clouds). A cloud computing environment is service oriented with a focus on statelessness, low coupling, modularity, and semantic interoperability.

### LOGIC AND NEURAL NETWORK TRAINING AND DEPLOYMENT

The following figures set forth, without limitation, examples of logic and artificial intelligence-based systems that can be used to implement functionality and/or operations described herein.

FIGs. 26A and 26B illustrate logic 2615 which, as described elsewhere herein, can be used in one or more devices or systems (e.g., such as any of the processors, data centers, cloud or web-based services described herein) to perform operations such as, but not limited to, those discussed herein, in accordance with at least one embodiment. Logic can refer to any combination of software logic, hardware logic, and/or firmware logic to provide functionality and/or operations described herein, wherein logic may be, collectively or individually, embodied as circuitry that forms part of a larger system, for example, an integrated circuit (IC), an application-specific integrated circuit (ASIC), a field programmable array (FPGA), system-on-chip (SoC), or one or processors (e.g., CPU, GPU). Logic 2615 illustrated in FIGs. 26A and 26B may be used in conjunction with an application-specific integrated circuit ("ASIC"), such as, but not limited to, a TensorFlow^{®} Processing Unit from Google, an inference processing unit (IPU) from Graphcore^{™}, or a Nervana^{®} (e.g., "Lake Crest") processor from Intel Corp. Logic 2615 illustrated in FIG. 26A and 26B may be used in conjunction with central processing unit ("CPU") hardware, graphics processing unit ("GPU") hardware or other hardware, such as, but not limited to, field programmable gate arrays ("FPGAs").

Logic 2615 can be used to perform inferencing and/or training operations associated with one or more embodiments. Logic 2615 may be inference and/or training logic. In at least one embodiment, FIG. 26A illustrates inference and/or training logic 2615 used to perform inferencing and/or training operations associated with one or more embodiments. Inference and/or training logic 2615 may include code and/or data storage 2601 to store forward and/or output weight and/or input/output data, and/or other parameters to configure neurons or layers of a neural network trained and/or used for inferencing in aspects of one or more embodiments. Training logic 2615 may include, or be coupled to code and/or data storage 2601 to store graph code or other software to control timing and/or order, in which weight and/or other parameter information is to be loaded to configure, logic, including integer and/or floating point units (collectively, arithmetic logic units (ALUs). Code, such as, but not limited to, graph code, can load weight or other parameter information into processor ALUs based on an architecture of a neural network to which such code corresponds. Code and/or data storage 2601 can store weight parameters and/or input/output data of each layer of a neural network trained or used in conjunction with one or more embodiments during forward propagation of input/output data and/or weight parameters during training and/or inferencing using aspects of one or more embodiments. Any portion of code and/or data storage 2601 may be included with other on-chip or off-chip data storage, including a processor's L1, L2, or L3 cache or system memory.

Any portion of code and/or data storage 2601 may be internal or external to one or more processors or other hardware logic devices or circuits. Code and/or code and/or data storage 2601 may be cache memory, dynamic randomly addressable memory ("DRAM"), static randomly addressable memory ("SRAM"), non-volatile memory (e.g., flash memory), or other storage. A choice of whether code and/or code and/or data storage 2601 is internal or external to a processor, for example, or comprising DRAM, SRAM, flash or some other storage type may depend on available storage on-chip versus off-chip, latency requirements of training and/or inferencing functions being performed, batch size of data used in inferencing and/or training of a neural network, or some combination of these factors.

Inference and/or training logic 2615 may include a code and/or data storage 2605 to store backward and/or output weight and/or input/output data corresponding to neurons or layers of a neural network trained and/or used for inferencing in aspects of one or more embodiments. Code and/or data storage 2605 can store weight parameters and/or input/output data of each layer of a neural network trained or used in conjunction with one or more embodiments during backward propagation of input/output data and/or weight parameters during training and/or inferencing using aspects of one or more embodiments. Training logic 2615 may include, or be coupled to code and/or data storage 2605 to store graph code or other software to control timing and/or order, in which weight and/or other parameter information is to be loaded to configure, logic, including integer and/or floating point units (collectively, arithmetic logic units (ALUs).

Code, such as, but not limited to, graph code, may cause loading of weight or other parameter information into processor ALUs based on an architecture of a neural network to which such code corresponds. Any portion of code and/or data storage 2605 may be included with other on-chip or off-chip data storage, including a processor's L1, L2, or L3 cache or system memory. Any portion of code and/or data storage 2605 may be internal or external to one or more processors or other hardware logic devices or circuits. Code and/or data storage 2605 may be cache memory, DRAM, SRAM, non-volatile memory (e.g., flash memory), or other storage. A choice of whether code and/or data storage 2605 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

Code and/or data storage 2601 and code and/or data storage 2605 may be separate storage structures. Code and/or data storage 2601 and code and/or data storage 2605 may be a combined storage structure. Code and/or data storage 2601 and code and/or data storage 2605 may be partially combined and partially separate. Any portion of code and/or data storage 2601 and code and/or data storage 2605 may be included with other on-chip or off-chip data storage, including a processor's L1, L2, or L3 cache or system memory.

Inference and/or training logic 2615 may include one or more arithmetic logic unit(s) ("ALU(s)") 2610, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 2620 that may be functions of input/output and/or weight parameter data stored in code and/or data storage 2601 and/or code and/or data storage 2605. Activations stored in activation storage 2620 may be generated according to linear algebraic and or matrix-based mathematics performed by ALU(s) 2610 in response to performing instructions or other code, wherein weight values stored in code and/or data storage 2605 and/or data storage 2601 may be used as operands along with other values, such as, but not limited to, bias values, gradient information, momentum values, or other parameters or hyperparameters, any or all of which may be stored in code and/or data storage 2605 or code and/or data storage 2601 or another storage on or off-chip.

ALU(s) 2610 can be included within one or more processors or other hardware logic devices or circuits, whereas in another embodiment, ALU(s) 2610 may be external to a processor or other hardware logic device or circuit that uses them (e.g., a co-processor). ALUs 2610 may be included within a processor's execution units or otherwise within a bank of ALUs accessible by a processor's execution units either within same processor or distributed between different processors of different types (e.g., central processing units, graphics processing units, fixed function units, etc.). Code and/or data storage 2601, code and/or data storage 2605, and activation storage 2620 may share a processor or other hardware logic device or circuit, whereas in another embodiment, they may be in different processors or other hardware logic devices or circuits, or some combination of same and different processors or other hardware logic devices or circuits. Any portion of activation storage 2620 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

Activation storage 2620 may be cache memory, DRAM, SRAM, non-volatile memory (e.g., flash memory), or other storage. Activation storage 2620 may be completely or partially within or external to one or more processors or other logical circuits. A choice of whether activation storage 2620 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 2615 illustrated in FIG. 26A may be used in conjunction with an application-specific integrated circuit ("ASIC"), such as, but not limited to, a TensorFlow^{®} Processing Unit from Google, an inference processing unit (IPU) from Graphcore^{™}, or a Nervana^{®} (e.g., "Lake Crest") processor from Intel Corp. In at least one embodiment, inference and/or training logic 2615 illustrated in FIG. 26A may be used in conjunction with central processing unit ("CPU") hardware, graphics processing unit ("GPU") hardware or other hardware, such as, but not limited to, field programmable gate arrays ("FPGAs").

FIG. 26B illustrates inference and/or training logic 2615, in accordance with at least one embodiment. Inference and/or training logic 2615 may include hardware logic in which computational resources may be dedicated or otherwise exclusively used in conjunction with weight values or other information corresponding to one or more layers of neurons within a neural network. Inference and/or training logic 2615 illustrated in FIG. 26B may be used in conjunction with an application-specific integrated circuit (ASIC), such as, but not limited to, TensorFlow^{®} Processing Unit from Google, an inference processing unit (IPU) from Graphcore^{™}, or a Nervana^{®} (e.g., "Lake Crest") processor from Intel Corp. Inference and/or training logic 2615 illustrated in FIG. 26B may be used in conjunction with central processing unit (CPU) hardware, graphics processing unit (GPU) hardware or other hardware, such as, but not limited to, field programmable gate arrays (FPGAs). Inference and/or training logic 2615 can include code and/or data storage 2601 and code and/or data storage 2605, which may be used to store code (e.g., graph code), weight values and/or other information, including bias values, gradient information, momentum values, and/or other parameter or hyperparameter information. In FIG. 26B, for example, each of code and/or data storage 2601 and code and/or data storage 2605 is associated with a dedicated computational resource, such as, but not limited to, computational hardware 2602 and computational hardware 2606, respectively. Each of computational hardware 2602 and computational hardware 2606 can include one or more ALUs that perform mathematical functions, such as, but not limited to, linear algebraic functions, only on information stored in code and/or data storage 2601 and code and/or data storage 2605, respectively, result of which is stored in activation storage 2620.

Each of code and/or data storage 2601 and 2605 and corresponding computational hardware 2602 and 2606, respectively, correspond to different layers of a neural network, such that resulting activation from one storage/computational pair 2601/2602 of code and/or data storage 2601 and computational hardware 2602 is provided as an input to a next storage/computational pair 2605/2606 of code and/or data storage 2605 and computational hardware 2606, in order to mirror a conceptual organization of a neural network. Each of storage/computational pairs 2601/2602 and 2605/2606 may correspond to more than one neural network layer. Additional storage/computation pairs (not shown) subsequent to or in parallel with storage/computation pairs 2601/2602 and 2605/2606 may be included in inference and/or training logic 2615.

In at least one embodiment, logic 2615 described elsewhere herein, can include one or more circuits to cause a compiler to indicate one or more portions of one or more software programs to be performed by one or more processors concurrently or otherwise perform any of the operations described above or elsewhere herein. One or more circuits in logic 2615 can be configured by software described herein, to cause a compiler to indicate one or more portions of one or more software programs to be performed by one or more processors concurrently or otherwise perform any of the operations described above or elsewhere herein.

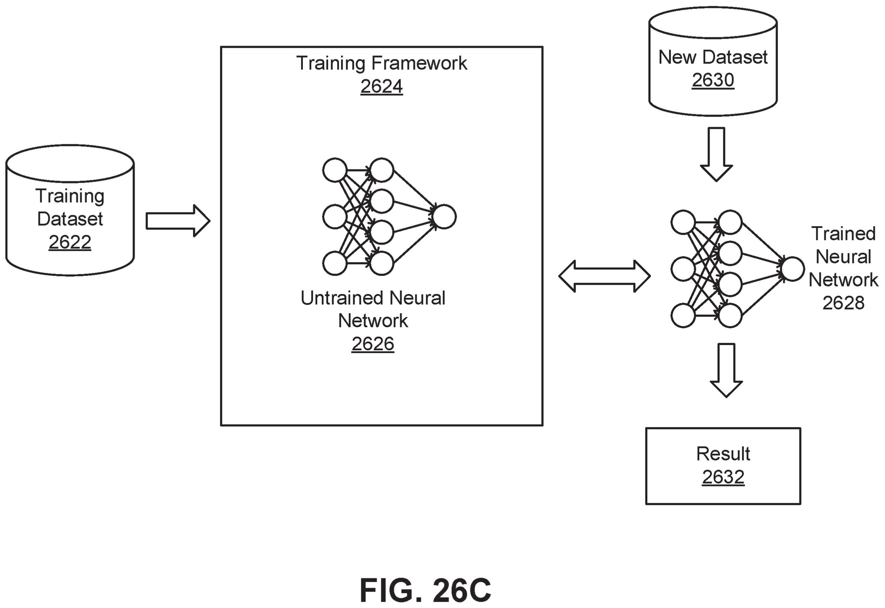

FIG. 26C illustrates training and deployment of a deep neural network, in accordance with at least one embodiment. An untrained neural network 2626 can be trained using a training dataset 2622. Training framework 2624 can be a PyTorch framework, and/or a training framework 2604 can include a TensorFlow, Boost, Caffe, Microsoft Cognitive Toolkit/CNTK, MXNet, Chainer, Keras, Deeplearning4j, or other training framework. Training framework 2624 can train an untrained neural network 2626 and enables it to be trained using processing resources described herein to generate a trained neural network 2628. Weights may be chosen randomly or by pre-training using a deep belief network. Training may be performed in either a supervised, partially supervised, or unsupervised manner.

Untrained neural network 2626 can be trained using supervised learning, wherein training dataset 2622 includes an input paired with a desired output for an input, or where training dataset 2622 includes input having a known output and an output of neural network 2626 is manually graded. Untrained neural network 2626 can be trained in a supervised manner and processes inputs from training dataset 2622 and compares resulting outputs against a set of expected or desired outputs. Errors can then be propagated back through untrained neural network 2626. Training framework 2624 can adjust weights that control untrained neural network 2626. Training framework 2624 can include tools to monitor how well untrained neural network 2626 is converging towards a model, such as, but not limited to, trained neural network 2628, suitable to generating correct answers, such as, but not limited to, in result 2632, based on input data such as, but not limited to, a new dataset 2630. Training framework 2624 can train untrained neural network 2626 repeatedly while adjust weights to refine an output of untrained neural network 2626 using a loss function and adjustment algorithm, such as, but not limited to, stochastic gradient descent. Training framework 2624 can train untrained neural network 2626 until untrained neural network 2626 achieves a desired accuracy. Trained neural network 2628 can then be deployed to implement any number of machine learning operations.

Untrained neural network 2626 can be trained using unsupervised learning, wherein untrained neural network 2626 attempts to train itself using unlabeled data. Unsupervised learning training dataset 2622 can include input data without any associated output data or "ground truth" data. Untrained neural network 2626 can learn groupings within training dataset 2622 and can determine how individual inputs may be related to untrained dataset 2622. Unsupervised training can be used to generate a self-organizing map in trained neural network 2628 capable of performing operations useful in reducing dimensionality of new dataset 2630. Unsupervised training can also be used to perform anomaly detection, which allows identification of data points in new dataset 2630 that deviate from normal patterns of new dataset 2630.

Semi-supervised learning may be used, which is a technique in which in training dataset 2622 includes a mix of labeled and unlabeled data. Training framework 2624 may be used to perform incremental learning, such as, but not limited to, through transferred learning techniques. Incremental learning can enable trained neural network 2628 to adapt to new dataset 2630 without forgetting knowledge instilled within trained neural network 2628 during initial training.

Training framework 2624 can include a framework processed in connection with a software development toolkit such as, but not limited to, an OpenVINO (Open Visual Inference and Neural network Optimization) toolkit. An OpenVINO toolkit can include a toolkit such as, but not limited to, those developed by Intel Corporation of Santa Clara, CA.

OpenVINO can include a toolkit for facilitating development of applications, specifically neural network applications, for various tasks and operations, such as, but not limited to, human vision emulation, speech recognition, natural language processing, recommendation systems, and/or variations thereof. OpenVINO can support neural networks such as, but not limited to, convolutional neural networks (CNNs), recurrent and/or attention-based neural networks, and/or various other neural network models. OpenVINO can support various software libraries such as, but not limited to, OpenCV, OpenCL, and/or variations thereof.

OpenVINO can support neural network models for various tasks and operations, such as, but not limited to, classification, segmentation, object detection, face recognition, speech recognition, pose estimation (e.g., humans and/or objects), monocular depth estimation, image inpainting, style transfer, action recognition, colorization, and/or variations thereof.

OpenVINO can include one or more software tools and/or modules for model optimization, also referred to as a model optimizer. A model optimizer can include a command line tool that facilitates transitions between training and deployment of neural network models. A model optimizer may optimize neural network models for execution on various devices and/or processing units, such as, but not limited to, a GPU, CPU, PPU, GPGPU, and/or variations thereof. A model optimizer can generate an internal representation of a model, and can optimize said model to generate an intermediate representation. A model optimizer may reduce a number of layers of a model. A model optimizer can remove layers of a model that may be utilized for training. A model optimizer may perform various neural network operations, such as, but not limited to, modifying inputs to a model (e.g., resizing inputs to a model), modifying a size of inputs of a model (e.g., modifying a batch size of a model), modifying a model structure (e.g., modifying layers of a model), normalization, standardization, quantization (e.g., converting weights of a model from a first representation, such as, but not limited to, floating point, to a second representation, such as, but not limited to, integer), and/or variations thereof.

OpenVINO can include one or more software libraries for inferencing, also referred to as an inference engine. An inference engine can include a C++ library, or any suitable programming language library. An inference engine can be utilized to infer input data. An inference engine may implement various classes to infer input data and generate one or more results. An inference engine can implement one or more API functions to process an intermediate representation, set input and/or output formats, and/or execute a model on one or more devices.

OpenVINO may provide various abilities for heterogeneous execution of one or more neural network models. Heterogeneous execution, or heterogeneous computing, can refer to one or more computing processes and/or systems that utilize one or more types of processors and/or cores. OpenVINO can provide various software functions to execute a program on one or more devices. OpenVINO may provide various software functions to execute a program and/or portions of a program on different devices. OpenVINO may provide various software functions to, for example, run a first portion of code on a CPU and a second portion of code on a GPU and/or FPGA. OpenVINO may provide various software functions to execute one or more layers of a neural network on one or more devices (e.g., a first set of layers on a first device, such as, but not limited to, a GPU, and a second set of layers on a second device, such as, but not limited to, a CPU).

OpenVINO can include various functionality similar to functionalities associated with a CUDA programming model, such as, but not limited to, various neural network model operations associated with frameworks such as, but not limited to, TensorFlow, PyTorch, and/or variations thereof. One or more CUDA programming model operations may be performed using OpenVINO. Various systems, methods, and/or techniques described herein may be implemented using OpenVINO.

In at least one embodiment, one or more circuits can be used to cause one or more neural networks and training frameworks described elsewhere herein to cause a compiler to indicate one or more portions of one or more software programs to be performed by one or more processors concurrently or otherwise perform any of the operations described above or elsewhere herein. One or more neural networks and training frameworks can be configured by software to cause a compiler to indicate one or more portions of one or more software programs to be performed by one or more processors concurrently or otherwise perform any of the operations described above or elsewhere herein.

At least one embodiment of the disclosure can be described in view of the following clauses:
1. A processor comprising:
   one or more circuits to cause a compiler to indicate one or more portions of one or more software programs to be performed by one or more processors concurrently.
2. The processor of clause 1, wherein the one or more portions of the one or more software programs are performed using information generated by another one or more portions of the one or more software programs.
3. The processor of clauses 1 and/or 2, wherein the compiler is caused to indicate the one or more portions of the one or more software programs based, at least in part, on an input memory requirement and an output memory requirement of the one or more software programs.
4. The processor of clauses 1-3, wherein the compiler is to cause one or more portions of memory to be allocated to be used by the one or more software programs.
5. The processor of clauses 1-4, wherein the one or more portions of the one or more software programs are modified by the compiler to be performed by the one or more processors concurrently.
6. The processor of clauses 1-5, wherein the one or more portions of one or more software programs are to generate information to be asynchronously provided to one or more other portions of the one or more software programs.
7. The processor of clauses 1-6, wherein the one or more processors are to be allocated to perform the one or more portions of the one or more software programs.
8. A system comprising:
   one or more processors to cause a compiler to indicate one or more portions of one or more software programs to be performed by one or more processors concurrently.
9. The system of clause 8, wherein the one or more portions of the one or more software programs are performed using information generated by another one or more portions of the one or more software programs.
10. The system of clauses 8 and/or 9, wherein the compiler is caused to indicate the one or more portions of the one or more software programs based, at least in part, on an input memory requirement and an output memory requirement of the one or more software programs.
11. The system of clauses 8-10, wherein the compiler is to cause one or more portions of memory to be allocated to be used by the one or more software programs.
12. The system of clauses 8-11, wherein the one or more portions of the one or more software programs are modified by the compiler to be performed by the one or more processors concurrently.
13. The system of clauses 8-12, wherein the one or more portions of one or more software programs are to generate information to be asynchronously provided to one or more other portions of the one or more software programs.
14. The system of clauses 8-13, wherein the one or more processors are to be allocated to perform the one or more portions of the one or more software programs.
15. A method comprising:
   causing a compiler to indicate one or more portions of one or more software programs to be performed by one or more processors concurrently.
16. The method of clause 15, wherein the one or more portions of the one or more software programs are performed using information generated by another one or more portions of the one or more software programs.
17. The method of clauses 15 and/or 16, wherein the compiler is caused to indicate the one or more portions of the one or more software programs based, at least in part, on an input memory requirement and an output memory requirement of the one or more software programs.
18. The method of clauses 15-17, wherein the compiler is to cause one or more portions of memory to be allocated to be used by the one or more software programs.
19. The method of clauses 15-18, wherein the one or more portions of the one or more software programs are modified by the compiler to be performed by the one or more processors concurrently.
20. The method of clauses 15-19, wherein the one or more portions of one or more software programs are to generate information to be asynchronously provided to one or more other portions of the one or more software programs.

As will be apparent to one of ordinary skill in the art, other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. Use of "may" and/or "can" is intended to indicate by way of example without limiting any particular embodiment or component or other function described above, below, or elsewhere herein. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. Use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as, but not limited to, phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). Number of items in a plurality can be at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. A process such as, but not limited to, those processes described herein (or variations and/or combinations thereof) can be performed under control of one or more computer systems configured with executable instructions and is implemented as code (e.g., executable instructions, one or more computer programs or one or more applications) executing collectively on one or more processors, by hardware or combinations thereof. Code can be stored on a computer-readable storage medium, for example, in form of a computer program comprising a plurality of instructions executable by one or more processors. A computer-readable storage medium can be a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. Code (e.g., executable code or source code) can be stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. A set of non-transitory computer-readable storage media can include multiple non-transitory computer-readable storage media and one or more of individual non-transitory storage media of multiple non-transitory computer-readable storage media lack all of code while multiple non-transitory computer-readable storage media collectively store all of code. Executable instructions can be executed such that different instructions are executed by different processors - for example, a non-transitory computer-readable storage medium store instructions and a main central processing unit ("CPU") executes some of instructions while a graphics processing unit ("GPU") executes other instructions. Different components of a computer system can have separate processors and different processors execute different subsets of instructions.

An arithmetic logic unit can include a set of combinational logic circuitry that takes one or more inputs to produce a result. An arithmetic logic unit can be used by a processor to implement mathematical operation such as, but not limited to, addition, subtraction, or multiplication. An arithmetic logic unit is used to implement logical operations such as, but not limited to, logical AND/OR or XOR. An arithmetic logic unit can be stateless, and made from physical switching components such as, but not limited to, semiconductor transistors arranged to form logical gates. An arithmetic logic unit may operate internally as a stateful logic circuit with an associated clock. An arithmetic logic unit may be constructed as an asynchronous logic circuit with an internal state not maintained in an associated register set. An arithmetic logic unit can be used by a processor to combine operands stored in one or more registers of the processor and produce an output that can be stored by the processor in another register or a memory location.

As a result of processing an instruction retrieved by the processor, the processor may present one or more inputs or operands to an arithmetic logic unit, causing the arithmetic logic unit to produce a result based at least in part on an instruction code provided to inputs of the arithmetic logic unit. The instruction codes provided by the processor to the ALU may be based at least in part on the instruction executed by the processor. Combinational logic in the ALU may process the inputs and produces an output which is placed on a bus within the processor. A processor can select a destination register, memory location, output device, or output storage location on the output bus so that clocking the processor causes the results produced by the ALU to be sent to the desired location.

In the scope of this application, the term arithmetic logic unit, or ALU, is used to refer to any computational logic circuit that processes operands to produce a result. For example, in the present document, the term ALU can refer to a floating point unit, a DSP, a tensor core, a shader core, a coprocessor, or a CPU.

One or more components of systems and/or processors disclosed above can communicate with one or more CPUs, ASICs, GPUs, FPGAs, or other hardware, circuitry, or integrated circuit components that include, e.g., an upscaler or upsampler to upscale an image, an image blender or image blender component to blend, mix, or add images together, a sampler to sample an image (e.g., as part of a DSP), a neural network circuit that is configured to perform an upscaler to upscale an image (e.g., from a low resolution image to a high resolution image), or other hardware to modify or generate an image, frame, or video to adjust its resolution, size, or pixels; one or more components of systems and/or processors disclosed above can use components described in this disclosure to perform methods, operations, or instructions that generate or modify an image.

Computer systems can be configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or example language (e.g., "such as, but not limited to,") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as, but not limited to, "processing," "computing," "calculating," "determining," or like, refer to action and/or processes of a computer or computing system, or similar electronic computing device, that manipulate and/or transform data represented as physical, such as, but not limited to, electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as, but not limited to, tasks, threads, and intelligent agents. Also, each process may refer to multiple processes, for carrying out instructions in sequence or in parallel, continuously or intermittently. Terms "system" and "method" are used herein interchangeably insofar as system may embody one or more methods and methods may be considered a system.

References may be made to obtaining, acquiring, receiving, or inputting analog or digital data into a subsystem, computer system, or computer-implemented machine. Processes of obtaining, acquiring, receiving, or inputting analog and digital data can be accomplished in a variety of ways such as, but not limited to, by receiving data as a parameter of a function call or a call to an application programming interface. Processes of obtaining, acquiring, receiving, or inputting analog or digital data can be accomplished by transferring data via a serial or parallel interface. Processes of obtaining, acquiring, receiving, or inputting analog or digital data can be accomplished by transferring data via a computer network from providing entity to acquiring entity. References may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as example forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A processor comprising:
   one or more circuits to cause a compiler to indicate one or more portions of one or more software programs to be performed by one or more processors concurrently.
Clause 2. The processor of clause 1, wherein the one or more portions of the one or more software programs are performed using information generated by another one or more portions of the one or more software programs.
Clause 3. The processor of clause 1, wherein the compiler is to indicate the one or more portions of the one or more software programs based, at least in part, on an input memory requirement and an output memory requirement of the one or more software programs.
Clause 4. The processor of clause 1, wherein the compiler is to cause one or more portions of memory to be allocated to be used by the one or more software programs.
Clause 5. The processor of clause 1, wherein the one or more portions of the one or more software programs are to be modified by the compiler to be performed by the one or more processors concurrently.
Clause 6. The processor of clause 1, wherein the one or more portions of one or more software programs are to generate information to be asynchronously provided to one or more other portions of the one or more software programs.
Clause 7. The processor of clause 1, wherein the one or more processors are to be allocated to perform the one or more portions of the one or more software programs.
Clause 8.A system comprising:
   one or more processors to cause a compiler to indicate one or more portions of one or more software programs to be performed by one or more processors concurrently.
Clause 9. The system of clause 8, wherein the one or more portions of the one or more software programs are to be performed using information generated by another one or more portions of the one or more software programs.
Clause 10. The system of clause 8, wherein the compiler is to indicate the one or more portions of the one or more software programs based, at least in part, on an input memory requirement and an output memory requirement of the one or more software programs.
Clause 11. The system of clause 8, wherein the compiler is to cause one or more portions of memory to be allocated to be used by the one or more software programs.
Clause 12. The system of clause 8, wherein the one or more portions of the one or more software programs are to be modified by the compiler to be performed by the one or more processors concurrently.
Clause 13. The system of clause 8, wherein the one or more portions of one or more software programs are to generate information to be asynchronously provided to one or more other portions of the one or more software programs.
Clause 14. The system of clause 8, wherein the one or more processors are to be allocated to perform the one or more portions of the one or more software programs.
Clause 15. A method comprising:
   causing a compiler to indicate one or more portions of one or more software programs to be performed by one or more processors concurrently.
Clause 16. The method of clause 15, further comprising performing the one or more portions of the one or more software programs using information generated by another one or more portions of the one or more software programs.
Clause 17. The method of clause 15, further comprising indicating, by the compiler, the one or
more portions of the one or more software programs based, at least in part, on an input memory requirement and an output memory requirement of the one or more software programs.
Clause 18. The method of clause 15, further comprising causing, by the compiler, one or more portions of memory to be allocated to be used by the one or more software programs.
Clause 19. The method of clause 15, wherein the one or more portions of the one or more software programs are to be modified by the compiler to be performed by the one or more processors concurrently.
Clause 20. The method of clause 15, further comprising generating, by the one or more portions of one or more software programs, information to be asynchronously provided to one or more other portions of the one or more software programs.

## Claims

1. A processor comprising:
one or more circuits to cause a compiler to indicate one or more portions of one or more software programs to be performed by one or more processors concurrently.

2. The processor of claim 1, wherein the one or more portions of the one or more software programs are performed using information generated by another one or more portions of the one or more software programs.

3. The processor of claim 1 or 2, wherein the compiler is to indicate the one or more portions of the one or more software programs based, at least in part, on an input memory requirement and an output memory requirement of the one or more software programs.

4. The processor of claim 1, 2, or 3, wherein the compiler is to cause one or more portions of memory to be allocated to be used by the one or more software programs.

5. The processor of any preceding claim, wherein the one or more portions of the one or more software programs are to be modified by the compiler to be performed by the one or more processors concurrently.

6. The processor of any preceding claim, wherein the one or more portions of one or more software programs are to generate information to be asynchronously provided to one or more other portions of the one or more software programs.

7. The processor of any preceding claim, wherein the one or more processors are to be allocated to perform the one or more portions of the one or more software programs.

8. A system comprising one or more processors according to any preceding claim.

9. A method comprising:
causing a compiler to indicate one or more portions of one or more software programs to be performed by one or more processors concurrently.

10. The method of claim 9, further comprising performing the one or more portions of the one or more software programs using information generated by another one or more portions of the one or more software programs.

11. The method of claim 9 or 10, further comprising indicating, by the compiler, the one or more portions of the one or more software programs based, at least in part, on an input memory requirement and an output memory requirement of the one or more software programs.

12. The method of claim 9, 10, or 11, further comprising causing, by the compiler, one or more portions of memory to be allocated to be used by the one or more software programs.

13. The method of any of claims 9-12, wherein the one or more portions of the one or more software programs are to be modified by the compiler to be performed by the one or more processors concurrently.

14. The method of any of claims 9-13, further comprising generating, by the one or more portions of one or more software programs, information to be asynchronously provided to one or more other portions of the one or more software programs.
